(19) Europäisches Patentamt
European Patent Office
Office européen des brevets

(11) **EP 2 022 628 A1**

(12) **EUROPEAN PATENT APPLICATION**
published in accordance with Art. 153(4) EPC

(43) Date of publication:
**11.02.2009 Bulletin 2009/07**

(51) Int Cl.:
**B32B 27/00** (2006.01)    **B32B 27/30** (2006.01)
**C09J 7/02** (2006.01)

(21) Application number: **07744918.9**

(22) Date of filing: **01.06.2007**

(86) International application number:
**PCT/JP2007/061594**

(87) International publication number:
**WO 2007/142321 (13.12.2007 Gazette 2007/50)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **02.06.2006 JP 2006155035**

(71) Applicant: **NITTO DENKO CORPORATION**
**Ibaraki-shi,**
**Osaka 567-8680 (JP)**

(72) Inventor: **NAGASAKI, Kunio**
**Ibaraki-shi, Osaka 567-8680 (JP)**

(74) Representative: **Grünecker, Kinkeldey,**
**Stockmair & Schwanhäusser**
**Anwaltssozietät**
**Leopoldstrasse 4**
**80802 München (DE)**

(54) **POLYMER MEMBER WITH POLYMER LAYER CONTAINING INCOMPATIBLE SUBSTANCE UNEVENLY DISTRIBUTED AND SURFACE-ROUGHENED TAPE OR SHEET COMPRISING THE POLYMER MEMBER**

(57)    Disclosed is a polymer article having a multilayer structure including a polymer layer and a monomer-absorptive layer that is arranged on the polymer layer and is capable of absorbing at least one of monomer components constituting the polymer. The polymer layer is a polymer layer containing an unevenly distributed immiscible material that is immiscible with the polymer and is enriched at an interface, or in the vicinity thereof, opposite to the monomer-absorptive layer. The polymer article preferably further includes a cover film arranged on the polymer layer on a side opposite to the monomer-absorptive layer. The vicinity of the interface opposite to the monomer-absorptive layer is preferably a region ranging from the interface opposite to the monomer-absorptive layer in a thickness direction to 50% or less of the total thickness of the polymer layer.

[Fig.9]

EP 2 022 628 A1

**Description**

Technical Field

The present invention relates to polymer articles with a polymer layer containing an unevenly distributed immiscible (incompatible) material; and surface-roughened tapes and sheets including the polymer articles.

Background Art

When a layer containing, for example, fine particles is to be formed on a surface typically of a base sheet or film, the layer may be formed, according to an exemplary technique, by preparing a solution of a polymer component as a binder in an organic solvent, dispersing fine particles in the solution, applying the dispersion to the base, and evaporating the solvent via thermal drying to give a fine-particle layer (a layer containing fine particles) on the base surface. However, it is difficult to employ this technique when the base is dissolved by the action typically of the solvent or when the base has low thermal stability and is liable to melt or deform as a result of thermal drying. Additionally, it is difficult to apply the solution to the base surface when the surface is highly tacky as in a pressure-sensitive adhesive layer. Furthermore, this technique requires drying of the solvent such as an organic solvent or water and is undesirable from the viewpoints of environmental friendliness and energy saving.

According to another technique, a fine-particle layer can be formed on a base sheet surface by forming a fine-particle layer on a releasable film and transferring the layer to the base sheet. This technique, however, is not suitable for the formation of a roughened surface by the action of particles, because an exposed surface of the resulting fine-particle layer on the base sheet is a side which has been in contact with the releasable film and thus the exposed surface is liable to be flat. When the affinity or compatibility between the base and the fine-particle layer is low, the base layer shows poor adhesion with the fine-particle layer, and this may often invite problems such as delamination. Additionally, when the base and the fine-particle layer both show substantially no adhesion, the two layers are difficult to affix with each other, and an adhesive, for example, should be applied to either one or both of them to affix them with each other.

On the other hand, tapes or sheets each having a not smooth but roughened surface (hereinafter also referred to as a "surface-roughened sheet") are used in various applications for various purposes, such as uses as antiglare films (see Patent Documents 1, 2, and 3). These are based on properties of such surface-roughened sheets, such as graphical design functions, light scattering properties, and anti-blocking properties.

A known technique for producing a surface-roughened sheet is a technique of embossing a surface of a tape or sheet (hereinafter these are also generically referred to as a "sheet(s)", for example, by roughening the sheet surface typically with an embossing roll, to thereby roughen the sheet surface (see Patent Document 4). However, when a surface-roughened sheet is produced by using a material with a low elastic modulus according to this technique, the surface of the resulting surface-roughened sheet may return to a smooth state during storage of the sheet typically in the form of a roll.

Another known technique for producing a surface-roughened sheet is a technique of applying a solvent-based film-forming composition as a composition containing particles (hereinafter also referred to as a "particle-containing composition") to a sheet surface to form a film thereon; evaporationally removing volatile components such as the solvent and organic compounds to thin the applied film, to thereby expose heads of the particles to thereby roughen the sheet surface (see Patent Document 5). Although requiring evaporational removal of volatile components such as the solvent typically by thermal drying, this technique can roughen surfaces of layers of various kinds, ranging from layers that are relatively rigid and have a high elastic modulus, such as plastic sheets and films (e.g., polyethylene films) and hard-coat layers, to layers that have a low elastic modulus, such as pressure-sensitive adhesive layers.

These known techniques for producing surface-roughened sheets, however, cause problems such that sheets to have roughened surfaces are limited to those having a high elastic modulus, that the need of evaporational removal of volatile components causes much effort and time, and that vapors of the evaporated volatile components will adversely affect the human body and environment.

[Patent Document 1] Japanese Unexamined Patent Application Publication (JP-A) No. 2001-91707
[Patent Document 2] Japanese Unexamined Patent Application Publication (JP-A) No. 2000-275404
[Patent Document 3] Japanese Unexamined Patent Application Publication (JP-A) No. 2003-248101
[Patent Document 4] Japanese Unexamined Patent Application Publication (Translation of PCT Application) (JP-A) No. Hei 09-504325
[Patent Document 5] Japanese Unexamined Patent Application Publication (JP-A) No. Hei 08-113768

Disclosure of Invention

Problems to be Solved by the Invention

Accordingly, an object of the present invention is to provide a polymer article having a multilayer structure including a monomer-absorptive layer and a polymer layer containing an unevenly distributed immiscible material, which polymer article can be produced without the need of volatile components such as solvents for the production thereof, can control the distribution of the immiscible material in the polymer layer containing the unevenly distributed immiscible material, and is superior in adhesion between the monomer-absorptive layer and the polymer layer containing the unevenly distributed immiscible material.

Another object of the present invention is to provide a surface-roughened sheet which is composed of a polymer article having a multilayer structure including a monomer-absorptive layer and a polymer layer containing an unevenly distributed immiscible material, by using particles as the immiscible material.

Means for Solving the Problems

After intensive investigations to achieve the objects, the present inventors found that when an immiscible material-containing polymerizable composition layer, which contains a polymerizable monomer and an immiscible material that is immiscible with a polymer as a polymerization product of the polymerizable monomer, is arranged on at least one side of a monomer-absorptive layer, the immiscible material migrates in the immiscible material-containing polymerizable composition layer to give a polymerizable composition layer containing an unevenly distributed immiscible material; that polymerization of the polymerizable composition layer containing the unevenly distributed immiscible material gives a multilayer structure of a monomer-absorptive layer and a polymer layer containing an unevenly distributed immiscible material; and that use of particles as the immiscible material in the multilayer structure of a monomer-absorptive layer and a polymer layer containing an unevenly distributed immiscible material gives, by the action of particles, a roughened surface of the polymer layer containing the unevenly distributed immiscible material which surface is opposite to the interface with the monomer-absorptive layer. The present invention has been made based on these findings.

Specifically, according to the present invention, there is provided a polymer article having a multilayer structure including a polymer layer and a monomer-absorptive layer that is arranged on the polymer layer and is capable of absorbing at least one of monomer components constituting the polymer, wherein the polymer layer is a polymer layer containing an unevenly distributed immiscible material that is immiscible with the polymer and is enriched at an interface, or in the vicinity thereof, opposite to the other interface with the monomer-absorptive layer.

The polymer article preferably further includes a cover layer arranged on the polymer layer on a side opposite to the monomer-absorptive layer.

The vicinity of the interface opposite to the monomer-absorptive layer is preferably a region ranging from the interface opposite to the other interface with the monomer-absorptive layer in a thickness direction to 50% or less of the total thickness of the polymer layer.

The monomer-absorptive layer is preferably a monomer-absorptive polymer layer containing a polymer.

The polymer constituting the monomer-absorptive polymer layer and the polymer constituting the polymer layer containing the unevenly distributed immiscible material preferably contain at least one monomer component in common.

The immiscible material is preferably in the form of particles and/or is a polymer.

The polymer constituting the polymer layer containing the unevenly distributed immiscible material is preferably an acrylic polymer.

The polymer layer containing an unevenly distributed immiscible material is preferably a pressure-sensitive adhesive layer containing an unevenly distributed immiscible material.

The polymer article is preferably in the form of a tape or sheet. In a preferred embodiment, the polymer article contains particles as the immiscible material and has asperities caused by the particles on its surface .

According to another embodiment of the present invention, there is provided a process for the production of polymer articles. This process includes the steps of: forming a layer of an immiscible material-containing polymerizable composition on at least one side of a monomer-absorptive layer, in which the monomer-absorptive layer is capable of absorbing a polymerizable monomer, and the immiscible material-containing polymerizable composition contains at least the polymerizable monomer and an immiscible material that is immiscible with a polymer as a polymerization product of the polymerizable monomer; whereby allowing the immiscible material to migrate in the immiscible material-containing polymerizable composition layer, to yield a polymerizable composition layer containing the immiscible material that is unevenly distributed in the layer and is enriched at an interface, or in the vicinity thereof, opposite to the other interface with the monomer-absorptive layer; and carrying out polymerization of the polymerizable composition layer containing the unevenly distributed immiscible material to form a polymer layer containing the immiscible material that is unevenly distributed in the layer and is enriched at an interface, or in the vicinity thereof, opposite to the other interface with the monomer-absorptive layer, to thereby yield a polymer article having a multilayer structure including the monomer-absorptive layer and the polymer layer containing the unevenly distributed immiscible material.

According to still another embodiment of the present invention, there is provided another process for the production of polymer articles. This process includes the steps of: preparing a multilayer assembly including a monomer-absorptive sheet, a layer of an immiscible material-containing polymerizable composition arranged on a monomer-absorptive surface of the monomer-absorptive sheet, and a cover film arranged on the immiscible material-containing polymerizable composition layer, in which the monomer absorptive layer is capable of absorbing a polymerizable monomer, and the immiscible material-containing polymerizable composition contains at least the polymerizable monomer and an immiscible material that is immiscible with a polymer as a polymerization product of the polymerizable monomer; allowing the immiscible material to migrate in the immiscible material-containing polymerizable composition layer, to yield a polymerizable composition layer containing the immiscible material that is unevenly distributed in the layer and is enriched at an interface, or in the vicinity thereof, opposite to the other interface with the monomer-absorptive layer; and carrying out polymerization of the polymerizable composition layer containing the unevenly distributed immiscible material to form a polymer layer containing the immiscible material that is unevenly distributed in the layer and is enriched at an interface, or in the vicinity thereof, opposite to the other interface with the monomer-absorptive layer to thereby yield a polymer article having a multilayer structure including the monomer-absorptive layer and the polymer layer containing the unevenly distributed immiscible material.

The cover film used in the processes for the production of polymer articles is preferably releasable.

The monomer-absorptive layer used in the processes for the production of polymer articles is preferably monomer-absorptive polymer layer composed of a polymer.

In the processes for the production of polymer articles, the polymer constituting the monomer-absorptive polymer layer and the polymer constituting the polymer layer containing the unevenly distributed immiscible material preferably contain at least one monomer component in common.

The polymerization of the polymerizable composition layer containing the unevenly distributed immiscible material is preferably carried out through light irradiation in the processes for the production of polymer articles.

It is preferred that the immiscible material used in the processes for the production of polymer articles is in the form of particles and/or is a polymer.

An acrylic monomer is preferably used as the polymerizable monomer used in the processes for the production of polymer articles.

The polymer layer containing the unevenly distributed immiscible material in the processes for the production of polymer articles is preferably a pressure-sensitive adhesive layer containing an unevenly distributed immiscible material.

The product polymer article is preferably in the form of a tape or sheet in the processes for the production of polymer articles.

The processes for the production of polymer articles preferably further include using particles as the immiscible material and allowing the particles to cause surface roughness of the polymer article.

Advantages

The polymer articles according to the present invention have the above configurations, can thereby be produced without the need of volatile components such as solvents, can control the distribution the an immiscible material contained in the polymer layer, and are superior in adhesion between the monomer-absorptive layer and the polymer layer containing the unevenly distributed immiscible material. In addition, surface-roughened sheets are obtained from such polymer articles having a multilayer structure including a monomer-absorptive layer and a polymer layer containing an unevenly distributed immiscible material, if using particles as the immiscible material.

Brief Description of Drawings

[Fig. 1] Fig. 1 depicts a scanning electron micrograph of a working surface of a surface-roughened sheet according to Example 1.
[Fig. 2] Fig. 2 depicts a scanning electron micrograph of a working surface of a surface-roughened sheet according to Example 2.
[Fig. 3] Fig. 3 depicts a scanning electron micrograph of a working surface of a surface-roughened sheet according to Example 3.
[Fig. 4] Fig. 4 depicts a scanning electron micrograph of a working surface of a surface-roughened sheet according to Example 4.

[Fig. 5] Fig. 5 depicts a scanning electron micrograph of a working surface of a surface-roughened sheet according to Example 5.

[Fig. 6] Fig. 6 depicts a scanning electron micrograph of a working surface of a surface-roughened sheet according to Example 6.

[Fig. 7] Fig. 7 depicts a scanning electron micrograph of a working surface of a surface-roughened sheet according to Example 7.

[Fig. 8] Fig. 8 depicts a scanning electron micrograph of a working surface of a surface-roughened sheet according to Example 8.

[Fig. 9] Fig. 9 depicts scanning electron micrographs of a working surface and cross sections of a surface-roughened sheet according to Example 9.

[Fig. 10] Fig. 10 depicts scanning electron micrographs of cross sections of a sheet according to Example 10.

[Fig. 11] Fig. 11 depicts scanning electron micrographs of cross sections of a sheet according to Example 11.

[Fig. 12] Fig. 12 depicts scanning electron micrographs of cross sections of a sheet according to Example 12.

[Fig. 13] Fig. 13 depicts scanning electron micrographs of cross sections of a sheet according to Example 13.

[Fig. 14] Fig. 14 depicts scanning electron micrographs of cross sections of a sheet according to Example 14.

[Fig. 15] Fig. 15 depicts scanning electron micrographs of a working surface and cross sections of a sheet according to Example 15.

[Fig. 16] Fig. 16 depicts scanning electron micrographs of a working surface and cross sections of a sheet according to Example 16.

[Fig. 17] Fig. 17 depicts scanning electron micrographs of cross sections of a sheet according to Example 17.

[Fig. 18] Fig. 18 depicts scanning electron micrographs of a working surface and cross sections of a sheet according to Example 18.

[Fig. 19] Fig. 19 depicts scanning electron micrographs of a working surface and cross sections of a sheet according to Example 19.

[Fig. 20] Fig. 20 depicts scanning electron micrographs of a working surface and cross sections of a sheet according to Example 20.

[Fig. 21] Fig. 21 depicts scanning electron micrographs of working surface and cross sections of a sheet according to Example 21.

[Fig. 22] Fig. 22 depicts scanning electron micrographs of a working surface and cross sections of a sheet according to Example 22.

[Fig. 23] Fig. 23 depicts scanning electron micrographs of a working surface and cross sections of a sheet according to Example 23.

[Fig. 24] Fig. 24 depicts scanning electron micrographs of a working surface and cross sections of a sheet according to Example 24.

[Fig. 25] Fig. 25 depicts scanning electron micrographs of a working surface and cross sections of a sheet according to Example 25.

[Fig. 26] Fig. 26 depicts scanning electron micrographs of a working surface and cross sections of a sheet according to Example 26.

[Fig. 27] Fig. 27 depicts scanning electron micrographs of cross sections of a sheet according to Example 27.

[Fig. 28] Fig. 28 depicts scanning electron micrographs of cross sections of a sheet according to Example 28.

[Fig. 29] Fig. 29 depicts scanning electron micrographs of cross sections of a sheet according to Example 29.

[Fig. 30] Fig. 30 depicts scanning electron micrographs of cross sections of a sheet according to Example 30.

[Fig. 31] Fig. 31 depicts scanning electron micrographs of cross sections of a sheet according to Example 31.

[Fig. 32] Fig. 32 depicts scanning electron micrographs of cross sections of a sheet according to Example 32.

[Fig. 33] Fig. 33 depicts scanning electron micrographs of cross sections of a sheet according to Example 33.

[Fig. 34] Fig. 34 depicts scanning electron micrographs of cross sections of a sheet according to Example 34.

[Fig. 35] Fig. 35 depicts scanning electron micrographs of cross sections of a sheet according to Example 35.

[Fig. 36] Fig. 36 depicts scanning electron micrographs of a working surface of a surface-roughened sheet according to Comparative Example 1.

[Fig. 37] Fig. 37 depicts scanning electron micrographs of a working surface of a surface-roughened sheet according to Comparative Example 2.

[Fig. 38] Fig. 38 depicts scanning electron micrographs of a working surface and cross sections of a sheet according to Comparative Example 3.

[Fig. 39] Fig. 39 depicts scanning electron micrographs of a working surface and cross sections of a sheet according to Comparative Example 4.

[Fig. 40] Fig. 40 depicts scanning electron micrographs of a working surface and cross sections of a sheet according to Comparative Example 5.

[Fig. 41] Fig. 41 depicts scanning electron micrographs of a working surface and cross sections of a sheet according to Comparative Example 6.

[Fig. 42] Fig. 42 depicts scanning electron micrographs of a working surface and cross sections of a sheet according to Comparative Example 7.

[Fig. 43] Fig. 43 depicts a scanning electron micrograph of a cross section of a sheet according to Comparative Example 8.

[Fig. 44] Fig. 44 depicts an IR chart of a working surface of a sheet according to Example 26.

[Fig. 45] Fig. 45 depicts an IR chart of a working surface of a sheet according to Comparative Example 7. Reference Numerals

1a working surface of the surface-roughened sheet according to Example 1
2a working surface of the surface-roughened sheet according to Example 2
3a working surface of the surface-roughened sheet according to Example 3
4a working surface of the surface-roughened sheet according to Example 4
5a working surface of the surface-roughened sheet according to Example 5
6a working surface of the surface-roughened sheet according to Example 6
7a working surface of the surface-roughened sheet according to Example 7
8a working surface of the surface-roughened sheet according to Example 8
9a working surface of the sheet according to Example 9
9b cross section of the sheet according to Example 9
9c particle-enriched region of a particle-containing photo-polymerized/cured layer in a cross section of the sheet according to Example 9
10b cross section of the sheet according to Example 10
10c particle-enriched region of a particle-containing photo-polymerized/cured layer in a cross section of the sheet according to Example 10
11b cross section of the sheet according to Example 11
11c particle-enriched region of a particle-containing photo-polymerized/cured layer in a cross section of the sheet according to Example 11
12b cross section of the sheet according to Example 12
12c particle-enriched region of a particle-containing photo-polymerized/cured layer in a cross section of the sheet according to Example 12
13b cross section of the sheet according to Example 13
13c particle-enriched region of a particle-containing photo-polymerized/cured layer in a cross section of the sheet according to Example 13
14b cross section of the sheet according to Example 14
14c particle-enriched region of a particle-containing photo-polymerized/cured layer in a cross section of the sheet according to Example 14
15a working surface of the sheet according to Example 15
15b cross section of the sheet according to Example 15
15c particle-enriched region of a particle-containing photo-polymerized/cured layer in a cross section of the sheet according to Example 15
16a working surface of the sheet according to Example 16
16b cross section of the sheet according to Example 16
16c particle-enriched region of a particle-containing photo-polymerized/cured layer in a cross section of the sheet according to Example 16
17b cross section of the sheet according to Example 17
17c particle-enriched region of a particle-containing photo-polymerized/cured layer in a cross section of the sheet according to Example 17
18a working surface of the sheet according to Example 18
18b cross section of the sheet according to Example 18
18c particle-enriched region of a particle-containing photo-polymerized/cured layer in a cross section of the sheet according to Example 18
19a working surface of the sheet according to Example 19
19b cross section of the sheet according to Example 19
19c particle-enriched region of a particle-containing photo-polymerized/cured layer in a cross section of the sheet according to Example 19
20a working surface of the sheet according to Example 20

20b cross section of the sheet according to Example 20

20c particle-enriched region of a particle-containing photo-polymerized/cured layer in a cross section of the sheet according to Example 20

20d particle-enriched region of a particle-containing photo-polymerized/cured layer in a cross section of the sheet according to Example 20

21a working surface of the sheet according to Example 21

21b cross section of the sheet according to Example 21

21c particle-enriched region of a particle-containing photo-polymerized/cured layer in a cross section of the sheet according to Example 21

22a working surface of the sheet according to Example 22

22b cross section of the sheet according to Example 22

22c particle-enriched region of a particle-containing photo-polymerized/cured layer in a cross section of the sheet according to Example 22

23a working surface of the sheet according to Example 23

23b cross section of the sheet according to Example 23

23c particle-enriched region of a particle-containing photo-polymerized/cured layer in a cross section of the sheet according to Example 23

24a working surface of the sheet according to Example 24

24b cross section of the sheet according to Example 24

24c particle-enriched region of a particle-containing photo-polymerized/cured layer in a cross section of the sheet according to Example 24

25a working surface of the sheet according to Example 25

25b cross section of the sheet according to Example 25

25c particle-enriched region of a particle-containing photo-polymerized/cured layer in a cross section of the sheet according to Example 25

26a working surface of the sheet according to Example 26

26b cross section of the sheet according to Example 26

26c immiscible material-enriched region of a immiscible material-containing photo-polymerized/cured layer in cross sections of the sheet according to Example 26

27c particle-enriched region of a particle-containing photo-polymerized/cured layer in a cross section of the sheet according to Example 27

28c particle-enriched region of a particle-containing photo-polymerized/cured layer in a cross section of the sheet according to Example 28

29c particle-enriched region of a particle-containing photo-polymerized/cured layer in a cross section of the sheet according to Example 29

30c particle-enriched region of a particle-containing photo-polymerized/cured layer in a cross section of the sheet according to Example 30

31c particle-enriched region of a particle-containing photo-polymerized/cured layer in a cross section of the sheet according to Example 31

32c particle-enriched region of a particle-containing photo-polymerized/cured layer in a cross section of the sheet according to Example 32

33c particle-enriched region of a particle-containing photo-polymerized/cured layer in a cross section of the sheet according to Example 33

34c particle-enriched region of a particle-containing photo-polymerized/cured layer in a cross section of the sheet according to Example 34

35c particle-enriched region of a particle-containing autopolymerized/cured layer in a cross section of the sheet according to Example 35

36a working surface of the surface-roughened sheet according to Comparative Example 1

37a working surface of the surface-roughened sheet according to Comparative Example 2

38a working surface of the sheet according to Comparative Example 3

38b cross section of the sheet according to Comparative Example 3

38c particle-containing photo-polymerized/cured layer in a cross section of the sheet according to Comparative Example 3

38d particle-containing photo-polymerized/cured layer in a cross section of the sheet according to Comparative Example 3

39a working surface of the sheet according to Comparative Example 4

39b cross section of the sheet according to Comparative Example 4

39c particle-containing photo-polymerized/cured layer in a cross section of the sheet according to Comparative Example 4

40a working surface of the sheet according to Comparative Example 5

40b cross section of the sheet according to Comparative Example 5

40c particle-containing photo-polymerized/cured layer in a cross section of the sheet according to Comparative Example 5

41a working surface of the sheet according to Comparative Example 6

41b cross section of the sheet according to Comparative Example 6

41c particle-containing photo-polymerized/cured layer in a cross section of the sheet according to Comparative Example 6

42a working surface of the sheet according to Comparative Example 7

42b cross section of the sheet according to Comparative Example 7

42c immiscible material-containing photopolymerized/cured layer in a cross section of the sheet according to Comparative Example 7

43c particle-containing autopolymerized/cured layer in a cross section of the sheet according to Comparative Example 8

Best Modes for Carrying Out the Invention

Polymer articles according to the present invention are polymer articles each of which has a multilayer structure of a polymer layer and a monomer-absorptive layer capable of absorbing at least one of monomer components constituting the polymer layer, in which the polymer layer is a polymer layer containing an unevenly distributed immiscible material that is immiscible or incompatible with the polymer and is enriched at an interface, or in the vicinity thereof, opposite to the other interface with the monomer-absorptive layer.

As used herein an "interface" referred to an interfacial boundary at which two different substances are in contact with each other. By way of example, when existing in the atmosphere, the surface of the polymer layer containing the unevenly distributed immiscible material in the polymer articles is naturally in contact with the atmosphere, and is an "interface". In the polymer layer containing the unevenly distributed immiscible material of the polymer articles, an interface, or in the vicinity thereof, opposite to the other interface with the monomer-absorptive layer is also referred to as a "layer surface or the vicinity thereof" or a "surface or the vicinity thereof".

Accordingly, polymer articles according to the present invention may have a multilayer structure of a polymer layer and a monomer-absorptive layer, in which the polymer layer is a polymer layer containing an unevenly distributed immiscible material that is immiscible with the polymer and is enriched in a layer surface or the vicinity thereof, and the monomer-absorptive layer is capable of absorbing at least one of monomer components constituting the polymer of the polymer layer containing the unevenly distributed immiscible material.

In an embodiment, such a polymer article can be prepared by forming a layer of an immiscible material-containing polymerizable composition on at least one side of a monomer-absorptive layer, which immiscible material-containing polymerizable composition contains a polymerizable monomer and an immiscible material that is immiscible with a polymer as a polymerization product of the polymerizable monomer; whereby allowing the immiscible material to migrate in the immiscible material-containing polymerizable composition layer, to yield a polymerizable composition layer containing an unevenly distributed immiscible material that is enriched at an interface or in the vicinity thereof (in a layer surface or the vicinity thereof) opposite to the other interface with the monomer-absorptive layer; and carrying out polymerization of the polymerizable composition layer containing the unevenly distributed immiscible material to form a polymer layer containing an unevenly distributed immiscible material to thereby yield a multilayer structure including the monomer-absorptive layer and the polymer layer containing the unevenly distributed immiscible material. The monomer-absorptive layer herein can be a monomer-absorptive layer of a monomer-absorptive sheet, which is a sheet having a monomer-absorptive layer.

In another embodiment, a polymer article can be prepared by: preparing a multilayer assembly including a monomer-absorptive sheet, a layer of an immiscible material-containing polymerizable composition arranged on a monomer-absorptive surface of the monomer-absorptive sheet (a surface of a monomer-absorptive layer of the monomer-absorptive sheet), and a cover film arranged on the immiscible material-containing polymerizable composition layer, in which the monomer absorptive layer is capable of absorbing a polymerizable monomer, and the immiscible material-containing polymerizable composition contains at least the polymerizable monomer and an immiscible material that is immiscible with a polymer as a polymerization product of the polymerizable monomer; allowing the immiscible material to migrate in the immiscible material-containing polymerizable composition layer, to yield a polymerizable composition layer containing an unevenly distributed immiscible material that is enriched in a layer surface, or the vicinity thereof, facing the cover film (at an interface, or in the vicinity thereof, opposite to the other interface with the monomer-absorptive layer); and carrying out polymerization of the polymerizable composition layer containing the unevenly distributed immiscible material typically via light irradiation or heating to form a polymer layer containing an unevenly distributed immiscible material that is enriched in a layer surface, or the vicinity thereof, facing the cover film (at an interface, or in the vicinity thereof, opposite to the other interface with the monomer-absorptive layer) to thereby yield a polymer article having a multilayer structure including the monomer-absorptive layer and the polymer layer containing the unevenly distributed immiscible material.

The polymer articles can have any shapes that are set suitably according to necessity, as long as having a multilayer structure of a monomer-absorptive layer and a polymer layer containing an unevenly distributed immiscible material, but they are generally in the form of a tape or sheet.

The surfaces of the polymer layer containing the unevenly distributed immiscible material and the monomer-absorptive layer in the polymer articles may each be protected by a cover film. The cover film for use herein may be either releasable or not.

The cover film may be removed before use or may be used as intact without removal to constitute a part of the polymer article.

In an embodiment, an interface (layer surface) of the polymer layer containing the unevenly distributed immiscible material opposite to the other interface with the monomer-absorptive layer is exposed typically by removing a cover film on the polymer layer containing the unevenly distributed immiscible material, before use of a polymer article. In this embodiment, the interface (layer surface) opposite to the other interface with the monomer-absorptive layer is generally used as a working surface.

The immiscible material-containing polymerizable composition at least contains an immiscible material and a polymerizable monomer that will undergo polymerization by the action of light and/or heat. The composition may further contain a polymerization initiator such as a photopolymerization initiator or a thermopolymerization initiator according to necessity. In an embodiment of polymer articles, the polymer layer containing the unevenly distributed immiscible material is composed of a particle-containing polymerizable composition which is an immiscible material-containing polymerizable composition using fine particles (particles) as the immiscible material. In this embodiment, the polymer layer is a particle-containing polymerized/cured layer that is formed as a result of polymerization of a particle-containing polymerizable composition layer which is a layer of the immiscible material-containing polymerizable composition (immiscible material-containing polymerizable composition layer). This polymer layer contains the particles as unevenly distributed in the layer.

A polymer article according to this embodiment has a particle-containing polymerized/cured layer as the polymer layer containing the unevenly distributed immiscible material. In this polymer article, the particles as the immiscible material are present (enriched) in a layer surface or the vicinity thereof (at an interface, or in the vicinity thereof, opposite to the other interface with the monomer-absorptive layer) in the particle-containing polymerized/cured layer. The surface of the particle-containing polymerized/cured layer (at an interface of the particle-containing polymerized/cured layer opposite to the other interface with the monomer-absorptive layer) has asperities (roughness) caused by the particles on its surface. Consequently, use of particles as the immiscible material gives a polymer article having a roughened surface due to the particles. In an embodiment, a polymer article uses particles as the immiscible material, has asperities caused by the particles on its surface, and is in the form of a tape or sheet. The polymer article according to this embodiment is usable as intact as a tape or sheet having a roughened surface (hereinafter also simply referred to as a "surface-roughened sheet"), or as a member constituting part of a surface-roughened sheet.

In an embodiment, a surface-roughened sheet can be produced, for example, by forming a layer of a particle-containing polymerizable composition on at least one side of a monomer-absorptive layer, in which the particle-containing polymerizable composition contains particles and a polymerizable monomer; whereby allowing the particles to migrate in the particle-containing polymerizable composition layer to thereby form a polymerizable composition layer containing unevenly distributed particles that are enriched in a surface or the vicinity thereof (at an interface, or in the vicinity thereof, opposite to the other interface with the monomer-absorptive layer); and carrying out polymerization of the polymerizable composition layer containing unevenly distributed particles to form a polymerized/cured layer containing unevenly distributed particles to thereby yield a multilayer structure including the monomer-absorptive layer and the particle-containing polymerized/cured layer.

In another embodiment, a surface-roughened sheet can be produced by preparing a specific multilayer assembly which includes a monomer-absorptive sheet capable of absorbing a polymerizable monomer, a particle-containing polymerizable composition layer arranged on a monomer-absorptive surface of the monomer-absorptive layer, and a releasable cover film arranged on the particle-containing polymerizable composition layer; and curing the particle-containing polymerizable composition layer typically by light irradiation or heating, to form a photo-polymerized/cured layer containing unevenly distributed particles and having asperities (a rough structure) on a surface facing the cover film. The resulting surface-roughened sheet produced using the specific multilayer assembly is separated from the cover film before use, and the exposed roughened surface (a surface having a rough structure) of the photopolymerized/cured layer containing unevenly distributed particles is used as a working surface. The particle-containing polymerizable composition herein is used as a particle-containing composition.

[Immiscible Material-Containing Polymerizable Composition Layer (Particle-Containing Polymerizable Composition Layer)]

The immiscible material-containing polymerizable composition layer is a layer composed of an immiscible material-containing polymerizable composition containing at least an immiscible material and a polymerizable monomer that is polymerizable by the action of light or heat. The immiscible material-containing polymerizable composition layer may be a particle-containing polymerizable composition layer which is a layer composed of a particle-containing polymerizable composition using particles as the immiscible material. The immiscible material-containing polymerizable composition layer may also be a particle-containing photopolymerizable composition layer composed of a particle-containing photopolymerizable composition that uses particles as the immiscible material and further uses a photopolymerization initiator as the polymerization initiator.

The immiscible material-containing polymerizable composition layer (i) undergoes polymerization upon the application of an active energy ray or heat and is cured to yield a polymer layer (cured layer). Additionally, (ii) as the immiscible material-containing polymerizable composition layer is arranged in contact with the monomer-absorptive layer, the polymerizable monomer in the immiscible material-containing polymerizable composition layer is absorbed by the monomer-absorptive layer; and (iii) the immiscible material migrates in the immiscible material-containing polymerizable composition layer, to form a polymerizable composition layer containing an unevenly distributed immiscible material that is enriched at an interface or in the vicinity thereof (in a layer surface or the vicinity thereof) opposite to the other interface with the monomer-absorptive layer. According to these mechanisms, a polymer layer containing an unevenly distributed immiscible material is obtained.

By way of example, in an embodiment, the particle-containing photopolymerizable composition layer is a layer formed from a particle-containing photopolymerizable composition which contains at least a polymerizable monomer, a photopolymerization initiator, and particles such as fine particles. Herein, (i) the particle-containing photopolymerizable composition layer undergoes photopolymerization upon application of an active energy ray and is cured. Additionally, (ii) the polymerizable monomer in the particle-containing photopolymerizable composition layer is absorbed by a monomer-absorptive surface of the monomer-absorptive layer of the monomer-absorptive sheet in the specific multilayer assembly (multilayer assembly which has a multilayer structure including a cover film, a immiscible material-containing polymerizable composition layer, and a monomer-absorptive sheet). Furthermore, (iii) the particle-containing photopolymerizable composition layer, as the particles migrate therein, is converted into a photopolymerizable composition layer containing unevenly distributed particles that are enriched at an interface or in the vicinity thereof (in a layer surface or the vicinity thereof) opposite to the other interface with the monomer-absorptive layer. According to these mechanisms, there is obtained a photo-polymerized/cured layer that contains unevenly distributed particles and has a roughened surface (asperities on its surface). Accordingly, the particle-containing polymerizable composition layer is a layer constituting part of the specific multilayer assembly (multilayer assembly having a multilayer structure including a cover film, an immiscible material-containing polymerizable composition layer, and a monomer-absorptive sheet); and is a layer that forms, via photo-curing, a photo-polymerized/cured layer containing unevenly distributed particles. The resulting photopolymerized/cured layer provides a working surface of a polymer article using particles as the immiscible material or provides a rough structure of a working surface of a surface-roughened sheet.

It is important that the polymerizable monomer is a compound that will undergo polymerization using light energy or heat energy, irrespective of reaction mechanism such as free-radical polymerization or cationic polymerization. Exemplary polymerizable monomers include free-radically polymerizable monomers such as acrylic monomers to form acrylic polymers; cationically polymerizable monomers such as epoxy monomers to form epoxy resins, oxetane monomers to form oxetane resins, and vinyl ether monomers to form vinyl ether resins; combinations of polyisocyanates with polyols to form urethane resins; and combinations of polycarboxylic acids with polyols to form polyester resins. Among them, acrylic monomers are preferably used. Each of different polymerizable monomers may be used alone or in combination.

The acrylic polymers, epoxy resins, oxetane resins, vinyl ether resins, urethane resins, and polyester resins function as base polymers for acrylic pressure-sensitive adhesives (tacky adhesives), base polymers for epoxy pressure-sensitive adhesives, base polymers for oxetane pressure-sensitive adhesives, base polymers for vinyl ether pressure-sensitive adhesives, base polymers for urethane pressure-sensitive adhesives, and base polymers for polyester pressure-sensitive adhesives, respectively. Consequently, the immiscible material-containing polymerizable composition may be a pressure-sensitive adhesive composition (hereinafter also referred to as an "immiscible material-containing pressure-sensitive adhesive composition"). Accordingly, the polymer layer containing the unevenly distributed immiscible material, which is formed via curing of an immiscible material-containing polymerizable composition, can be a pressure-sensitive adhesive layer containing an unevenly distributed immiscible material, which is formed via polymerization of an immiscible material-containing pressure-sensitive adhesive composition. As acrylic monomers are preferably used as the polymerizable monomer herein, the immiscible material-containing pressure-sensitive adhesive composition is preferably an immiscible material-containing acrylic pressure-sensitive adhesive composition. Specifically, an acrylic polymer is preferably used as a polymer for use herein in the polymer layer containing the unevenly distributed immiscible material constituting the polymer article.

By way of example, the particle-containing photopolymerizable composition can be a pressure-sensitive adhesive composition containing at least a polymerizable monomer and a photopolymerization initiator (hereinafter also referred to as a "photopolymerizable pressure-sensitive adhesive composition") which is added with particles (hereinafter also referred to as a "particle-containing photopolymerizable pressure-sensitive adhesive composition"). Accordingly, the particle-containing photo-polymerized/cured layer formed via photo-curing of a particle-containing photopolymerizable composition layer can be a particle-containing pressure-sensitive adhesive layer formed via photo-curing of a particle-containing pressure-sensitive adhesive composition layer. As acrylic monomers are preferably used as the polymerizable monomer herein, the particle-containing photopolymerizable pressure-sensitive adhesive composition is preferably a particle-containing photopolymerizable acrylic pressure-sensitive adhesive composition.

Of acrylic monomers, (meth)acrylic esters are preferred, of which (meth)acrylic alkyl esters are more preferred. Each of different (meth)acrylic alkyl esters may be used alone or in combination.

Exemplary (meth)acrylic alkyl esters include (meth)acrylic alkyl esters whose alkyl moiety has one to twenty carbon atoms, such as methyl (meth)acrylates, ethyl (meth)acrylates, propyl (meth)acrylates, isopropyl (meth)acrylates, butyl (meth)acrylates, isobutyl (meth)acrylates, s-butyl (meth)acrylates, t-butyl (meth)acrylates, pentyl (meth)acrylates, isopentyl (meth)acrylates, hexyl (meth)acrylates, heptyl (meth)acrylates, octyl (meth)acrylates, 2-ethylhexyl (meth)acrylates, isooctyl (meth)acrylates, nonyl (meth)acrylates, isononyl (meth)acrylates, decyl (meth)acrylates, isodecyl (meth)acrylates, undecyl (meth)acrylates, dodecyl (meth)acrylates, tridecyl (meth)acrylates, tetradecyl (meth)acrylates, pentadecyl (meth)acrylates, hexadecyl (meth)acrylates, heptadecyl (meth)acrylates, octadecyl (meth)acrylates, nonadecyl (meth)acrylates, and icosyl (meth)acrylates; of which (meth)acrylic alkyl esters whose alkyl moiety has two to fourteen carbon atoms are preferred, and (meth)acrylic alkyl esters whose alkyl moiety has two to ten carbon atoms are more preferred.

Exemplary (meth)acrylic esters other than (meth)acrylic alkyl esters include (meth)acrylic esters having alicyclic hydrocarbon groups, such as cyclopentyl (meth)acrylates, cyclohexyl (meth)acrylates, and isobornyl (meth)acrylates; (meth)acrylic esters having aromatic hydrocarbon groups, such as phenyl (meth)acrylates; and polyalkylene glycol (meth)acrylates.

Each of different (meth)acrylic esters may be used alone or in combination. In an embodiment, (meth)acrylic esters are used as a main monomer component for constituting the immiscible material-containing acrylic pressure-sensitive adhesive composition or the particle-containing photopolymerizable acrylic pressure-sensitive adhesive composition. In this case, it is important that the amount of (meth)acrylic esters typified by (meth)acrylic alkyl esters is, for example, 60 percent by weight or more, and preferably 80 percent by weight or more, based on the total amount of monomer components constituting these pressure-sensitive adhesive compositions.

The immiscible material-containing acrylic pressure-sensitive adhesive composition and particle-containing photopolymerizable acrylic pressure-sensitive adhesive composition may further contain, as monomer components, co-polymerizable monomers such as polar group-containing monomers and polyfunctional monomers. Use of co-polymerizable monomers as monomer components helps, for example, to improve adhesion of the resulting immiscible material-containing acrylic pressure-sensitive adhesive composition and particle-containing photopolymerizable acrylic pressure-sensitive adhesive and/or helps to increase cohesion of the resulting immiscible material-containing acrylic pressure-sensitive adhesive or particle-containing photopolymerizable acrylic pressure-sensitive adhesive. Each of different co-polymerizable monomers may be used alone or in combination.

Exemplary polar group-containing monomers include carboxyl-containing monomers such as (meth)acrylic acids, itaconic acid, maleic acid, fumaric acid, crotonic acid, and isocrotonic acid, and anhydrides thereof such as maleic anhydride; hydroxyl-containing monomers including hydroxyalkyl (meth)acrylates such as hydroxyethyl (meth)acrylates, hydroxypropyl (meth)acrylates, and hydroxybutyl (meth)acrylates; amido-containing monomers such as acrylamide, methacrylamide, N,N-dimethyl (meth)acrylamides, N-methylol (meth)acrylamides, N-methoxymethyl (meth)acrylamides, and N-butoxymethyl (meth)acrylamides; amino-containing monomers such as aminoethyl (meth)acrylates, dimethylaminoethyl (meth)acrylates, and t-butylaminoethyl (meth)acrylates; glycidyl-containing monomers such as glycidyl (meth)acrylates and methylglycidyl (meth)acrylates; cyano-containing monomers such as acrylonitrile and methacrylonitrile; and heterocycle-containing vinyl monomers such as N-vinyl-2-pyrrolidone, (meth)acryloylmorpholine, as well as N-vinylpyridine, N-vinylpiperidone, N-vinylpyrimidine, N-vinylpiperazine, N-vinylpyrazine, N-vinylpyrrole, N-vinylimidazole, and N-vinyloxazole. Carboxyl-containing monomers, such as acrylic acids, and anhydrides thereof are preferred as polar group-containing monomers.

The amount of polar group-containing monomers may be suitably adjusted according typically to the purpose and use of the resulting polymer article. By way of example, when the polymer article is used in a use where adhesion or tackiness of the polymer layer containing the unevenly distributed immiscible material is desired, the amount may be 30 percent by weight or less, for example, 1 to 30 percent by weight, and preferably 3 to 20 percent by weight based on the total monomer components. Polar group-containing monomers, if used in an amount of greater than 30 percent by weight based on the total monomer components, may cause excessively high cohesion and thereby insufficient adhesion of the resulting immiscible material-containing acrylic pressure-sensitive adhesive or particle-containing photopolymerizable acrylic pressure-sensitive adhesive. In contrast, polar group-containing monomers, if used in an excessively small amount (e.g., in an amount of smaller than 1 percent by weight based on the total monomer components to constitute the resulting immiscible material-containing acrylic pressure-sensitive adhesive or particle-containing photopolymerizable acrylic pressure-sensitive adhesive), may not sufficiently contribute to sufficient cohesion and thereby sufficient searing force of the resulting immiscible material-containing acrylic pressure-sensitive adhesive or particle-containing photopolymerizable acrylic pressure-sensitive adhesive.

When the polymer article is used in a use where hard or rigid properties of the polymer layer containing the unevenly distributed immiscible material is desired (e.g., in a use in films or hard coatings), the amount of polar group-containing monomers may be 95 percent by weight or less, for example, 0.01 to 95 percent by weight, and is preferably 1 to 70 percent by weight based on the total monomer components. Polar group-containing monomers, if used in an amount of greater than 95 percent by weight, may for example cause insufficient water resistance of the polymer article, and this may cause wide variations in quality of the polymer article with respect to service conditions such as moisture and water. In contrast, polar group-containing monomers, if used in an excessively small amount (e.g., 0.01 percent by weight or less), may require addition of a greater amount of (meth)acrylic esters, such as isobornyl acrylate, and/or polyfunctional monomers each having a high glass transition temperature (Tg) to provide such hard or rigid properties, and this may cause the resulting polymer article to be excessively fragile.

Exemplary polyfunctional monomers include hexanediol di(meth)acrylates, (poly)ethylene glycol di(meth)acrylates, (poly)propylene glycol di(meth)acrylates, neopentyl glycol di(meth)acrylates, pentaerythritol di(meth)acrylates, pentaerythritol tri(meth)acrylates, dipentaerythritol hexa(meth)acrylates, trimethylolpropane tri(meth)acrylates, tetramethylolmethane tri(meth)acrylates, allyl (meth)acrylates, vinyl (meth)acrylates, divinylbenzene, epoxy acrylates, polyester acrylates, urethane acrylates, butyl di(meth)acrylates, and hexyl di(meth)acrylates.

The amount of polyfunctional monomers may be suitably adjusted according typically to the purpose and use of the resulting polymer article. By way of example, when the polymer article is used in a use where adhesion or tackiness of the polymer layer containing the unevenly distributed immiscible material is desired, the amount may be 2 percent by weight or less, for example, 0.01 to 2 percent by weight and is preferably 0.02 to 1 percent by weight, based on the total monomer components. Polyfunctional monomers, if used in an amount of greater than 2 percent by weight based on the total monomer components, may cause excessively high cohesion and thereby insufficient pressure-sensitive adhesion (tackiness) of the resulting immiscible material-containing acrylic pressure-sensitive adhesive or particle-containing photopolymerizable acrylic pressure-sensitive adhesive. In contrast, polyfunctional monomers, if used in an excessively small amount (e.g., in an amount of smaller than 0.01 percent by weight based on the total monomer components for the production of the resulting immiscible material-containing acrylic pressure-sensitive adhesive or particle-containing photopolymerizable acrylic pressure-sensitive adhesive), may for example not effectively help to provide sufficient cohesion of the resulting immiscible material-containing acrylic pressure-sensitive adhesive or particle-containing photopolymerizable acrylic pressure-sensitive adhesive.

When the polymer article is used in a use where hard or rigid properties of the polymer layer containing the unevenly distributed immiscible material is desired (e.g., in a use in films or hard coatings), the amount of polyfunctional monomers may be 95 percent by weight or less, for example, 0.01 to 95 percent by weight and is preferably 1 to 70 percent by weight, based on the total monomer components. Polyfunctional monomers, if used in an amount of greater than 95 percent by weight based on the total monomer components, may cause excessively large curing-shrinkage upon polymerization to thereby fail to give a polymer article in the form of a homogeneous film or sheet or to cause the resulting polymer article being excessively fragile. In contrast, polyfunctional monomers, if used in an excessively small amount (e.g., in an amount of 0.01 percent by weight or less), may not effectively help to give a polymer article having sufficient solvent resistance and thermal stability.

Copolymerizable monomers other than polar group-containing monomers and polyfunctional monomers include vinyl esters such as vinyl acetate and vinyl propionate; aromatic vinyl compounds such as styrene and vinyltoluene; olefins or dienes such as ethylene, butadiene, isoprene, and isobutylene; vinyl ethers such as vinyl alkyl ethers; vinyl chloride; (meth)acrylic alkoxyalkyl monomers such as methoxyethyl (meth)acrylates and ethoxyethyl (meth)acrylates; sulfonate-containing monomers such as sodium vinylsulfonate; phosphate-containing monomers such as 2-hydroxyethylacryloyl phosphate; imido-containing monomers such as cyclohexylmaleimide and isopropylmaleimide; isocyanate-containing monomers such as 2-methacryloyloxyethyl isocyanate; fluorine-containing (meth)acrylates; and silicon-containing (meth)acrylates.

Polymerization initiators may be used according to necessity and any of, for example, thermopolymerization initiators and photopolymerization initiators (photoinitiators) will do. In the present invention, curing reactions by the action of heat or an active energy ray using polymerization initiators such as thermopolymerization initiators and photopolymerization initiators (photoinitiators) can be employed in the formation of a polymer layer containing an unevenly distributed immiscible material. Thus, the polymerizable composition layer containing an unevenly distributed immiscible material can be cured, in which the immiscible material remains unevenly distributed in the layer, to easily yield a polymer layer containing an unevenly distributed immiscible material that is enriched at an interface or in the vicinity thereof (in a layer surface or the vicinity thereof) opposite to the other interface with the monomer-absorptive layer.

Exemplary photopolymerization initiators include, but are not limited to, benzoin ether photoinitiators, acetophenone photoinitiators, α-ketol photoinitiators, aromatic sulfonyl chloride photoinitiators, photoactive oxime photoinitiators, benzoin photoinitiators, benzyl photoinitiators, benzophenone photoinitiators, ketal photoinitiators, and thioxanthone photoinitiators. Each of different photopolymerization initiators may be used alone or in combination.

Specifically, exemplary ketal photoinitiators include 2,2-dimethoxy-1,2-diphenylethan-1-one [e.g., a product under the trade name of "Irgacure 651" (supplied by Ciba Specialty Chemicals Corporation)]. Exemplary acetophenone photoinitiators include 1-hydroxycyclohexyl phenyl ketone [e.g., a product under the trade name of "Irgacure 184" (supplied by Ciba Specialty Chemicals Corporation)], 2,2-diethoxyacetophenone, 2,2-dimethoxy-2-phenylacetophenone, 4-phenoxydichloroacetophenone, and 4-(t-butyl)dichloroacetophenone. Exemplary benzoin ether photoinitiators include benzoin methyl ether, benzoin ethyl ether, benzoin propyl ether, benzoin isopropyl ether, and benzoin isobutyl ether. Exemplary acylphosphine oxide photoinitiators include a product under the trade name of "Lucirin TPO" (supplied by BASF AG). Exemplary α-ketol photoinitiators include 2-methyl-2-hydroxypropiophenone and 1-[4-(2-hydroxyethyl)phenyl]-2-methylpropan-1-one.

Exemplary aromatic sulfonyl chloride photoinitiators include 2-naphthalenesulfonyl chloride. Exemplary photoactive oxime photoinitiators include 1-phenyl-1,1-propanedione-2-(o-ethoxycarbonyl)-oxime. Exemplary benzoin photoinitiators, include benzoin. Exemplary benzyl photoinitiators include benzyl. Exemplary benzophenone photoinitiators include benzophenone, benzoylbenzoic acid, 3,3'-dimethyl-4-methoxybenzophenone, polyvinylbenzophenone, and α-hydroxycyclohexyl phenyl ketone. Exemplary thioxanthone photoinitiators include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

The amount of photoinitiators is not particularly limited, but can be selected within ranges of, for example, 0.01 to 5 parts by weight and preferably 0.05 to 3 parts by weight, to 100 parts by weight of the total monomer components of the immiscible material-containing polymerizable composition or particle-containing photopolymerizable composition.

Curing reactions by the action of active energy rays may be employed herein when a polymerizable composition layer containing an unevenly distributed immiscible material is cured to form a polymer layer containing an unevenly distributed immiscible material (e.g., when a polymerizable composition layer containing unevenly distributed particles is cured to form a photo-polymerized/cured layer containing unevenly distributed particles). Exemplary active energy rays include ionizing radiations such as alpha rays, beta rays, gamma rays, neutron beams, and electron beams; and ultraviolet rays, of which ultraviolet rays are preferred. The conditions for the application of active energy rays, such as irradiation energy, irradiation time, and irradiation procedure, are not particularly limited, as long as a polymerizable composition layer containing an unevenly distributed immiscible material can be cured to form a polymer layer containing an unevenly distributed immiscible material (e.g., a polymerizable composition layer containing unevenly distributed particles can be cured to form a photopolymerized/cured layer containing unevenly distributed particles).

Exemplary thermopolymerization initiators include azo polymerization initiators such as 2,2'-azobisisobutyronitrile, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine) dihydrochloride; peroxide polymerization initiators such as dibenzoyl peroxide and tert-butyl permaleate; redox polymerization initiators such as combination of organic peroxides with vanadium compounds, combinations of organic peroxides with dimethylaniline, and combinations of metal salts of naphthenic acid with butyraldehyde, aniline, or acetylbutyrolactone. The amount of thermopolymerization initiators is not particularly limited, as long as being within such a range that they can be used as thermopolymerization initiators. Use of redox polymerization initiators as thermopolymerization initiators enables polymerization at ordinary temperature (room temperature).

The immiscible material-containing polymerizable composition and particle-containing photopolymerizable composition may further contain suitable additives according to necessity. Exemplary additives include surfactants such as ionic surfactants, silicone surfactants, and fluorine surfactants; crosslinking agents such as polyisocyanate crosslinking agents, silicone crosslinking agents, epoxy crosslinking agents, and alkyl-etherified melamine crosslinking agents; tackifiers including substances that are solid, semisolid, or liquid at ordinary temperature and are composed typically of rosin derivatives resins, polyterpene resins, petroleum resins, and oil-soluble phenol resins; plasticizers; fillers; age inhibitors; antioxidants; and colorants such as pigments and dyestuffs.

Typically, pigments (coloring pigments) can be used within ranges not adversely affecting polymerization reactions such as photopolymerization reactions, in order to color the polymer layer containing the unevenly distributed immiscible material and the photo-polymerized/cured layer containing unevenly distributed particles. Carbon blacks can be used as coloring pigments when the polymer layer containing the unevenly distributed immiscible material and photo-polymerized/cured layer containing unevenly distributed particles are to be colored black. The amount of carbon blacks is desirably within ranges of 0.15 parts by weight or less, for example, 0.001 to 0.15 parts by weight, and preferably 0.02 to 0.1 part by weight, to 100 parts by weight of the total monomer components of the immiscible material-containing polymerizable composition or particle-containing photopolymerizable composition. These ranges are desirable from the viewpoints of the degree of coloring and prevention of adverse effects on the photopolymerization reactions.

The immiscible material is not particularly limited, as long as being a substance or material that is immiscible (incompatible or insoluble) with polymer components constituting the polymer layer containing the unevenly distributed immiscible material. It can be any of inorganic materials (inorganic substances) and organic materials (organic substances). The immiscible material may be solid or fluid.

Exemplary inorganic materials as immiscible materials include particles (fine particles and fine-particle powders) as listed below. Exemplary organic materials as immiscible materials include polymers and oligomers thereof, such as acrylic polymers, polyesters, polyurethanes, polyethers, silicones, natural rubbers, and synthetic rubbers, of such synthetic rubbers, preferred are synthetic rubbers containing styrene components, such as styrene-isoprene-styrene rubber (SIS), styrene-butadiene-styrene rubber (SBS), and styrene-ethylene-butylene-styrene rubber (SEBS); tackifiers (tackifier resins) such as rosin tackifier resins, terpene tackifier resins, phenol tackifier resins, hydrocarbon tackifier resins, ketone tackifier resins, polyamide tackifier resins, epoxy tackifier resins, and elastomer tackifier resins; surfactants; antioxidants; organic pigments; plasticizers; and liquids such as solvents (organic solvent). Exemplary immiscible materials further include water and aqueous solutions such as aqueous solutions of salts and aqueous solutions of acids.

Whether or not a certain material is immiscible with a certain polymer can be determined by determining how (in which size) the material or an aggregate thereof is dispersed in the polymer. The measurement may be conducted according to a common technique, not limited herein, typically by visual observation, with an optical microscope, a scanning electron microscope (SEM), or a transmission electron microscope (TEM), or through X-ray diffractometry. Exemplary techniques include a technique of dissolving the material in a polymerizable monomer, polymerizing the resulting polymerizable monomer to give a polymer, and determining how the material is dispersed in the polymer; a technique of dissolving the objective polymer in a solvent that dissolves the polymer therein, adding the target material to the solution, stirring the mixture, removing the solvent from the mixture, and determining how the material is dispersed in the polymer; and, in the case of a thermoplastic polymer, a technique of heating and melting the polymer, adding the material to the molten polymer, cooling the mixture, and determining how the material is dispersed in the polymer. A certain material is evaluated as being immiscible when it satisfies the following conditions: when the material or an aggregate thereof has a shape approximable to a spherical body, such as a spherical, cubic, or amorphous shape, the diameter of the approximated spherical body is 5 nm or more; or when the material or an aggregate thereof has a shape approximable to a columnar body, such as a rod, thin layer, or rectangular shape, the length of the largest side of the approximated columnar body is 10 nm or more.

Exemplary specific techniques for dispersing a material or an aggregate thereof in a polymer include a technique of mixing or homogenously dispersing 100 parts by weight of a polymerizable monomer constituting the polymer, 0.5 part by weight of a photoinitiator, and 50 parts by weight of the material or an aggregate thereof to give a composition, applying the composition to a polyethylene terephthalate (PET) film to give a coating about 10 to 500 $\mu$m thick, and polymerizing the coating by the application of an ultraviolet ray with a black-light lamp, while excluding the influence of oxygen by carrying out polymerization in an inert gas such as nitrogen gas or by covering the coating with a cover film; and a technique of preparing a polymer according to an arbitrary procedure such as solution polymerization or ultraviolet polymerization, dissolving the polymer in a solvent to give a solvent system, homogenously dispersing the material or an aggregate thereof, in an amount according to 50 parts by weight with respect to 100 parts by weight of the polymer, in the solvent system typically by mixing and stirring, applying the resulting mixture (dispersion) to a PET to give a coating, and drying the coating to remove the solvent therefrom to give a dried coating about 10 to 500 $\mu$m thick.

A certain material can be considered as being a material immiscible or incompatible with a polymer when the material is dispersed in the polymer and satisfies the following conditions: when the material or an aggregate thereof in the polymer has a shape approximable to a spherical body, such as a spherical, cubic, or amorphous shape, the approximated spherical material or aggregate thereof has a diameter of 5 nm or more; or when the material or an aggregate thereof in the polymer has a shape approximable to a columnar body, such as a rod, thin-layer, or rectangular shape, the approximated columnar material or aggregate thereof has a length in the largest side of 10 nm or more.

Particles, an inorganic substance as the immiscible material, are not particularly limited, as long as they will contribute to the formation of a roughened surface of a polymer layer containing an unevenly distributed immiscible material surface in a polymer article using particles as the immiscible material, or they will contribute to the formation of a rough structure of a working surface of a surface-roughened sheet. Exemplary particles include inorganic particles such as silica, silicone (silicone powder), calcium carbonate, clay, titanium oxide, talc, phyllosilicate, clay minerals, metal powders, glass, glass beads, glass balloons, alumina balloons, ceramic balloons, titanium white, and carbon blacks; organic particles such as polyester beads, nylon beads, silicon beads, urethane beads, vinylidene chloride beads, and acrylic balloons; resinous particles such as cross-linked acrylic particles, cross-linked styrene particles, melamine resin particles, benzoguanamine resin particles, and nylon resin particles; and inorganic/organic hybrid particles. These particles may be solid or hollow (balloons). Each of particles of different types may be used alone or in combination.

The particle diameter (average particle diameter) of particles is not particularly limited, but may be selected within ranges of, for example, 0.5 to 500 $\mu$m, preferably 1 to 300 $\mu$m, and more preferably 3 to 100 $\mu$m. Particles having different particle diameters may be used in combination.

Particles may have any shape such as spheroidal such as spherical or elliptical, amorphous, needle, rod-like, or planar shape. The particles may have, for example, pores or projections on their surface. In general, the particles preferably have a spherical shape or a shape with a high sphericity near to that of sphere, because these shapes may help to uniformize the rough structure of a particle-induced roughened surface of the polymer layer containing the unevenly distributed immiscible material or the rough structure of a working surface of the surface-roughened sheet. Each of particles having different shapes may be used alone or in combination.

The particles may have undergo surface treatments of various kinds, such as treatment to allow the surface to have a low surface tension typically with a silicone compound or a fluorine compound.

The amount of immiscible materials in the polymer layer containing the unevenly distributed immiscible material is not particularly limited and may be selected within ranges of, for example, 0.001 to 70 parts by weight, preferably 0.01 to 50 parts by weight, and more preferably 0.1 to 30 parts by weight, to 100 parts by weight of the total monomer components of the immiscible material-containing polymerizable composition that will constitute the polymer layer containing the unevenly distributed immiscible material. Immiscible materials, if used in an amount of greater than 70 parts by weight, may impede the production of a polymer article or may cause the resulting polymer article to have problems in strength. In contrast, immiscible materials, if used in an amount of smaller than 0.001 part by weight, may be unlikely to be enriched averagely in a surface or the vicinity thereof (at an interface, or in the vicinity thereof, opposite to the other interface with the monomer-absorptive layer) of the polymer layer.

By way of example, the amount of particles, if used as the immiscible material, is not particularly limited, but may be selected within ranges of 0.001 to 70 parts by weight, preferably 0.01 to 60 parts by weight, and more preferably 0.1 to 50 parts by weight, to 100 parts by weight of the total monomer components of the particle-containing photopolymerizable composition. Particles, if used in an amount of smaller than 10 parts by weight to 100 parts by weight of the monomer components of the particle-containing photopolymerizable composition, may not help to impart a rough structure averagely to the entire working surface of the surface-roughened sheet. In contrast, particles, if used in an amount of greater than 70 parts by weight, may drop off during the production of a surface-roughened sheet or may cause the resulting surface-roughened sheet to have problems in strength.

In the polymer layer containing the unevenly distributed immiscible material, the immiscible material is unevenly distributed as being enriched in a surface or the vicinity thereof (at an interface, or in the vicinity thereof, opposite to the other interface with the monomer-absorptive layer) of the polymer layer. Specifically, the immiscible material is unevenly distributed and enriched as a layer in a surface (at an interface opposite to the other interface with the monomer-absorptive layer) of the polymer layer. The polymer article therefore has superior adhesion between the monomer-absorptive layer and the polymer layer containing the unevenly distributed immiscible material. In the polymer layer containing the unevenly distributed immiscible material, the thickness of a region where the immiscible material is enriched (the layered distributed region) (the depth of the region in a thickness direction from the surface of the polymer layer) may be controlled by regulating the amount of the immiscible material.

The immiscible material-containing polymerizable composition and particle-containing photopolymerizable composition can be prepared by mixing and dispersing the respective components homogenously. The immiscible material-containing polymerizable composition and particle-containing photopolymerizable composition preferably have a suitable viscosity for the application (coating), because they are generally applied to bases into sheet-like forms. The viscosity of the immiscible material-containing polymerizable composition and particle-containing photopolymerizable composition can be adjusted, for example, by compounding polymers such as acrylic rubbers and thickening additives; or partially polymerizing polymerizable monomers in the immiscible material-containing polymerizable composition or those in the particle-containing photopolymerizable composition via light irradiation or heating. The viscosity is preferably 5 to 50 Pa.s, and more preferably 10 to 40 Pa.s as determined with a BH viscometer using a No. 5 rotor at a number of revolutions of 10 rpm and a measurement temperature of 30°C. A composition, if having a viscosity of smaller than 5 Pa.s, may flow and fail to form a film upon application onto a base, and a composition, if having a viscosity of greater than 50 Pa.s, may not be satisfactorily applied due to its excessively high viscosity.

The application of the immiscible material-containing polymerizable composition and particle-containing photopolymerizable composition may be carried out by using a common coater. Exemplary coaters include comma-roller coaters, die-roller coaters, rotogravure roller coaters, reverse roller coaters, kiss-roller coaters, dip roller coaters, bar coaters, knife coaters, and spray coaters.

A layer of the immiscible material-containing polymerizable composition or a layer of the particle-containing photopolymerizable composition may be formed, for example, by applying the composition to a predetermined surface of a suitable carrier with any of the common coaters. Exemplary predetermined surfaces include a surface provided by the monomer-absorptive layer; a monomer-absorptive surface of the monomer-absorptive sheet; and a releasable surface of the cover film.

[Monomer-Absorptive Sheet]

Polymer articles according to the present invention may be produced by forming a layer of an immiscible material-containing polymerizable composition on one or both sides of a monomer-absorptive layer; allowing the immiscible material to migrate in the immiscible material-containing polymerizable composition layer to give a polymerizable composition layer containing an unevenly distributed immiscible material that is enriched or present at an interface, or in the vicinity thereof, opposite to the other interface with the monomer-absorptive layer; and carrying out polymerization of the polymerizable composition layer containing the unevenly distributed immiscible material to form a polymer layer containing an unevenly distributed immiscible material to thereby yield a multilayer structure of the monomer-absorptive layer and the polymer layer containing the unevenly distributed immiscible material.

Typically, in an embodiment, a polymer article is a surface-roughened sheet having a particle-induced roughened surface prepared by carrying out polymerization via light irradiation and using particles as the immiscible material. This surface-roughened sheet may be produced by applying light to a multilayer assembly, which multilayer assembly includes a monomer-absorptive sheet that is capable of absorbing a polymerizable monomer, a layer of a particle-containing photopolymerizable composition arranged on a monomer-absorptive surface of the monomer-absorptive sheet, and a releasable cover film arranged on the layer, to form a photo-polymerized/cured layer containing unevenly distributed particles that are enriched in a region near to the cover film. Specifically, the surface-roughened sheet is produced according to the following mechanisms: in the specific multilayer assembly, the monomer-absorptive layer of the monomer-absorptive sheet absorbs the polymerizable monomer from the particle-containing photopolymerizable composition layer that is arranged in contact with a monomer-absorptive surface of the monomer-absorptive layer; the particles migrate in the particle-containing photopolymerizable composition layer to thereby form a photopolymerizable composition layer containing unevenly distributed particles; and the photopolymerizable composition layer containing unevenly distributed particles is cured by light irradiation to form a photopolymerized/cured layer containing unevenly distributed particles and having a rough structure on a surface facing the cover film in the specific multilayer assembly. The monomer-absorptive sheet herein constitutes part of the specific multilayer assembly.

Accordingly, the shape and other parameters of the monomer-absorptive sheet are not particularly limited, as long as having at least a monomer-absorptive layer that is capable of absorbing at least one of monomer components in the immiscible material-containing polymerizable composition.

Exemplary monomer-absorptive sheets include a monomer-absorptive sheet composed of a monomer-absorptive layer alone (hereinafter also referred to as a "base-less monomer-absorptive sheet") and a monomer-absorptive sheet including a base, and arranged thereon, a monomer-absorptive layer (hereinafter also referred to as a "base-supported monomer-absorptive sheet"). When the monomer-absorptive sheet is a base-less monomer-absorptive sheet, either side of the sheet may work as a monomer-absorptive surface. In contrast, when the monomer-absorptive sheet is a base-supported monomer-absorptive sheet, the surface of the monomer-absorptive layer works as a monomer-absorptive surface.

(Monomer-Absorptive Layer)

The monomer-absorptive layer is a layer that provides a monomer-absorptive surface in a monomer-absorptive sheet. This layer has only to be capable of absorbing at least one polymerizable monomer from the immiscible material-containing polymerizable composition layer or particle-containing photopolymerizable composition layer that is arranged on the monomer-absorptive surface. Exemplary materials for forming the monomer-absorptive layer include sheets made of papers such as kraft paper, creped paper, and Japanese paper; sheets made of fibrous materials, such as fabrics, nonwoven fabrics, and nets; porous films; polymers such as acrylic polymers, polyurethane resins, ethylene-vinyl acetate copolymers, and epoxy resins; natural rubbers; and synthetic rubbers. Each of different material may be used alone or in combination to constitute a monomer-absorptive layer.

Polymers are preferably used herein for constituting the monomer-absorptive layer. Specifically, the monomer-absorptive layer is preferably a monomer-absorptive polymer layer composed of a polymer; and the monomer-absorptive sheet is preferably a sheet having a polymer layer. Such polymers are not particularly limited, but preferred are polymers each containing, as a monomer component, at least one of polymerizable monomers contained in the immiscible material-containing polymerizable composition and particle-containing photopolymerizable composition. By way of example, when a photopolymerizable acrylic polymer composition is used as the immiscible material-containing polymerizable composition, an acrylic polymer is preferably used as a polymer constituting the monomer-absorptive layer. This is because an acrylic monomer serving as a polymerizable monomer in the photopolymerizable acrylic polymer composition, which is the immiscible material-containing polymerizable composition, is in common with a constitutional unit of the acrylic polymer constituting the monomer-absorptive layer, and thus the acrylic monomer as the polymerizable monomer will more easily migrate into the monomer-absorptive layer.

In another embodiment, the monomer-absorptive layer may be composed of a polymer layer as a polymerized product of a polymerizable composition having the same composition as that of the immiscible material-containing polymerizable composition, except for the immiscible material. Typically, the monomer-absorptive layer may be composed of a photopolymerized/cured layer as a cured product of a photopolymerizable composition that has the same composition as that of a particle-containing photopolymerizable composition, except for the particles.

The volume of the monomer-absorptive layer may be constant or vary between before and after absorption of a polymerizable monomer. Typically, in an embodiment, the monomer-absorptive layer is a layer of a polymeric material. Exemplary polymeric materials are the above polymers such as acrylic polymers, polyurethane resins, ethylene-vinyl acetate copolymers, and epoxy resins; and polymers each as a polymerized product of a polymerizable composition having the same composition as that of the immiscible material-containing polymerizable composition, except for the immiscible material (e.g., a photopolymerizable pressure-sensitive adhesive composition, and a photopolymerizable composition having the same composition as that of the particle-containing photopolymerizable composition, except for the particles. In this embodiment, the layer of a polymeric material as the monomer-absorptive layer generally has an increased volume after absorption of a polymerizable monomer from the immiscible material-containing polymerizable composition layer (e.g., as a result of absorption of a polymerizable monomer from the particle-containing photopolymerizable composition layer). Specifically, the polymeric material constituting the monomer-absorptive layer swells as a result of absorption of a polymerizable monomer. Accordingly, the monomer-absorptive layer may be a monomer-swellable layer that will have an increased volume as a result of absorption of a polymerizable monomer.

A monomer-absorptive layer, if being, for example, a layer of the polymeric material, may be formed by applying the polymeric material to a predetermined surface of a suitable carrier using the common coater. Exemplary surfaces herein include a surface of the after mentioned base, and a releasable surface of a cover film. The resulting layer of polymeric material as a monomer-absorptive layer on the carrier may be subjected to drying and/or curing (e.g., photo-induced curing) according to necessity. The polymeric material, before application to a predetermined surface of a suitable carrier, may be adjusted in viscosity as suitable for the application, by adding polymers such as acrylic rubbers and tackifying additives thereinto or by partially polymerizing polymerizable monomers typically via heating or light irradiation.

The thickness of the monomer-absorptive layer before absorption of a polymerizable monomer is not particularly limited and may be selected within ranges of, for example, 1 to 3000 $\mu$m, preferably 2 to 2000 $\mu$m, and more preferably 5 to 1000 $\mu$m. The monomer-absorptive layer may have either a single-layer structure or a multilayer structure.

(Base)

A base is used when the monomer-absorptive sheet is a base-supported monomer-absorptive sheet. Exemplary bases include thin or film-like articles including paper bases such as papers; fibrous bases such as fabrics, nonwoven fabrics, and nets; metallic bases such as metal foils and metal sheets; plastic bases such as plastic films or sheets; rubber bases such as rubber sheets; foams such as foamed sheets; and multilayer assemblies of these, such as a multilayer assembly of a plastic base and another base, and a multilayer assembly of two or more plastic films or sheets. As bases, plastic bases such as plastic films or sheets are preferably used. Exemplary materials for these plastic films or sheets include olefin resins each containing an alpha-olefin as a monomer component, such as polyethylenes (PE), polypropylenes (PP), ethylene-propylene copolymers, and ethylene-vinyl acetate copolymers (EVA); polyester resins such as poly(ethylene terephthalate)s (PET), poly(ethylene naphthalate)s (PEN), and poly(butylene terephthalate)s (PBT); poly(vinyl chloride)s (PVC); vinyl acetate resins; poly(phenylene sulfide)s (PPS); amide resins such as polyamides (nylons), wholly aromatic polyamides (aramids); polyimide resins; and poly(ether ether ketone)s (PEEK). Each of different materials may be used alone or in combination.

Plastic bases, if used as the base, may be controlled in deformability such as extension percentage typically by drawing. When the monomer-absorptive layer is formed by curing upon irradiation with an active energy ray, the base is preferably one that does not adversely affect the transmission of the active energy ray.

The base may have been subjected to a common surface treatment to increase the adhesion with the monomer-absorptive layer. Exemplary surface treatments include corona treatment, chromate treatment, exposure to ozone, exposure to a flame, exposure to a high-voltage electric shock, ionizing radiation treatment, and other chemical or physical oxidizing treatments. In addition or alternatively, the base may have been subjected typically to a coating treatment typically with a primer or a releasing agent.

The thickness of the base may be suitably set according typically to its strength, flexibility, and purpose of use, and is, but not limited to, generally about 1000 $\mu$m or less, for example, about 1 to 1000 $\mu$m, preferably about 1 to 500 $\mu$m, and more preferably about 3 to 300 $\mu$m. The base may have either a single-layer structure or a multilayer structure.

[Cover Film]

In an embodiment herein, a layer of an immiscible material-containing polymerizable composition is formed on at least one side of a monomer-absorptive layer to give a polymerizable composition layer containing an unevenly distributed immiscible material; and the polymerizable composition layer containing the unevenly distributed immiscible material is polymerized to give a polymer layer containing an unevenly distributed immiscible material. In this embodiment, the surface of the polymerizable composition layer containing the unevenly distributed immiscible material is preferably covered with a cover film, because oxygen in the atmosphere, for example, may adversely affect the reaction in polymerization of the polymerizable composition layer containing the unevenly distributed immiscible material. The resulting polymer article may be used with or without removing the cover film. The cover film, if used without removing from the polymer article, is used as part of the polymer article.

By way of example, a surface-roughened sheet composed of a polymer article according to an embodiment of the present invention may be produced by preparing a specific multilayer assembly which includes a releasable cover film (covering film), a particle-containing photopolymerizable composition layer, and a monomer-absorptive sheet, in which the particle-containing photopolymerizable composition layer is arranged on a monomer-absorptive surface of the monomer-absorptive sheet and is protected on its surface by the releasable cover film; and applying light to the specific multilayer assembly to cure the particle-containing photopolymerizable composition layer to thereby form a photo-polymerized/cured layer containing unevenly distributed particles and having a rough structure on a surface facing the cover film. Specifically, the photo-polymerized/cured layer containing unevenly distributed particles may be formed by applying an active energy ray such as ultraviolet ray to the particle-containing photopolymerizable composition layer containing a polymerizable monomer to cause photopolymerization of the polymerizable monomer to thereby cure the particle-containing photopolymerizable composition layer. Herein, the formation of the photo-polymerized/cured layer containing unevenly distributed particles is preferably conducted under such conditions that substantially no oxygen is present, because oxygen typically in the atmosphere may adversely affect the reaction. Accordingly, the surface of the particle-containing photopolymerizable composition layer is covered by the cover film to prevent contact with oxygen and then subjected to photopolymerization. In this case, the cover film will be removed before use of the surface-roughened sheet.

The cover film is not particularly limited, as long as being a film-like article that is resistant to permeation of oxygen. When photopolymerization is employed, the cover film is preferably one that is optically transparent. Common release papers can be used as such cover films. Specifically, exemplary cover films include base materials having a releasable layer (releasably treated layer) treated with a releasing agent (mold-release agent) on at least one side thereof; low-adhesion base materials made of fluorocarbon polymers such as polytetrafluoroethylenes, polychlorotrifluoroethylenes, poly(vinyl fluoride)s, poly(vinylidene fluoride)s, tetrafluoroethylene-hexafluoropropylene copolymers, and chlorofluoroethylene-vinylidene fluoride copolymers; and low-adhesion base materials made of nonpolar polymers including olefin resins such as polyethylenes and polypropylenes. Both sides can work as releasable surfaces in such low-adhesion bases. In contrast, the surface of the releasable layer will work as a releasable surface (releasably treated surface) in bases having a releasable layer.

A cover film including a cover-film base material and, arranged on at least one side thereof, a releasable layer (i.e., a base having a releasable layer) can be used as the cover film; or a cover-film base material alone can be used as the cover film.

Exemplary cover-film base materials include plastic base films (synthetic resin films) such as polyester films (e.g., poly(ethylene terephthalate) films), olefin resin films (e.g., polyethylene films and polypropylene films), poly(vinyl chloride) films, polyimide films, polyamide films (nylon films), and rayon films; papers such as woodfree paper, Japanese paper, kraft paper, glassine paper, synthetic paper, and top coated paper; and base materials each having a multilayer structure of these formed typically by lamination or coextrusion (multilayer structure of two or three layers). Preferred cover-film base materials are those using highly transparent plastic base films, of which those using poly(ethylene terephthalate) films are more preferred.

Exemplary releasing agents include, but are not particularly limited to, silicone releasing agents, fluorine releasing agents, and long-chain alkyl releasing agents. Each of different releasing agents may be used alone or in combination. A cover film which has a releasable surface by the action of a releasing agent may be formed typically according to a common procedure.

The thickness of the cover film is not particularly limited, but may be selected within ranges of, for example, 12 to 250 $\mu$m, and preferably 20 to 200 $\mu$m, from the viewpoints of handling easiness and economical efficiency. The cover film may have either a single-layer structure or a multilayer structure.

[Polymer Article (Surface-Roughened Sheet)]

A polymer article according to an embodiment may be produced by forming a layer of an immiscible material-containing polymerizable composition on at least one side of a monomer-absorptive layer that is capable of absorbing a polymerizable monomer, in which the immiscible material-containing polymerizable composition contains the polymerizable monomer and an immiscible material that is immiscible with a polymer as a polymerization product of the polymerizable monomer; whereby allowing the immiscible material to migrate in the immiscible material-containing polymerizable composition layer, to yield a polymerizable composition layer containing an unevenly distributed immiscible material that is enriched in a layer surface or the vicinity thereof (at an interface, or in the vicinity thereof, opposite to the other interface with the monomer-absorptive layer); and carrying out polymerization of the polymerizable composition layer containing the unevenly distributed immiscible material to form a polymer layer containing an unevenly distributed immiscible material that is enriched in a layer surface or the vicinity thereof (at an interface, or in the vicinity thereof, opposite to the other interface with the monomer-absorptive layer) to thereby give a multilayer structure of a monomer-absorptive layer and a polymer layer containing an unevenly distributed immiscible material. According to another embodiment, a polymer article may be produced by preparing a multilayer assembly including a monomer-absorptive sheet, a layer of an immiscible material-containing polymerizable composition arranged on a monomer-absorptive surface of the monomer-absorptive sheet, and a cover film arranged on the immiscible material-containing polymerizable composition layer, in which the monomer absorptive layer is capable of absorbing a polymerizable monomer, and the immiscible material-containing polymerizable composition contains the polymerizable monomer and an immiscible material that is immiscible with a polymer as a polymerization product of the polymerizable monomer; allowing the immiscible material to migrate in the immiscible material-containing polymerizable composition layer, to form a polymerizable composition layer containing an unevenly distributed immiscible material that is enriched in a layer surface, or the vicinity thereof, facing the cover film; and carrying out polymerization of the polymerizable composition layer containing the unevenly distributed immiscible material, to form a polymer layer containing an unevenly distributed immiscible material that is enriched at an interface, or in the vicinity thereof, opposite to the other interface with the monomer-absorptive layer (in a layer surface, or the vicinity thereof, facing the cover film) to thereby give a multilayer structure of the monomer-absorptive layer and the polymer layer containing the unevenly distributed immiscible material. Such polymer articles and surface-roughened sheets may each further include one or more other layers such as intermediate layers and under coats.

The polymerization conditions of the polymerizable composition layer containing the unevenly distributed immiscible material are not particularly limited, as long as the polymerizable composition layer containing the unevenly distributed immiscible material is polymerized and cured to give a polymer layer containing an unevenly distributed immiscible material. Exemplary polymerization conditions include source of light or heat, energy of irradiation or heat, procedure of irradiation or heating, time (duration) of irradiation or heating, initiation time of irradiation or heating, and termination time of irradiation or heating.

By way of example, a surface-roughened sheet composed of a polymer article according to the present invention may be produced by applying an active energy ray, such as an ultraviolet ray, to the specific multilayer assembly using particles as the immiscible material and further using a polymerizable monomer. The specific multilayer assembly herein includes a releasable cover film, a particle-containing photopolymerizable composition layer, and a monomer-absorptive sheet, in which the particle-containing photopolymerizable composition layer is arranged on a monomer-absorptive surface of the monomer-absorptive sheet and has a surface protected by the releasable cover film.

This surface-roughened sheet may be produced, for example, by (i) forming the specific multilayer assembly; and (ii) applying light to the specific multilayer assembly.

The specific multilayer assembly may be prepared, for example, applying a particle-containing photopolymerizable composition to a releasable surface of a cover film on at least one side thereof, to form a particle-containing photopolymerizable composition layer; and laminating the resulting article to a monomer-absorptive sheet having a monomer-absorptive layer so that the particle-containing photopolymerization composition layer is in contact with the monomer-absorptive layer.

The conditions for the light irradiation to the specific multilayer assembly are not particularly limited, as long as the particle-containing photopolymerizable composition layer in the specific multilayer assembly is cured, and a rough structure is formed in a surface of the photo-polymerized/cured layer facing the cover film. Exemplary light irradiation conditions include light source, irradiation energy, irradiation procedure, irradiation time (duration), irradiation initiation time, and irradiation termination time. Accordingly, the light irradiation to the specific multilayer assembly may be conducted immediately after the preparation of the specific multilayer assembly or after a certain time interval.

Exemplary light irradiation procedures include application of ultraviolet rays typically using a black-light lamp, a chemical lamp, a high-pressure mercury lamp, or a metal halide lamp. Exemplary heating procedures include known heating procedures such as heating with an electric heater and heating with electromagnetic waves such as infrared rays.

Absorption of a polymerizable monomer by the monomer-absorptive layer occurs at the time when an immiscible material-containing polymerizable composition layer or particle-containing photopolymerization composition layer is formed on the monomer-absorptive surface. The absorption may also occur in a time between the formation and polymerization of the immiscible material-containing polymerizable composition layer or particle-containing photopolymerization composition layer. For example, it may occur in a time between the preparation of the specific multilayer assembly and light irradiation thereto. The absorption may also occur in a time during polymerization of the immiscible material-containing polymerizable composition layer or particle-containing photopolymerization composition layer. By way of example, it may occur in a time during the curing of the particle-containing photopolymerizable composition layer via light irradiation.

In the polymer layer containing the unevenly distributed immiscible material of the polymer article, the immiscible material is distributed (enriched) in a surface or the vicinity thereof (at an interface, or in the vicinity thereof, opposite to the other interface with the monomer-absorptive layer). Specifically, the immiscible material is enriched in a region ranging from, in a thickness direction, the surface (an interface opposite to the other interface with the monomer-absorptive layer) or layer surface (an interface opposite to the other interface with the monomer-absorptive layer) to 50% or less (preferably 40% or less, and more preferably 30% or less) of the total thickness. This is probably because, when the immiscible material-containing polymerizable composition layer that will constitute a polymer layer containing an unevenly distributed immiscible material is arranged in contact with the monomer-absorptive layer, at least one of monomer components in the immiscible material-containing polymerizable composition layer is absorbed by the monomer-absorptive layer, whereby the immiscible material migrates in the immiscible material-containing polymerizable composition layer.

Consequently, the longer is the duration from the contact of the immiscible material-containing polymerizable composition layer with the monomer-absorptive layer to the completion of polymerization, the more preferable. When the initiation of polymerization can be easily controlled through light irradiation, the light irradiation is preferably carried out after a lapse of, for example, 1 second or more, preferably 5 seconds or more, and more preferably 10 seconds or more (generally within 24 hours) after the contact.

The thickness of a region in the polymer layer containing the unevenly distributed immiscible material where the immiscible material is distributed (enriched) (hereinafter also referred to as an "immiscible material-enriched region") can be controlled by regulating the amount of the immiscible material to be contained in the resulting polymer layer. As used herein the "thickness" of a immiscible material-enriched region refers typically to the depth (height) in a thickness direction of an inner region where the immiscible material is distributed from the layer surface, with respect to the total thickness in a thickness direction from the layer surface; or the depth (height) in a thickness direction of an inner region where the immiscible material is distributed from an interface opposite to the other interface with the monomer-absorptive layer, with respect to the total thickness in a thickness direction from the interface opposite to the other interface with the monomer-absorptive layer.

In a region, where the immiscible material is enriched, in the polymer layer containing the unevenly distributed immiscible material the immiscible material coexists with a polymer component of the polymer layer. Thus, the interface or in the vicinity thereof (surface or the vicinity thereof), where the immiscible material is enriched, in the polymer layer opposite to the other interface with the monomer-absorptive layer can exhibit properties derived from the polymer component of the polymer layer, inherent properties of the immiscible material, and properties derived from the uneven distribution of the immiscible material in the polymer layer containing the unevenly distributed immiscible material.

Exemplary properties derived from the polymer component of the polymer layer containing the unevenly distributed immiscible material include tackiness (pressure-sensitive adhesion) of a pressure-sensitive adhesive component if used as the polymer component. Exemplary inherent properties of the immiscible material include specific functions of an immiscible material, if used, such as expansibility, shrinkability, absorptivity, divergent ability, and electroconductivity. Exemplary properties derived from the uneven distribution of the immiscible material in the polymer layer include control of the tackiness (pressure-sensitive adhesion) by regulating the content of the immiscible material when a pressure-sensitive adhesive component is used as the polymer component; graphical design functions such as coloring; and impartment of a roughened surface and properties derived therefrom when particles are used as the immiscible material, in which exemplary properties derived from the roughened surface include removability, anti-blocking properties, antiglare properties, graphical design functions, and light scattering properties.

More specifically but by way of example, use of a pressure-sensitive adhesive component as a polymer component of the polymer layer containing the unevenly distributed immiscible material and concurrent use of particles as the immiscible material gives a polymer article that has particle-induced surface asperities (surface roughness) in the polymer layer containing the unevenly distributed immiscible material and exhibits tackiness and releasability (anti-blocking properties) on the surface of the polymer layer. The polymer article can be controlled in tackiness of the surface of the polymer layer containing the unevenly distributed immiscible material by regulating the amount of particles to be contained. Additionally, it can be controlled to have a very low or no tackiness.

The size and shape of surface asperities of a polymer layer, if containing unevenly distributed particles as the immiscible material, in the polymer article, may be controlled typically by regulating the diameters of the particles, the thickness of the polymer layer containing the unevenly distributed immiscible material, the polymerization procedure, and the initiation time and/or termination time of polymerization. Typically, the size and shape of asperities of a working surface of the surface-roughened sheet may be controlled, for example, by regulating the diameter of particles, the thickness of the photopolymerized/cured layer, the light irradiation procedure to the specific multilayer assembly, and/or the initiation time and/or termination time of light irradiation. Particles, if contained in the polymer layer containing the unevenly distributed immiscible material (e.g., particles contained in a photo-polymerized/cured layer containing unevenly distributed particles) may be fully included in the layer or part of which may be exposed from the layer (e.g., heads of particles may be exposed from the layer). Specifically, part of the particles may be exposed from the surface of the polymer layer containing the unevenly distributed immiscible material in the polymer article or from the working surface of the surface-roughened sheet.

The polymer articles and surface-roughened sheets may each be in the form of a wound roll or a multilayer sheet composed of two or more stacked sheets. Specifically, the polymer articles and surface-roughened sheets may each be in the form typically of a tape or sheet.

Consequently, according to an embodiment of the present invention, a polymer article having a polymer layer containing an unevenly distributed immiscible material or a surface-roughened sheet having a rough structure on its working surface can be produced without evaporational removal of volatile components (e.g., solvents and organic compounds) contained in an immiscible material-containing polymerizable composition or in a particle-containing composition, even when a particle-containing photopolymerizable composition is used in the production as the immiscible material-containing polymerizable composition or the particle-containing composition.

The elastic modulus of the monomer-absorptive layer is not particularly limited, because the monomer-absorptive layer is not particularly limited herein, as long as capable of absorbing at least one of polymerizable monomers used in the immiscible material-containing polymerizable composition. Specifically, the monomer-absorptive layer can be any one including a layer having a low elastic modulus, such as a pressure-sensitive adhesive layer or a polymer layer; and a layer having a high elastic modulus, such as a plastic sheet, a hard coat layer, or a coloring coating layer, as long as capable of absorbing at least one of polymerizable monomers used in the immiscible material-containing polymerizable composition. Consequently, use of particles as the immiscible material imparts a rough structure to a surface of a layer to thereby give a surface-roughened sheet without limited by the elastic modulus of the sheet. Exemplary layers herein include a layer having a low elastic modulus, such as a pressure-sensitive adhesive layer or a polymer layer; and a layer having a high elastic modulus, such as a plastic sheet, a hard coat layer, or a colored coating layer.

When a monomer-absorptive polymer layer composed of a polymer is used as the monomer-absorptive layer, the gel fraction thereof is not particularly limited, as long as the layer is capable of absorbing at least one of polymerizable monomers used in the immiscible material-containing polymerizable composition. Accordingly, polymer articles can be obtained even if the monomer-absorptive polymer layer is cross-linked to a gel fraction of about 98% or even if it is little cross-linked to a gel fraction of, for example, 10% or less. Typically, a polymer article or a surface-roughened sheet can be produced when particles are used as the immiscible material and a monomer-absorptive polymer layer is used as the monomer-absorptive layer, or when a sheet having a polymer layer is used as the monomer-absorptive sheet, even if the monomer-absorptive polymer layer is cross-linked to a gel fraction of about 98% or even if it is little cross-linked to a gel fraction of, for example, 10% or less. Accordingly, the resulting surface-roughened sheet may have a polymer layer, as the monomer-absorptive layer, imparted with thermal stability and solvent resistance by allowing the polymer layer to have a high degree of cross-linking (e.g., a gel fraction of 90% or more). Alternatively, the resulting surface-roughened sheet can have varying surface roughness (surface asperities) by allowing the polymer layer to have a low degree of cross-linking (e.g., a gel fraction of 10% or less). In this case, for example, the size of asperities of the surface (the surface roughness) can be reduced by applying heat or a pressure thereto.

Additionally, according to the present invention, polymer articles can be obtained regardless of whether the monomer-absorptive layer is a hard (rigid) layer or a soft (flexible) layer. By way of example, when particles are used as the immiscible material, polymer articles or surface-roughened sheets can be produced regardless of whether the monomer-absorptive layer is a hard (rigid) layer or a soft (flexible) layer. Specifically, surface-roughened sheets can be produced regardless of mechanical properties (hardness) of the monomer-absorptive layer. Accordingly, use of a hard layer (e.g., a layer having a 100-percent modulus of 100 N/cm$^2$ or more) as the monomer-absorptive layer may enable use of the monomer-absorptive layer of the resulting surface-roughened sheet as a carrier (base). Use of a soft or flexible layer (e.g., a layer having a 100-percent modulus of 30 N/cm$^2$ or less) as the monomer-absorptive layer may enable use of the monomer-absorptive layer of the resulting surface-roughened sheet as a pressure-sensitive adhesive layer.

Polymer articles according to the present invention can be used in a variety of applications, because they can exhibit a variety of properties by controlling the type and amount of the immiscible material or the polymer type and thickness of the polymer layer containing the unevenly distributed immiscible material. Typically, surface-roughened sheets composed of polymer articles produced by using particles as the immiscible material can be advantageously employed typically in uses where graphical design functions are desired, uses where light scattering properties are desired, and uses where anti-blocking properties are desired.

EXAMPLES

The present invention will be illustrated in further detail with reference to several examples below. It should be noted, however, that the following examples are illustrated only by way of example and are never construed to limit the scope of the present invention.

(Preparation Example 1 of Photopolymerizable Syrupy)

A monomer mixture containing, as monomer components, 90 parts by weight of 2-ethylhexyl acrylate and 10 parts by weight of acrylic acid was mixed with 0.1 part by weight of a photoinitiator (trade name "Irgacure 651" supplied by Ciba Specialty Chemicals Corporation) in a four-necked separable flask equipped with a stirrer, a thermometer, a nitrogen-gas feeding tube, and a condenser tube, to give a homogeneous mixture, followed by nitrogen gas bubbling for one hour to remove dissolved oxygen. Polymerization was then conducted by applying an ultraviolet ray from the outside of the flask using a black-light lamp, and the lamp was turned out and nitrogen blowing was stopped at the time when the reaction mixture had an adequate viscosity, to give a partially polymerized composition (syrup) having a degree of polymerization of 7% (hereinafter also referred to as a "photopolymerizable syrup (A)").

(Preparation Example 2 of Photopolymerizable Syrupy)

A monomer mixture containing, as monomer components, 68 parts by weight of 2-ethylhexyl acrylate, 22 parts by weight of isobornyl acrylate, and 10 parts by weight of acrylic acid was mixed with 0.1 part by weight of a photoinitiator (trade name "Irgacure 651" supplied by Ciba Specialty Chemicals Corporation) in a four-necked separable flask equipped with a stirrer, a thermometer, a nitrogen-gas feeding tube, and a condenser tube, to give a homogeneous mixture, followed by nitrogen gas bubbling for one hour to remove dissolved oxygen. Polymerization was then conducted by applying an ultraviolet ray from the outside of the flask using a black-light lamp, and the lamp was turned out and nitrogen blowing was stopped at the time when the reaction mixture had an adequate viscosity, to give a partially polymerized composition (syrup) having a degree of polymerization of 7% (hereinafter also referred to as a "photopolymerizable syrup (B)").

(Preparation Example 3 of Photopolymerizable Syrupy)

A monomer mixture containing, as monomer components, 45 parts by weight of 2-ethylhexyl acrylate, 45 parts by weight of isobornyl acrylate, and 10 parts by weight of acrylic acid was mixed with 0.1 part by weight of a photoinitiator (trade name "Irgacure 651" supplied by Ciba Specialty Chemicals Corporation) in a four-necked separable flask equipped with a stirrer, a thermometer, a nitrogen-gas feeding tube, and a condenser tube, to give a homogeneous mixture, followed by nitrogen gas bubbling for one hour to remove dissolved oxygen. Polymerization was then conducted by applying an ultraviolet ray from the outside of the flask using a black-light lamp, and the lamp was turned out and nitrogen blowing was stopped at the time when the reaction mixture had an adequate viscosity, to give a partially polymerized composition (syrup) having a degree of polymerization of 7% (hereinafter also referred to as a "photopolymerizable syrup (C)").

(Preparation Example 4 of Photopolymerizable Syrupy)

In 100 parts by weight of 2-ethylhexyl acrylate as a monomer component were dissolved 21 parts by weight of a maleic-acid-modified SEBS (trade name "FG-1901X" supplied by Kraton Polymers Japan Ltd.) and 12 parts by weight of a SEBS (trade name "G1726" supplied by Kraton Polymers Japan Ltd.) as immiscible materials, followed by dissolution of 0.24 part by weight of a product under the trade name of "Irgacure 651" (supplied by Ciba Specialty Chemicals Corporation) and 0.24 part by weight of a product under the trade name of "Irgacure 184" (supplied by Ciba Specialty Chemicals Corporation) as photoinitiators, to give a homogeneous, cloudy, viscous liquid (syrup) (hereinafter also referred to as a "photopolymerizable syrup (D)").

(Preparation Example 5 of Photopolymerizable Syrupy)

A monomer mixture containing, as monomer components, 95 parts by weight of butyl acrylate and 5 parts by weight of acrylic acid was mixed with 0.35 parts by weight of a photoinitiator (trade name "Irgacure 651" supplied by Ciba Specialty Chemicals Corporation) and 0.35 parts by weight of another photoinitiator (trade name "Irgacure 184" supplied by Ciba Specialty Chemicals Corporation) in a four-necked separable flask equipped with a stirrer, a thermometer, a nitrogen-gas feeding tube, and a condenser tube, to give a homogeneous mixture, followed by nitrogen gas bubbling for one hour to remove dissolved oxygen. Polymerization was then conducted by applying an ultraviolet ray from the outside of the flask using a black-light lamp, and the lamp was turned out and nitrogen blowing was stopped at the time when the reaction mixture had an adequate viscosity, to give a partially polymerized composition (syrup) having a degree of polymerization of 7% (hereinafter also referred to as a "photopolymerizable syrup (E)").

(Preparation Example 1 of Particle-Containing Photopolymerizable Composition)

A particle-containing photopolymerizable composition (hereinafter also referred to as a "particle-containing photopolymerizable composition (A)") was prepared by homogenously mixing 100 parts by weight of the photopolymerizable syrup (A) with 30 parts by weight of cross-linked acrylic particles having an average particle diameter of 5 $\mu$m (trade name "MX-500" supplied by Soken Chemical & Engineering Co., Ltd.) and 0.1 part by weight of 1,6-hexanediol diacrylate.

(Preparation Example 2 of Particle-Containing Photopolymerizable Composition)

A particle-containing photopolymerizable composition (hereinafter also referred to as a "particle-containing photopolymerizable composition (B)") was prepared by homogeneously mixing 100 parts by weight of the photopolymerizable syrup (A) with 30 parts by weight of cross-linked acrylic particles having an average particle diameter of 20 $\mu$m (trade name "MX-2000" supplied by Soken Chemical & Engineering Co., Ltd.) and 0.1 part by weight of 1,6-hexanediol diacrylate.

(Preparation Example 3 of Particle-Containing Photopolymerizable Composition)

A particle-containing photopolymerizable composition (hereinafter also referred to as a "particle-containing photopolymerizable composition (C)") was prepared by homogeneously mixing 100 parts by weight of the photopolymerizable syrup (A) with 30 parts by weight of cross-linked acrylic particles having an average particle diameter of 5 $\mu$m (trade name "MX-500" supplied by Soken Chemical & Engineering Co., Ltd.) and 1 part by weight of 1,6-hexanediol diacrylate.

(Preparation Example 4 of Particle-Containing Photopolymerizable Composition)

A particle-containing photopolymerizable composition (hereinafter also referred to as a "particle-containing photopolymerizable composition (D)") was prepared by homogeneously mixing 100 parts by weight of the photopolymerizable syrup (B) with 30 parts by weight of cross-linked acrylic particles having an average particle diameter of 5 $\mu$m (trade name "MX-500" supplied by Soken Chemical & Engineering Co., Ltd.).

(Preparation Example 5 of Particle-Containing Photopolymerizable Composition)

A particle-containing photopolymerizable composition (hereinafter also referred to as a "particle-containing photopolymerizable composition (E)") was prepared by homogeneously mixing 100 parts by weight of the photopolymerizable syrup (B) with 30 parts by weight of cross-linked acrylic particles having an average particle diameter of 5 $\mu$m (trade name "MX-500" supplied by Soken Chemical & Engineering Co., Ltd.) and 0.1 part by weight of 1,6-hexanediol diacrylate.

(Preparation Example 6 of Particle-Containing Photopolymerizable Composition)

A particle-containing photopolymerizable composition (hereinafter also referred to as a "particle-containing photopolymerizable composition (F)") was prepared by homogeneously mixing 100 parts by weight of the photopolymerizable syrup (B) with 30 parts by weight of cross-linked acrylic particles having an average particle diameter of 5 $\mu$m (trade name "MX-500" supplied by Soken Chemical & Engineering Co., Ltd.) and 0.1 part by weight of 1,6-hexanediol diacrylate.

(Preparation Example 7 of Particle-Containing Photopolymerizable Composition)

A particle-containing photopolymerizable composition (hereinafter also referred to as a "particle-containing photopolymerizable composition (G)") was prepared by homogeneously mixing 100 parts by weight of the photopolymerizable syrup (C) with 30 parts by weight of cross-linked acrylic particles having an average particle diameter of 5 $\mu$m (trade name "MX-500" supplied by Soken Chemical & Engineering Co., Ltd.) and 0.1 part by weight of 1,6-hexanediol diacrylate.

(Preparation Example 8 of Particle-Containing Photopolymerizable Composition)

A particle-containing photopolymerizable composition (hereinafter also referred to as a "particle-containing photopolymerizable composition (H)") was prepared by homogeneously mixing 100 parts by weight of the photopolymerizable syrup (A) with 30 parts by weight of cross-linked acrylic particles having an average particle diameter of 5 $\mu$m (trade name "MX-500" supplied by Soken Chemical & Engineering Co., Ltd.).

(Preparation Example 9 of Particle-Containing Photopolymerizable Composition)

A particle-containing photopolymerizable composition (hereinafter also referred to as a "particle-containing photopolymerizable composition (I)") was prepared by homogeneously mixing 100 parts by weight of the photopolymerizable syrup (C) with 30 parts by weight of cross-linked acrylic particles having an average particle diameter of 5 $\mu$m (trade name "MX-500" supplied by Soken Chemical & Engineering Co., Ltd.).

(Preparation Example 10 of Particle-Containing Photopolymerizable Composition)

A particle-containing photopolymerizable composition (hereinafter also referred to as a "particle-containing photopolymerizable composition (J)") was prepared by homogeneously mixing 100 parts by weight of the photopolymerizable syrup (C) with 30 parts by weight of cross-linked acrylic particles having an average particle diameter of 5 $\mu$m (trade name "MX-500" supplied by Soken Chemical & Engineering Co., Ltd.) and 0.1 part by weight of 1,6-hexanediol diacrylate.

(Preparation Example 11 of Particle-Containing Photopolymerizable Composition)

A particle-containing photopolymerizable composition (hereinafter also referred to as a "particle-containing photopolymerizable composition (K)") was prepared by homogeneously mixing 100 parts by weight of the photopolymerizable syrup (A) with 10 parts by weight of a silicone powder having an average particle diameter of 5 $\mu$m (trade name "KNP-600" supplied by Shin-Etsu Silicones (a division of Shin-Etsu Chemical Co., Ltd.)) and 0.1 part by weight of 1,6-hexanediol diacrylate.

(Preparation Example 12 of Particle-Containing Photopolymerizable Composition)

A particle-containing photopolymerizable composition (hereinafter also referred to as a "particle-containing photopolymerizable composition (L)") was prepared by homogeneously mixing 100 parts by weight of the photopolymerizable syrup (A) with 10 parts by weight of a silicone powder having an average particle diameter of 2 $\mu$m (trade name "KNP-590" supplied by Shin-Etsu Silicones (a division of Shin-Etsu Chemical Co., Ltd.)) and 0.1 part by weight of 1,6-hexanediol diacrylate.

(Preparation Example 13 of Particle-Containing Photopolymerizable Composition)

A particle-containing photopolymerizable composition (hereinafter also referred to as a "particle-containing photopolymerizable composition (M)") was prepared by homogeneously mixing 100 parts by weight of the photopolymerizable syrup (A) with 5 parts by weight of a hydrophobic fumed silica (trade name "AEROSIL R8200" supplied by Nippon Aerosil Co., Ltd.) and 0.1 part by weight of 1,6-hexanediol diacrylate.

(Preparation Example 14 of Particle-Containing Photopolymerizable Composition)

A particle-containing photopolymerizable composition (hereinafter also referred to as a "particle-containing photopolymerizable composition (N)") was prepared by homogeneously mixing 100 parts by weight of the photopolymerizable syrup (A) with 5 parts by weight of a fine powdery silica of micron size (trade name "Sylophobic 4004" supplied by Fuji Silysia Chemical Ltd.) and 0.1 part by weight of 1,6-hexanediol diacrylate.

(Preparation Example 15 of Particle-Containing Photopolymerizable Composition)

A particle-containing photopolymerizable composition (hereinafter also referred to as a "particle-containing photopolymerizable composition (O)") was prepared by homogeneously mixing 100 parts by weight of the photopolymerizable syrup (A) with 1 part by weight of cross-linked acrylic particles having an average particle diameter of 5 $\mu$m (cross-linked acrylic monodisperse particles) (trade name "MX-500" supplied by Soken Chemical & Engineering Co., Ltd.) and 0.1 part by weight of 1,6-hexanediol diacrylate.

(Preparation Example 16 of Particle-Containing Photopolymerizable Composition)

A particle-containing photopolymerizable composition (hereinafter also referred to as a "particle-containing photopolymerizable composition (P)") was prepared by homogeneously mixing 100 parts by weight of the photopolymerizable syrup (A) with 5 parts by weight of cross-linked acrylic particles having an average particle diameter of 5 μm (cross-linked acrylic monodisperse particles) (trade name "MX-500" supplied by Soken Chemical & Engineering Co., Ltd.) and 0.1 part by weight of 1,6-hexanediol diacrylate.

(Preparation Example 17 of Particle-Containing Photopolymerizable Composition)

A particle-containing photopolymerizable composition (hereinafter also referred to as a "particle-containing photopolymerizable composition (Q)") was prepared by homogeneously mixing 100 parts by weight of the photopolymerizable syrup (A) with 10 parts by weight of cross-linked acrylic particles having an average particle diameter of 5 μm (cross-linked acrylic monodisperse particles) (trade name "MX-500" supplied by Soken Chemical & Engineering Co., Ltd.) and 0.1 part by weight of 1,6-hexanediol diacrylate.

(Preparation Example 18 of Particle-Containing Photopolymerizable Composition)

A particle-containing photopolymerizable composition (hereinafter also referred to as a "particle-containing photopolymerizable composition (R)") was prepared by homogeneously mixing 100 parts by weight of the photopolymerizable syrup (E) with 10 parts by weight of cross-linked acrylic particles having an average particle diameter of 5 μm (cross-linked acrylic monodisperse particles) (trade name "MX-500" supplied by Soken Chemical & Engineering Co., Ltd.) and 0.1 part by weight of 1,6-hexanediol diacrylate.

(Preparation Example 1 of Immiscible Material-Containing Photopolymerizable Composition)

An immiscible material-containing photopolymerizable composition (hereinafter also referred to as an "immiscible material-containing photopolymerizable composition (A)") was prepared by homogeneously mixing 100 parts by weight of the photopolymerizable syrup (D) with 8.3 parts by weight of acrylic acid and 0.08 part by weight of 1,6-hexanediol diacrylate.

(Preparation Example of Particle-Containing Autopolymerizable Composition)

A small amount of the photopolymerizable syrup (A) was added dropwise to an excess of hexane cooled on ice-brine, to precipitate an acrylic polymer. The precipitated acrylic polymer was recovered, washed with hexane several times, and dried in vacuo. The resulting acrylic polymer was dissolved in a 9:1 monomer mixture of 2-ethylhexyl acrylate and acrylic acid to a polymer concentration (solids content) of 7% and thereby yielded a syrup containing no photoinitiator. Next, 100 parts by weight of the syrup was homogeneously mixed with 10 parts by weight of cross-linked acrylic particles having an average particle diameter of 5 μm (cross-linked acrylic monodisperse particles) (trade name "MX-500" supplied by Soken Chemical & Engineering Co., Ltd.) and 1 part by weight of dipentaerythritol hexaacrylate, and then further homogenously mixed with cumene hydroperoxide (trade name "Percumyl H-80" supplied by NOF Corporation). Next, 2 parts by weight (solids content) of a vanadyl acetylacetonate solution (a 2% concentration solution of vanadyl acetylacetonate in acrylic acid) was added thereto in small portions with stirring, to give a particle-containing autopolymerizable (room-temperature-curable) composition (hereinafter also referred to as a "particle-containing autopolymerizable composition (A)").

(Cover Film)

A cover film used herein was a biaxially oriented poly(ethylene terephthalate) film 38 μm thick having a silicone-releasable surface on one side thereof (trade name "MRN 38" supplied by Mitsubishi Polyester Film GmbH (Mitsubishi Plastics, Inc.)).

(Preparation Example 1 of Base-Supported Monomer-Absorptive Sheet)

A photopolymerizable syrup composition (hereinafter also referred to as a "photopolymerizable syrup composition (A)") was prepared by homogeneously mixing 100 parts by weight of the photopolymerizable syrup (A) with 0.1 part by weight of 1,6-hexanediol diacrylate, and the composition was applied to one side of a biaxially oriented poly(ethylene terephthalate) film 38 μm thick, to form a layer of photopolymerizable syrup composition that would have a thickness after curing of 300 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (A)").

(Preparation Example 2 of Base-Supported Monomer-Absorptive Sheet)

A photopolymerizable syrup composition (hereinafter also referred to as a "photopolymerizable syrup composition (B)") was prepared by homogeneously mixing 100 parts by weight of the photopolymerizable syrup (B) with 0.1 part by weight of 1,6-hexanediol diacrylate, and the composition was applied to one side of a biaxially oriented poly (ethylene terephthalate) film 38 $\mu$m thick, to form a layer of photopolymerizable syrup composition that would have a thickness after curing of 75 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (B)").

(Preparation Example 3 of Base-Supported Monomer-Absorptive Sheet)

A photopolymerizable syrup composition (hereinafter also referred to as a "photopolymerizable syrup composition (C)") was prepared by homogeneously mixing 100 parts by weight of the photopolymerizable syrup (C) with 0.1 part by weight of 1,6-hexanediol diacrylate, and the composition was applied to one side of a biaxially oriented poly (ethylene terephthalate) film 38 $\mu$m thick, to form a layer of photopolymerizable syrup composition that would have a thickness after curing of 75 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (C)").

(Preparation Example 4 of Base-Supported Monomer-Absorptive Sheet)

A photopolymerizable syrup composition (hereinafter also referred to as a "photopolymerizable syrup composition (D)") was prepared by homogeneously mixing 100 parts by weight of the photopolymerizable syrup (B) with 0.1 part by weight of 1,6-hexanediol diacrylate, and the composition was applied to one side of a biaxially oriented poly (ethylene terephthalate) film 38 $\mu$m thick, to form a layer of photopolymerizable syrup composition that would have a thickness after curing of 75 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (D)").

(Preparation Example 5 of Base-Supported Monomer-Absorptive Sheet)

The photopolymerizable syrup (C) was applied to one side of a biaxially oriented poly(ethylene terephthalate) film 38 $\mu$m thick to form a photopolymerizable syrup layer that would have a thickness after curing of 75 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (E)").

(Preparation Example 6 of Base-Supported Monomer-Absorptive Sheet)

A photopolymerizable composition was prepared by homogeneously mixing 100 parts by weight of the photopolymerizable syrup composition (A) with 0.1 part by weight of 1,6-hexanediol diacrylate, and the composition was applied to one side of a biaxially oriented poly(ethylene terephthalate) film 38 $\mu$m thick, to form a layer of photopolymerizable syrup composition that would have a thickness after curing of 60 $\mu$m. Next, the layer was laminated to the releasable surface of the cover film and then cured by applying an ultraviolet ray at an intensity of 5 mW/cm$^2$ for three

minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (F)").

(Preparation Example 7 of Base-Supported Monomer-Absorptive Sheet)

The photopolymerizable syrup (B) was applied to one side of a biaxially oriented poly(ethylene terephthalate) film 38 $\mu$m thick, to form a photopolymerizable syrup layer that would have a thickness after curing of 70 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (G)").

(Preparation Example 8 of Base-Supported Monomer-Absorptive Sheet)

The photopolymerizable syrup (A) was applied to one side of a biaxially oriented poly(ethylene terephthalate) film 38 $\mu$m thick, to form a photopolymerizable syrup layer that would have a thickness after curing of 56 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (H)").

(Preparation Example 9 of Base-Supported Monomer-Absorptive Sheet)

A photopolymerizable syrup composition was prepared by homogeneously mixing 100 parts by weight of the photopolymerizable syrup (B) with 0.1 part by weight of 1,6-hexanediol diacrylate, and the composition was applied to one side of a biaxially oriented poly(ethylene terephthalate) film 38 $\mu$m thick, to form a layer of photopolymerizable syrup composition that would have a thickness after curing of 70 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (I)").

(Preparation Example 10 of Base-Supported Monomer-Absorptive Sheet)

A photopolymerizable syrup composition was prepared by homogeneously mixing 100 parts by weight of the photopolymerizable syrup (C) with 0.1 part by weight of 1,6-hexanediol diacrylate, and the composition was applied to one side of a biaxially oriented poly(ethylene terephthalate) film 38 $\mu$m thick, to form a layer of photopolymerizable syrup composition that would have a thickness after curing of 73 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (J)").

(Preparation Example 11 of Base-Supported Monomer-Absorptive Sheet)

A photopolymerizable syrup composition (hereinafter also referred to as a "photopolymerizable syrup composition (D)") was prepared by homogeneously mixing 100 parts by weight of the photopolymerizable syrup (B) with 0.1 part by weight of 1,6-hexanediol diacrylate, and the composition was applied to one side of a biaxially oriented poly (ethylene terephthalate) film 38 $\mu$m thick, to form a layer of photopolymerizable syrup composition that would have a thickness after curing of 65 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (K)").

(Preparation Example 12 of Base-Supported Monomer-Absorptive Sheet)

An aliquot (100 parts by weight) of the photopolymerizable syrup (C) was applied to one side of a biaxially oriented poly(ethylene terephthalate) film 38 $\mu$m thick, to form a photopolymerizable syrup layer that would have a thickness after curing of 71 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (L)").

(Preparation Example 13 of Base-Supported Monomer-Absorptive Sheet)

A photopolymerizable syrup composition was prepared by homogeneously mixing 100 parts by weight of the photopolymerizable syrup (A) with 0.1 part by weight of 1,6-hexanediol diacrylate, and the composition was applied to one side of a biaxially oriented poly(ethylene terephthalate) film 38 $\mu$m thick, to form a layer of photopolymerizable syrup composition that would have a thickness after curing of 58 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (M)").

(Preparation Example 14 of Base-Supported Monomer-Absorptive Sheet)

A photopolymerizable syrup composition was prepared by homogeneously mixing 100 parts by weight of the photopolymerizable syrup (C) with 0.1 part by weight of 1,6-hexanediol diacrylate, and the composition was applied to one side of a biaxially oriented poly(ethylene terephthalate) film 38 $\mu$m thick, to form a layer of photopolymerizable syrup composition that would have a thickness after curing of 75 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (N)").

(Preparation Example 15 of Base-Supported Monomer-Absorptive Sheet)

A photopolymerizable syrup composition was prepared by homogeneously mixing 100 parts by weight of the photopolymerizable syrup (A) with 0.1 part by weight of 1,6-hexanediol diacrylate, and the composition was applied to one side of a biaxially oriented poly(ethylene terephthalate) film 38 $\mu$m thick, to form a layer of photopolymerizable syrup composition that would have a thickness after curing of 55 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (O)").

(Preparation Example 16 of Base-Supported Monomer-Absorptive Sheet)

The photopolymerizable syrup (B) was applied to one side of a biaxially oriented poly(ethylene terephthalate) film 38 $\mu$m thick, to form a photopolymerizable syrup layer that would have a thickness after curing of 70 $\mu$m. Next, the layer was laminated to the releasable surface of the cover film and then cured by applying an ultraviolet ray at an intensity of 5 mW/cm$^2$ for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (P)").

(Preparation Example 17 of Base-Supported Monomer-Absorptive Sheet)

A photopolymerizable syrup composition was prepared by homogeneously mixing 100 parts by weight of the photopolymerizable syrup (A) with 0.1 part by weight of 1,6-hexanediol diacrylate, and the composition was applied to one side of a biaxially oriented poly(ethylene terephthalate) film 38 $\mu$m thick, to form a photopolymerizable syrup layer that would have a thickness after curing of 30 $\mu$m. Next, the layer was laminated to the releasable surface of the cover film and then cured by applying an ultraviolet ray at an intensity of 5 mW/cm² for three minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (Q)").

(Preparation Example 18 of Base-Supported Monomer-Absorptive Sheet)

A photopolymerizable syrup composition was prepared by homogeneously mixing 100 parts by weight of the photopolymerizable syrup (A) with 0.1 part by weight of 1,6-hexanediol diacrylate, and the composition was applied to one side of a biaxially oriented poly(ethylene terephthalate) film 38 μm thick, to form a photopolymerizable syrup layer that would have a thickness after curing of 85 μm. Next, the layer was laminated to the releasable surface of the cover film and then cured by applying an ultraviolet ray at an intensity of 5 mW/cm² for five minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (R)").

(Preparation Example 19 of Base-Supported Monomer-Absorptive Sheet)

A homogeneous, cloudy, viscous liquid (syrup) was prepared by mixing 100 parts by weight of isostearyl acrylate (trade name "S-1800A" supplied by SHIN-NAKAMURA CHEMICAL CO., LTD. as a monomer component; 21 parts by weight of a maleic-acid-modified SEBS (trade name "FG-1901X" supplied by Kraton Polymers Japan Ltd.) and 12 parts by weight of SEBS (trade name "G1726" supplied by Kraton Polymers Japan Ltd.) both as immiscible materials; and 0.24 part by weight of a product under the trade name of "Irgacure 651" (supplied by Ciba Specialty Chemicals Corporation) and 0.24 part by weight of a product under the trade name of "Irgacure 184" (supplied by Ciba Specialty Chemicals Corporation) both as photoinitiators.
Next, a photopolymerizable syrup composition was prepared by homogenously mixing 100 parts by weight of the syrup and 0.08 part by weight of 1,6-hexanediol diacrylate, and the composition was applied to one side of a biaxially oriented poly(ethylene terephthalate) film 38 μm thick, to form a photopolymerizable syrup layer that would have a thickness after curing of 80 μm. Next, the layer was laminated to the releasable surface of the cover film and then cured by applying an ultraviolet ray at an intensity of 5 mW/cm² for ten minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (S)").

(Preparation Example 20 of Base-Supported Monomer-Absorptive Sheet)

A homogeneous, cloudy, viscous liquid (syrup) was prepared by mixing 100 parts by weight of 2-ethylhexyl acrylate as a monomer component; 21 parts by weight of a maleic-acid-modified SEBS (trade name "FG-1901X" supplied by Kraton Polymers Japan Ltd.) and 12 parts by weight of a SEBS (trade name "G1726" supplied by Kraton Polymers Japan Ltd.) both as immiscible materials; and 0.24 part by weight of a product under the trade name of "Irgacure 651" (supplied by Ciba Specialty Chemicals Corporation) and 0.24 part by weight of a product under the trade name of "Irgacure 184" (supplied by Ciba Specialty Chemicals Corporation) both as photoinitiators.
Next, a photopolymerizable syrup composition was prepared by homogenously mixing 100 parts by weight of the syrup with 8.3 parts by weight of acrylic acid and 0.08 part by weight of 1,6-hexanediol diacrylate, and the composition was applied to one side of a biaxially oriented poly(ethylene terephthalate) film 38 μm thick, to form a photopolymerizable syrup layer that would have a thickness after curing of 60 μm. Next, the photopolymerizable syrup layer was laminated to the releasable surface of the cover film and then cured by applying an ultraviolet ray at an intensity of 5 mW/cm² for eight minutes using a black-light lamp to form a monomer-absorptive layer. Thus there was prepared a base-supported monomer-absorptive sheet whose monomer-absorptive layer was protected on its surface by the cover film (hereinafter also referred to as a "base-supported monomer-absorptive sheet (T)").

(Preparation Example 21 of Base-Supported Monomer-Absorptive Sheet)

A base-supported monomer-absorptive sheet (hereinafter also referred to as a "base-supported monomer-absorptive sheet (U)") was prepared by applying an acrylic pressure-sensitive adhesive to a thickness of 30 μm to one side of a biaxially oriented poly(ethylene terephthalate) film 38 μm thick, and laminating an ether urethane elastomer sheet (trade name "Sheedom 70A" supplied by Sheedom Co., Ltd.) 100 μm thick thereto.

(Preparation Example 22 of Base-Supported Monomer-Absorptive Sheet)

In a polymerization reactor was placed a composition containing 95 parts by weight of n-butyl acrylate, 5 parts by weight of acrylic acid, 0.2 part by weight (solids content) of benzoyl peroxide (trade name "NYPER BW" supplied by NOF Corporation) as a peroxide, and 67 parts by weight of toluene; and nitrogen was injected into the reactor for one hour while stirring the composition in the reactor, to remove oxygen from the reaction system. While further injecting nitrogen and controlling the temperature of the composition at a constant temperature of 62°C, a polymerization reaction was conducted for six hours. The temperature control was conducted by heating or cooling the reactor and/or by cooling the composition via feeding of small portions of toluene into the reactor.

After a lapse of six hours, another portion of toluene was further added so that the total amount with the amount of toluene used for the temperature control was 82.7 parts by weight, and the temperature of the composition was then raised to 90°C, followed by a polymerization reaction for further four hours.

After the completion of polymerization reaction, 83.3 parts by weight of toluene was fed into the polymerization reactor while cooling the reactor, the composition was then cooled to room temperature (23°C) and thereby yielded a solution of an acrylic polymer having a weight-average molecular weight of about $50 \times 10^4$.

Next, an acrylic composition was prepared by mixing 100 parts by weight (solids content) of the acrylic polymer solution with 3 parts by weight (solids content) of a crosslinking agent (trade name "Coronate L" supplied by Nippon Polyurethane Industry Co., Ltd.) and 1.5 parts by weight (solids content) of another crosslinking agent (trade name "Super Beckamine") supplied by Dainippon Ink & Chemicals, Inc.

The acrylic composition was applied to one side of a biaxially oriented poly(ethylene terephthalate) film 38 μm thick and dried with a hot air dryer at 130°C for five minutes to form an acrylic polymer layer having a thickness of 25 μm. The acrylic polymer layer was laminated to the releasable surface of the cover film and then left stand in an atmosphere at a temperature of 40°C for five days. Thus there was prepared a base-supported monomer-absorptive sheet whose monomer-absorptive layer was protected on its surface by the cover film (hereinafter also referred to as a "base-supported monomer-absorptive sheet (V)").

(Preparation Example 23 of Base-Supported Monomer-Absorptive Sheet)

A monomer mixture was prepared by homogeneously mixing, in a reactor, 88 parts by weight of butyl acrylate, 5 parts by weight of acrylic acid, 5 parts by weight of cyclohexyl methacrylate, 2 parts by weight of a phosphate derivative monomer (trade name "PAM 200" supplied by Rhodia Nicca, Ltd.), and 0.03 part by weight of 3-methacryloyloxypropyltrimethoxysilane (trade name "KBM-503" supplied by Shin-Etsu Chemical Co., Ltd.). Then a monomer pre-emulsion was prepared by forcedly emulsifying 627 g of the monomer mixture with 13 g of a reactive emulsifier (trade name "AQUALON HS-10" supplied by Daiichi Kogyo Seiyaku Co., Ltd.) and 360 g of ion-exchanged water using a homogenizer (supplied by PRIMIX Corporation) at a rate of 5000 (1/min) for five minutes.

Next, 200 g of the above-prepared monomer pre-emulsion and 330 g of ion-exchanged water were placed in a reactor equipped with a condenser tube, a nitrogen-gas feeding tube, a thermometer, and a stirrer, the reactor was subjected to nitrogen replacement, and 0.2 g of 2,2-azobis[N-(2-carboxyethyl)-2-methylpropionamidine] hydrate (trade name "VA-057" supplied by Wako Pure Chemical Industries, Ltd.) was added, followed by polymerization at 60°C for one hour.

Next, another portion (800 g) of the above-prepared monomer pre-emulsion was added dropwise to the reactor over three hours, followed by polymerization for further three hours after the completion of the dropwise addition. Then, polymerization was conducted at 60°C for further three hours while carrying out nitrogen replacement, to yield an aqueous acrylic polymer emulsion having a solids content of 48%. This was cooled to room temperature (23°C), combined with 10% aqueous ammonia so as to have a pH of 8, and thereby yielded an aqueous acrylic polymer composition (aqueous dispersion).

The aqueous acrylic polymer composition was applied to one side of a biaxially oriented poly(ethylene terephthalate) film 38 μm thick, and dried with a hot-air dryer at 130°C for five minutes to form an acrylic polymer layer having a thickness of 27 μm. Next, the acrylic polymer layer was laminated to the releasable surface of the cover film. Thus there was prepared a base-supported monomer-absorptive sheet whose monomer-absorptive layer was protected on its surface by the cover film (hereinafter also referred to as a "base-supported monomer-absorptive sheet (X)").

(EXAMPLE 1)

The particle-containing photopolymerizable composition (A) was applied to the releasable surface of the cover film to form a particle-containing photopolymerizable composition layer that would have a thickness after curing of 100 μm. This was laminated to an exposed monomer-absorptive layer, from which the cover film had been removed, of the base-supported monomer-absorptive sheet (A) so that the monomer-absorptive layer was in contact with the particle-containing photopolymerizable composition layer, to form a multilayer assembly.

Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer. Thus, a surface-roughened sheet was produced.

(EXAMPLE 2)

The particle-containing photopolymerizable composition (B) was applied to the releasable surface of the cover film to form a particle-containing photopolymerizable composition layer that would have a thickness after curing of 50 $\mu$m. This was laminated to an exposed monomer-absorptive layer, from which the cover film had been removed, of the base-supported monomer-absorptive sheet (A) so that the monomer-absorptive layer was in contact with the particle-containing photopolymerizable composition layer, to form a multilayer assembly.
Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer. Thus, a surface-roughened sheet was produced.

(EXAMPLE 3)

The particle-containing photopolymerizable composition (A) was applied to the releasable surface of the cover film to form a particle-containing photopolymerizable composition layer that would have a thickness after curing of 60 $\mu$m. This was laminated to an exposed monomer-absorptive layer, from which the cover film had been removed, of the base-supported monomer-absorptive sheet (B) so that the monomer-absorptive layer was in contact with the particle-containing photopolymerizable composition layer, to form a multilayer assembly.
Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer. Thus, a surface-roughened sheet was produced.

(EXAMPLE 4)

The particle-containing photopolymerizable composition (C) was applied to the releasable surface of the cover film to form a particle-containing photopolymerizable composition layer that would have a thickness after curing of 60 $\mu$m. This was laminated to an exposed monomer-absorptive layer, from which the cover film had been removed, of the base-supported monomer-absorptive sheet (C) so that the monomer-absorptive layer was in contact with the particle-containing photopolymerizable composition layer, to form a multilayer assembly.
Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer. Thus, a surface-roughened sheet was produced.

(EXAMPLE 5)

The particle-containing photopolymerizable composition (D) was applied to the releasable surface of the cover film to form a particle-containing photopolymerizable composition layer that would have a thickness after curing of 60 $\mu$m. This was laminated to an exposed monomer-absorptive layer, from which the cover film had been removed, of the base-supported monomer-absorptive sheet (D) so that the monomer-absorptive layer was in contact with the particle-containing photopolymerizable composition layer, to form a multilayer assembly.
Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer. Thus, a surface-roughened sheet was produced.

(EXAMPLE 6)

The particle-containing photopolymerizable composition (E) was applied to the releasable surface of the cover film to form a particle-containing photopolymerizable composition layer that would have a thickness after curing of 60 $\mu$m. This was laminated to an exposed monomer-absorptive layer, from which the cover film had been removed, of the base-supported monomer-absorptive sheet (E) so that the monomer-absorptive layer was in contact with the particle-containing photopolymerizable composition layer, to form a multilayer assembly.

Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer. Thus, a surface-roughened sheet was produced.

(EXAMPLE 7)

The particle-containing photopolymerizable composition (F) was applied to the releasable surface of the cover film to form a particle-containing photopolymerizable composition layer that would have a thickness after curing of 60 μm. This was laminated to an exposed monomer-absorptive layer, from which the cover film had been removed, of the base-supported monomer-absorptive sheet (F) so that the monomer-absorptive layer was in contact with the particle-containing photopolymerizable composition layer, to form a multilayer assembly.

Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer. Thus, a surface-roughened sheet was produced.

(EXAMPLE 8)

The particle-containing photopolymerizable composition (G) was applied to the releasable surface of the cover film to form a particle-containing photopolymerizable composition layer that would have a thickness after curing of 60 μm. This was laminated to an exposed monomer-absorptive layer, from which the cover film had been removed, of the base-supported monomer-absorptive sheet (G) so that the monomer-absorptive layer was in contact with the particle-containing photopolymerizable composition layer, to form a multilayer assembly.

Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer. Thus, a surface-roughened sheet was produced.

(EXAMPLE 9)

The particle-containing photopolymerizable composition (H) was applied to the releasable surface of the cover film to form a particle-containing photopolymerizable composition layer. This was laminated to an exposed monomer-absorptive layer, from which the cover film had been removed, of the base-supported monomer-absorptive sheet (H) so that the monomer-absorptive layer was in contact with the particle-containing photopolymerizable composition layer, to form a multilayer assembly.

Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer (a particle-containing layer or fine-particle-containing layer). Thus, a sheet having a multilayer structure of a monomer-absorptive layer and a particle-containing photo-polymerized/cured layer was produced.

The thickness (total thickness) of the multilayer structure of the monomer-absorptive layer and the particle-containing photo-polymerized/cured layer was 110 μm.

(EXAMPLE 10)

The particle-containing photopolymerizable composition (A) was applied to the releasable surface of the cover film to form a particle-containing photopolymerizable composition layer. This was laminated to an exposed monomer-absorptive layer, from which the cover film had been removed, of the base-supported monomer-absorptive sheet (I) so that the monomer-absorptive layer was in contact with the particle-containing photopolymerizable composition layer, to form a multilayer assembly.

Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer (a particle-containing layer or fine-particle-containing layer). Thus, a sheet having a multilayer structure of a monomer-absorptive layer and a particle-containing photo-polymerized/cured layer was produced.

The thickness (total thickness) of the multilayer structure of the monomer-absorptive layer and the particle-containing photo-polymerized/cured layer was 125 μm.

(EXAMPLE 11)

The particle-containing photopolymerizable composition (C) was applied to the releasable surface of the cover film to form a particle-containing photopolymerizable composition layer. This was laminated to an exposed monomer-absorptive layer, from which the cover film had been removed, of the base-supported monomer-absorptive sheet (J) so that the monomer-absorptive layer was in contact with the particle-containing photopolymerizable composition layer, to form a multilayer assembly.
Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer (a particle-containing layer or fine-particle-containing layer). Thus, a sheet having a multilayer structure of a monomer-absorptive layer and a particle-containing photo-polymerized/cured layer was produced.
The thickness (total thickness) of the multilayer structure of the monomer-absorptive layer and the particle-containing photo-polymerized/cured layer was 130 μm.

(EXAMPLE 12)

The particle-containing photopolymerizable composition (D) was applied to the releasable surface of the cover film to form a particle-containing photopolymerizable composition layer. This was laminated to an exposed monomer-absorptive layer, from which the cover film had been removed, of the base-supported monomer-absorptive sheet (K) so that the monomer-absorptive layer was in contact with the particle-containing photopolymerizable composition layer, to form a multilayer assembly.
Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer (a particle-containing layer or fine-particle-containing layer). Thus, a sheet having a multilayer structure of a monomer-absorptive layer and a particle-containing photo-polymerized/cured layer was produced.
The thickness (total thickness) of the multilayer structure of the monomer-absorptive layer and the particle-containing photo-polymerized/cured layer was 125 μm.

(EXAMPLE 13)

The particle-containing photopolymerizable composition (E) was applied to the releasable surface of the cover film to form a particle-containing photopolymerizable composition layer. This was laminated to an exposed monomer-absorptive layer, from which the cover film had been removed, of the base-supported monomer-absorptive sheet (L) so that the monomer-absorptive layer was in contact with the particle-containing photopolymerizable composition layer, to form a multilayer assembly.
Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer (a particle-containing layer or fine-particle-containing layer). Thus, a sheet having a multilayer structure of a monomer-absorptive layer and a particle-containing photo-polymerized/cured layer was produced.
The thickness (total thickness) of the multilayer structure of the monomer-absorptive layer and the particle-containing photo-polymerized/cured layer was 130 μm.

(EXAMPLE 14)

The particle-containing photopolymerizable composition (F) was applied to the releasable surface of the cover film to form a particle-containing photopolymerizable composition layer. This was laminated to an exposed monomer-absorptive layer, from which the cover film had been removed, of the base-supported monomer-absorptive sheet (M) so that the monomer-absorptive layer was in contact with the particle-containing photopolymerizable composition layer, to form a multilayer assembly.
Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer (a particle-containing layer or fine-particle-containing layer). Thus, a sheet having a multilayer structure of a monomer-absorptive layer and a particle-containing photo-polymerized/cured layer was produced.

The thickness (total thickness) of the multilayer structure of the monomer-absorptive layer and the particle-containing photo-polymerized/cured layer was 118 $\mu$m.

(EXAMPLE 15)

The particle-containing photopolymerizable composition (I) was applied to the releasable surface of the cover film to form a particle-containing photopolymerizable composition layer. This was laminated to an exposed monomer-absorptive layer, from which the cover film had been removed, of the base-supported monomer-absorptive sheet (N) so that the monomer-absorptive layer was in contact with the particle-containing photopolymerizable composition layer, to form a multilayer assembly.

Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer (a particle-containing layer or fine-particle-containing layer). Thus, a sheet having a multilayer structure of a monomer-absorptive layer and a particle-containing photo-polymerized/cured layer was produced.

The thickness (total thickness) of the multilayer structure of the monomer-absorptive layer and the particle-containing photo-polymerized/cured layer was 130 $\mu$m.

(EXAMPLE 16)

The particle-containing photopolymerizable composition (J) was applied to the releasable surface of the cover film to form a particle-containing photopolymerizable composition layer. This was laminated to an exposed monomer-absorptive layer, from which the cover film had been removed, of the base-supported monomer-absorptive sheet (O) so that the monomer-absorptive layer was in contact with the particle-containing photopolymerizable composition layer, to form a multilayer assembly.

Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer (a particle-containing layer or fine-particle-containing layer). Thus, a sheet having a multilayer structure of a monomer-absorptive layer and a particle-containing photo-polymerized/cured layer was produced.

The thickness (total thickness) of the multilayer structure of the monomer-absorptive layer and the particle-containing photo-polymerized/cured layer was 115 $\mu$m.

(EXAMPLE 17)

The particle-containing photopolymerizable composition (G) was applied to the releasable surface of the cover film to form a particle-containing photopolymerizable composition layer. This was laminated to an exposed monomer-absorptive layer, from which the cover film had been removed, of the base-supported monomer-absorptive sheet (P) so that the monomer-absorptive layer was in contact with the particle-containing photopolymerizable composition layer, to form a multilayer assembly.

Next, one minute after its formation, the multilayer assembly was irradiated from the cover film side with an ultraviolet ray at an intensity of 5 mW/cm$^2$ for three minutes using a black-light lamp as a light source, thereby the particle-containing photopolymerizable composition layer was photo-cured to form a particle-containing photopolymerized/cured layer (a particle-containing layer or fine-particle-containing layer). Thus, a sheet having a multilayer structure of a monomer-absorptive layer and a particle-containing photo-polymerized/cured layer was produced.

The thickness (total thickness) of the multilayer structure of the monomer-absorptive layer and the particle-containing photo-polymerized/cured layer was 130 $\mu$m.

(EXAMPLE 18)

The particle-containing photopolymerizable composition (K) was applied to an exposed monomer-absorptive layer, from which the cover film had been removed, of the base-supported monomer-absorptive sheet (Q), to form a particle-containing photopolymerizable composition layer, and another cover film was laminated to the particle-containing photopolymerizable composition layer, to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for

ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photopolymerized/cured layer was produced.

The thickness (total thickness) of the multilayer structure of the monomer-absorptive layer and the particle-containing photo-polymerized/cured layer was 68 μm.

(EXAMPLE 19)

The particle-containing photopolymerizable composition (L) was applied to an exposed monomer-absorptive layer, from which the cover film had been removed, of the base-supported monomer-absorptive sheet (Q), to form a particle-containing photopolymerizable composition layer, and another cover film was laminated to the particle-containing photopolymerizable composition layer, to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photopolymerized/cured layer was produced.

The thickness (total thickness) of the multilayer structure of the monomer-absorptive layer and the particle-containing photo-polymerized/cured layer was 65 μm.

(EXAMPLE 20)

The particle-containing photopolymerizable composition (M) was applied to an exposed monomer-absorptive layer, from which the cover film had been removed, of the base-supported monomer-absorptive sheet (Q) to form a particle-containing photopolymerizable composition layer, and another cover film was laminated to the particle-containing photopolymerizable composition layer, to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photopolymerized/cured layer was produced.

The thickness (total thickness) of the multilayer structure of the monomer-absorptive layer and the particle-containing photo-polymerized/cured layer was 70 μm.

(EXAMPLE 21)

The particle-containing photopolymerizable composition (N) was applied to an exposed monomer-absorptive layer, from which the cover film had been removed, of the base-supported monomer-absorptive sheet (Q), and another cover film was laminated thereto to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photopolymerized/cured layer was produced.

The thickness (total thickness) of the multilayer structure of the monomer-absorptive layer and the particle-containing photo-polymerized/cured layer was 70 μm.

(EXAMPLE 22)

The particle-containing photopolymerizable composition (O) was applied to an exposed monomer-absorptive layer, from which the cover film had been removed, of the base-supported monomer-absorptive sheet (Q), and another cover film was laminated thereto to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for

ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photopolymerized/cured layer was produced.

The thickness (total thickness) of the multilayer structure of the monomer-absorptive layer and the particle-containing photo-polymerized/cured layer was 65 μm.

(EXAMPLE 23)

The particle-containing photopolymerizable composition (P) was applied to an exposed monomer-absorptive layer, from which the cover film had been removed, of the base-supported monomer-absorptive sheet (Q), and another cover film was laminated thereto to form a multilayer assembly.

Next, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photo-polymerized/cured layer was produced.

The thickness (total thickness) of the multilayer structure of the monomer-absorptive layer and the particle-containing photo-polymerized/cured layer was 66 μm.

(EXAMPLE 24)

The particle-containing photopolymerizable composition (Q) was applied to an exposed monomer-absorptive layer, from which the cover film had been removed, of the base-supported monomer-absorptive sheet (Q), and another cover film was laminated thereto to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photopolymerized/cured layer was produced.

The thickness (total thickness) of the multilayer structure of the monomer-absorptive layer and the particle-containing photo-polymerized/cured layer was 76 μm.

(EXAMPLE 25)

The particle-containing photopolymerizable composition (A) was applied to an exposed monomer-absorptive layer, from which the cover film had been removed, of the base-supported monomer-absorptive sheet (Q), and another cover film was laminated thereto to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photopolymerized/cured layer was produced.

The thickness (total thickness) of the multilayer structure of the monomer-absorptive layer and the particle-containing photo-polymerized/cured layer was 80 μm.

(EXAMPLE 26)

The immiscible material-containing photopolymerizable composition (A) was applied to an exposed monomer-absorptive layer, from which the cover film had been removed, of the base-supported monomer-absorptive sheet (Q), and another cover film was laminated thereto to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the immiscible material-containing photopolymerizable composition layer was photo-cured to form an immiscible material-containing photo-polymerized/cured layer (coating layer). Thus, a sheet having a multilayer structure of a monomer-absorptive layer and an immiscible material-containing photo-polymerized/cured layer was produced.

The multilayer structure of the monomer-absorptive layer and the immiscible material-containing photopolymerized/cured layer had a thickness (total thickness) of 74 $\mu$m.

(EXAMPLE 27)

The particle-containing photopolymerizable composition (Q) was applied to an exposed monomer-absorptive layer, from which the cover film had been removed, of the base-supported monomer-absorptive sheet (R), and another cover film was laminated thereto to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photopolymerized/cured layer was produced.

The thickness (total thickness) of the multilayer structure of the monomer-absorptive layer and the particle-containing photo-polymerized/cured layer was 175 $\mu$m.

(EXAMPLE 28)

The particle-containing photopolymerizable composition (Q) was applied to an exposed monomer-absorptive layer, from which the cover film had been removed, of the base-supported monomer-absorptive sheet (S), and another cover film was laminated thereto to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photo-polymerized/cured layer was produced.

The thickness (total thickness) of the multilayer structure of the monomer-absorptive layer and the particle-containing photo-polymerized/cured layer was 170 $\mu$m.

(EXAMPLE 29)

The particle-containing photopolymerizable composition (Q) was applied to an exposed monomer-absorptive layer, from which the cover film had been removed, of the base-supported monomer-absorptive sheet (T), and another cover film was laminated thereto to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photopolymerized/cured layer was produced.

The thickness (total thickness) of the multilayer structure of the monomer-absorptive layer and the particle-containing photo-polymerized/cured layer was 150 $\mu$m.

(EXAMPLE 30)

The particle-containing photopolymerizable composition (Q) was applied to an exposed monomer-absorptive layer, from which the cover film had been removed, of the base-supported monomer-absorptive sheet (U), and another cover film was laminated thereto to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photopolymerized/cured layer was produced.

The thickness (total thickness) of the multilayer structure of the monomer-absorptive layer and the particle-containing photo-polymerized/cured layer was 175 $\mu$m.

(EXAMPLE 31)

The particle-containing photopolymerizable composition (Q) was applied to an exposed monomer-absorptive layer, from which the cover film had been removed, of the base-supported monomer-absorptive sheet (V), and another cover film was laminated thereto to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photopolymerized/cured layer was produced.

The thickness (total thickness) of the multilayer structure of the monomer-absorptive layer and the particle-containing photo-polymerized/cured layer was 125 $\mu$m.

(EXAMPLE 32)

The particle-containing photopolymerizable composition (R) was applied to an exposed monomer-absorptive layer, from which the cover film had been removed, of the base-supported monomer-absorptive sheet (Q), and another cover film was laminated thereto to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photopolymerized/cured layer was produced.

The thickness (total thickness) of the multilayer structure of the monomer-absorptive layer and the particle-containing photo-polymerized/cured layer was 110 $\mu$m.

(EXAMPLE 33)

The particle-containing photopolymerizable composition (R) was applied to an exposed monomer-absorptive layer, from which the cover film had been removed, of the base-supported monomer-absorptive sheet (V), and another cover film was laminated thereto to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photopolymerized/cured layer was produced.

The thickness (total thickness) of the multilayer structure of the monomer-absorptive layer and the particle-containing photo-polymerized/cured layer was 100 $\mu$m.

(EXAMPLE 34)

The particle-containing photopolymerizable composition (R) was applied to an exposed monomer-absorptive layer, from which the cover film had been removed, of the base-supported monomer-absorptive sheet (X), and another cover film was laminated thereto to form a multilayer assembly.

Next, one minute after its formation, the multilayer assembly was irradiated both from the cover film surface and the base surface of the base-supported monomer-absorptive sheet with an ultraviolet ray at an intensity of 5 mW/cm$^2$ for ten minutes using a black-light lamp as a light source, thereby the particle-containing photopolymerizable composition layer was photo-cured to form a particle-containing photo-polymerized/cured layer (a particle-containing layer or fine-particle-containing layer). Thus, a sheet having a multilayer structure of a monomer-absorptive layer and a particle-containing photopolymerized/cured layer was produced.

The thickness (total thickness) of the multilayer structure of the monomer-absorptive layer and the particle-containing photo-polymerized/cured layer was 110 $\mu$m.

(EXAMPLE 35)

The particle-containing autopolymerizable composition (A) was applied to the releasable surface of the cover film to form a particle-containing autopolymerizable composition layer. This was laminated to an exposed monomer-absorptive layer, from which the cover film had been removed, of the base-supported monomer-absorptive sheet (Q) so that the monomer-absorptive layer was in contact with the particle-containing photopolymerizable composition layer, to form a multilayer assembly.

Next, the multilayer assembly was left stand for 24 hours, while shielding the light, to cure the particle-containing autopolymerizable composition layer to thereby form a particle-containing autopolymerized/cured layer (a particle-containing layer or fine-particle-containing layer). Thus, a sheet having a multilayer structure of a monomer-absorptive layer and a particle-containing autopolymerized/cured layer was produced. The thickness (total thickness) of the multilayer structure of the monomer-absorptive layer and the particle-containing autopolymerized/cured layer was 120 $\mu$m.

In this connection, another sheet whose particle-containing autopolymerized/cured layer had been formed by leaving stand for seven days while shielding the light was used for observation under a scanning electron microscope (SEM).

(COMPARATIVE EXAMPLE 1)

A surface-roughened sheet was produced by the procedure of Example 1, except for using a biaxially oriented poly(ethylene terephthalate) film 38 $\mu$m thick instead of the base-supported monomer-absorptive sheet (A).

(COMPARATIVE EXAMPLE 2)

A surface-roughened sheet was produced by the procedure of Example 2, except for using a biaxially oriented poly(ethylene terephthalate) film 38 $\mu$m thick instead of the base-supported monomer-absorptive sheet (A).

(COMPARATIVE EXAMPLE 3)

A sheet was produced by the procedure of Example 20, except for using a biaxially oriented poly(ethylene terephthalate) film 38 $\mu$m thick instead of the base-supported monomer-absorptive sheet (Q), and applying the particle-containing photopolymerizable composition to form a particle-containing photopolymerizable composition layer that would have a thickness after curing of 45 $\mu$m.

(COMPARATIVE EXAMPLE 4)

A sheet was produced by the procedure of Example 21, except for using a biaxially oriented poly(ethylene terephthalate) film 38 $\mu$m thick instead of the base-supported monomer-absorptive sheet (Q), and applying the particle-containing photopolymerizable composition to form a particle-containing photopolymerizable composition layer that would have a thickness after curing of 45 $\mu$m.

(COMPARATIVE EXAMPLE 5)

A sheet was produced by the procedure of Example 23, except for using a biaxially oriented poly(ethylene terephthalate) film 38 $\mu$m thick instead of the base-supported monomer-absorptive sheet (Q), and applying the particle-containing photopolymerizable composition to form a particle-containing photopolymerizable composition layer that would have a thickness after curing of 50 $\mu$m.

(COMPARATIVE EXAMPLE 6)

A sheet was produced by the procedure of Example 25, except for using a biaxially oriented poly(ethylene terephthalate) film 38 $\mu$m thick instead of the base-supported monomer-absorptive sheet (Q), and applying the particle-containing photopolymerizable composition to form a particle-containing photopolymerizable composition layer that would have a thickness after curing of 50 $\mu$m.

(COMPARATIVE EXAMPLE 7)

A sheet was produced by the procedure of Example 26, except for using a biaxially oriented poly(ethylene terephthalate) film 38 $\mu$m thick instead of the base-supported monomer-absorptive sheet (Q), and applying the particle-containing photopolymerizable composition to form a particle-containing photopolymerizable composition layer that would have a thickness after curing of 60 μm.

(COMPARATIVE EXAMPLE 8)

A sheet was produced by the procedure of Example 35, except for using a biaxially oriented poly(ethylene terephthalate) film 38 μm thick instead of the base-supported monomer-absorptive sheet (Q), and applying the particle-containing autopolymerizable composition (A) to form a layer that would have a thickness after curing of 80 μm.

(Evaluation 1)

The tack (tackiness) and haze of the articles prepared according to Examples and Comparative Examples were determined according to the following "technique for determining tack" and "technique for measuring haze", respectively. Additionally, the gel fraction and 100-percent modulus of the monomer-absorptive layers of the monomer-absorptive sheets used in Examples were measured according to the following "technique for measuring gel fraction" and "technique for measuring 100-percent modulus", respectively. The results are shown in Table 1.

(Technique for Determining Tack)

The cover film of a sample sheet was removed to expose a working surface of the sheet. The tackiness of the working surface of the sheet was evaluated by finger touch. A sample sheet in which tack was felt on its working surface was evaluated as being "tacky", and a sample sheet in which tack was not felt on its working surface was evaluated as being "tack-free".

(Technique for Measuring Haze)

The cover film of a sample sheet was removed to expose a working surface of the sheet. Next, the haze of the sheet was measured according to Japanese Industrial Standards (JIS) K7105 with a haze meter ("HM-150" supplied by Murakami Color Research Laboratory).

(Technique for Measuring Gel Fraction)

Base-supported monomer-absorptive sheets were additionally prepared by the procedures of Preparation Examples of the base-supported monomer-absorptive sheets used in Examples, except for using, instead of the biaxially oriented poly(ethylene terephthalate) film 38 μm thick, a biaxially oriented polyester film 38 μm thick having a silicone-releasable surface on one side thereof (trade name "MRF 38" supplied by Mitsubishi Polyester Film GmbH (Mitsubishi Plastics, Inc.)).
Then, about 500 mg of a monomer-absorptive layer was sampled from each of the additionally-prepared base-supported monomer-absorptive sheet, and the dry weight W1 (g) of the sample was measured. Next, the monomer-absorptive layer was immersed in ethyl acetate at about 23°C for seven days, isolated from ethyl acetate, dried at 130°C for two hours, the dry weight W2 (g) of the resulting monomer-absorptive layer was measured, and the gel fraction was calculated according to the following equation:

$$\text{Gel fraction (percent by weight)} = (W2/W1) \times 100 \text{ (percent by weight)}$$

(Technique for Measuring 100-Percent Modulus)

Base-supported monomer-absorptive sheets were additionally prepared by the procedures of Preparation Examples of the base-supported monomer-absorptive sheets used in Examples, except for using, instead of the biaxially oriented poly(ethylene terephthalate) film 38 μm thick, a biaxially oriented polyester film 38 μm thick having a silicone-releasable surface on one side (trade name "MRF 38" supplied by Mitsubishi Polyester Film GmbH (Mitsubishi Plastics, Inc.)).
The monomer-absorptive layer was then cut from each of the additionally-prepared base-supported monomer-absorptive sheets into a square piece 50 mm wide and 50 mm long, and the piece was cylindrically wound in a width direction. The stress-strain curve (23°C) of the cylindrically wound monomer-absorptive layer was determined with a tensile tester ("TG-1KN" supplied by Minebea Co., Ltd.) under conditions of a pulling rate of 50 mm/minute and a chuck interval of 10 mm, and a 100-percent modulus was read out from the stress-strain curve.
[TABLE 1]

TABLE 1

| | Monomer-absorptive sheet | | Haze (%) | Tack |
|---|---|---|---|---|
| | Gel fraction of monomer-absorptive layer (% by weight) | 100 Percent modulus of monomer-absorptive layer (N/cm$^2$) | | |
| Example 1 | 93 | 8 | 92 | tack-free |
| Example 2 | 93 | 8 | 74 | tack-free |
| Example 3 | 92 | 14 | 72 | tack-free |
| Example 4 | 95 | 134 | 79 | tack-free |
| Example 5 | 98 | 25 | 65 | tack-free |
| Example 6 | 3 | 103 | 58 | tack-free |
| Example 7 | 91 | 8 | 75 | tack-free |
| Example 8 | 4 | 13 | 67 | tack-free |
| Example 9 | 2 | 7 | 55 | tack-free |
| Example 10 | 92 | 14 | 72 | tack-free |
| Example 11 | 95 | 134 | 79 | tack-free |
| Example 12 | 98 | 25 | 65 | tack-free |
| Example 13 | 3 | 103 | 58 | tack-free |
| Example 14 | 91 | 8 | 75 | tack-free |
| Example 15 | 86 | 87 | 66 | tack-free |
| Example 16 | 99 | 20 | 70 | tack-free |
| Example 17 | 4 | 13 | 67 | tack-free |
| Example 18 | 91 | 8 | - | tacky |
| Example 19 | 91 | 8 | - | tacky |
| Example 20 | 91 | 8 | - | tacky |
| Example 21 | 91 | 8 | - | tacky |
| Example 22 | 91 | 8 | - | tacky |
| Example 23 | 91 | 8 | - | tacky |
| Example 24 | 91 | 8 | - | tacky |
| Example 25 | 91 | 8 | - | tack-free |
| Example 26 | 91 | 8 | - | tack-free |
| Com. Ex. 1 | - | - | 78 | tacky |
| Com. Ex. 2 | - | - | 32 | tacky |

The samples according to Comparative Examples 1 and 2 used a biaxially oriented poly(ethylene terephthalate) film 38 $\mu$m instead of the base-supported monomer-absorptive sheet, and whereby the gel fraction and 100-percent modulus of the monomer-absorptive layer were not measured. The hazes of the samples according to Examples 18 to 26 were not measured.

(Evaluation 2)

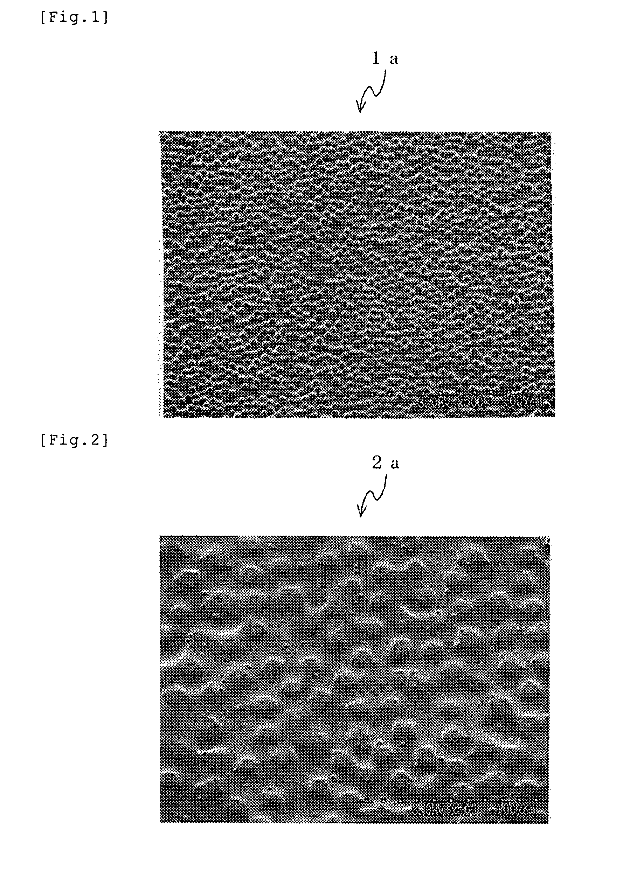

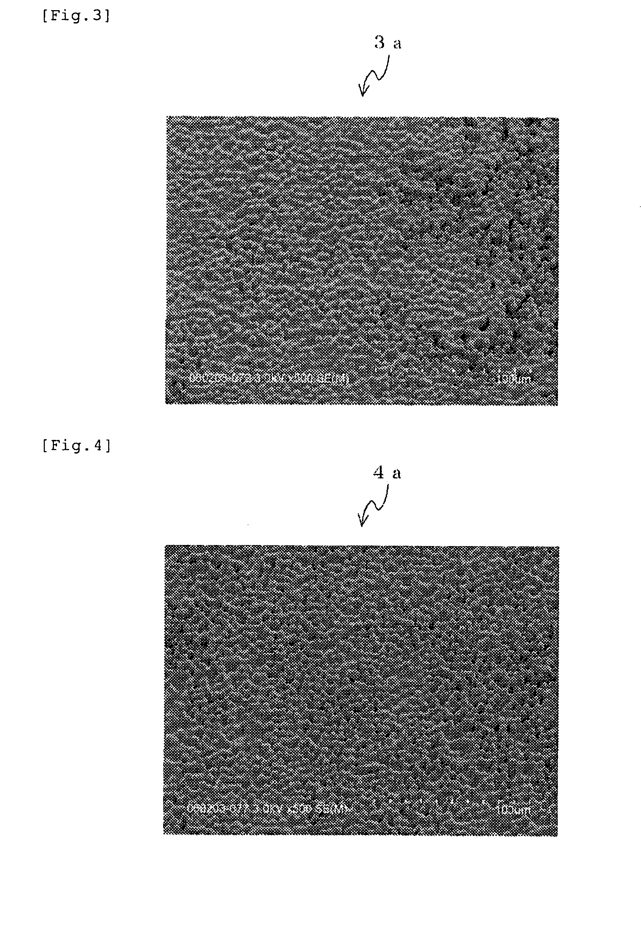

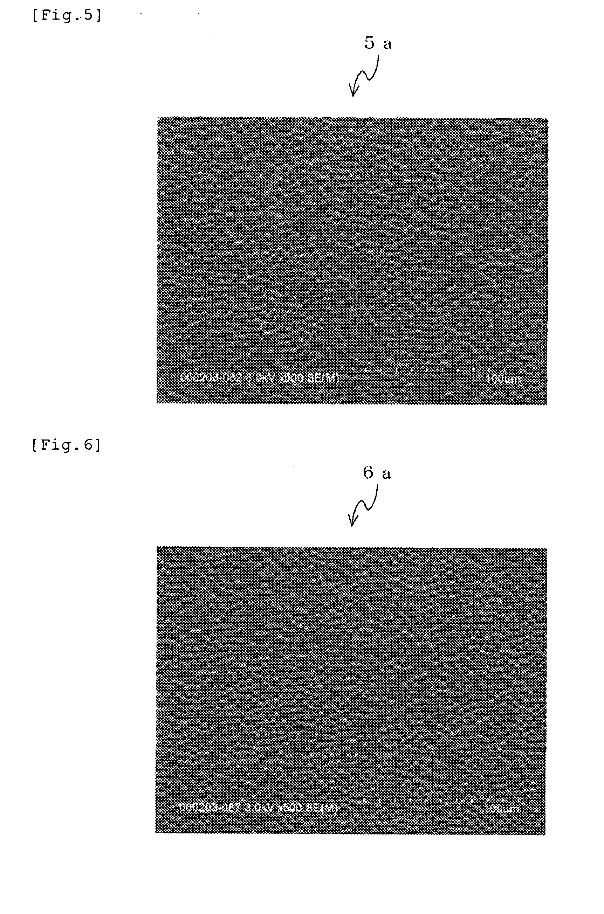

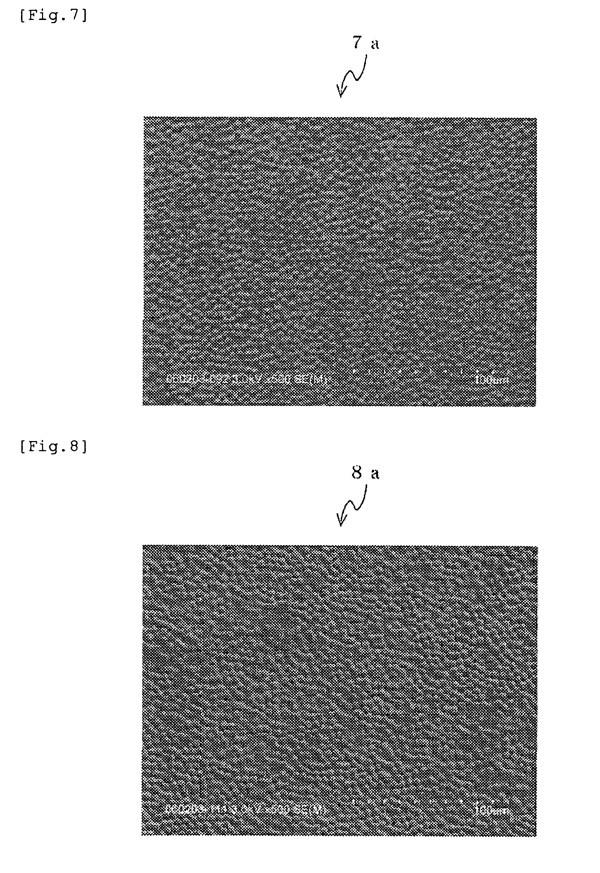

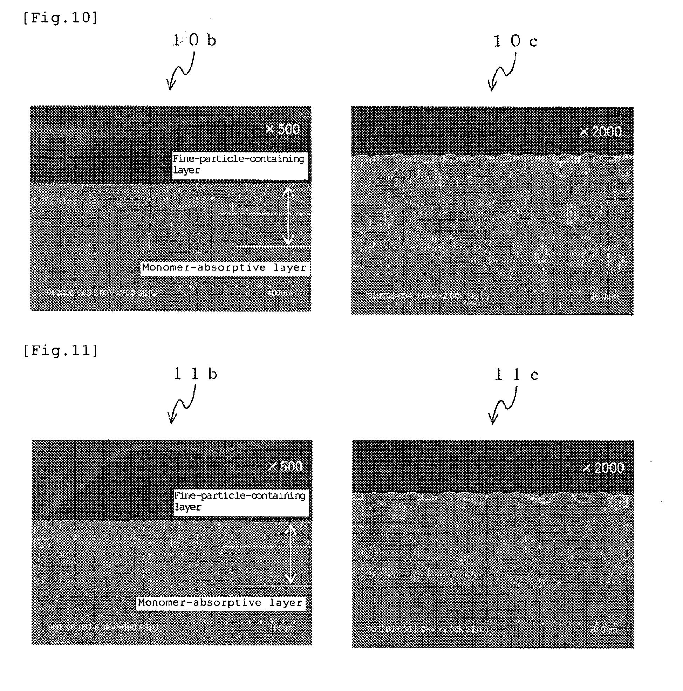

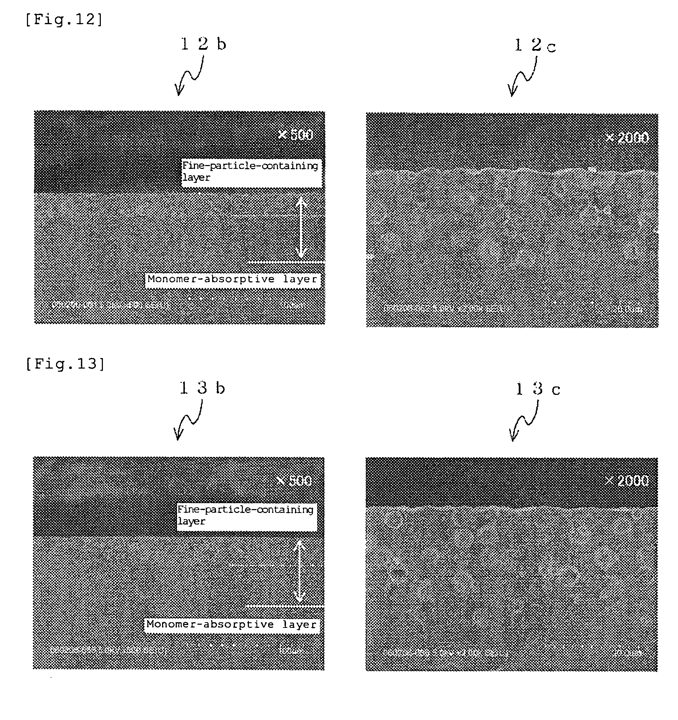

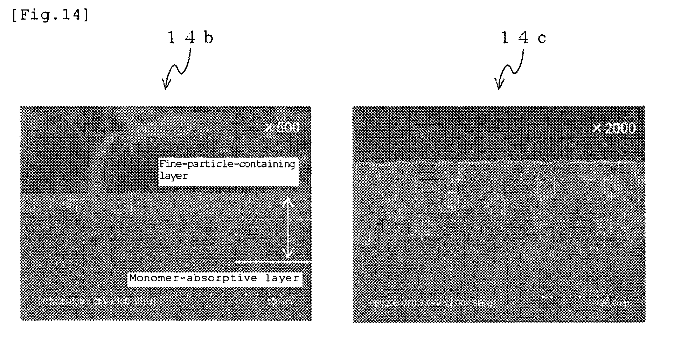

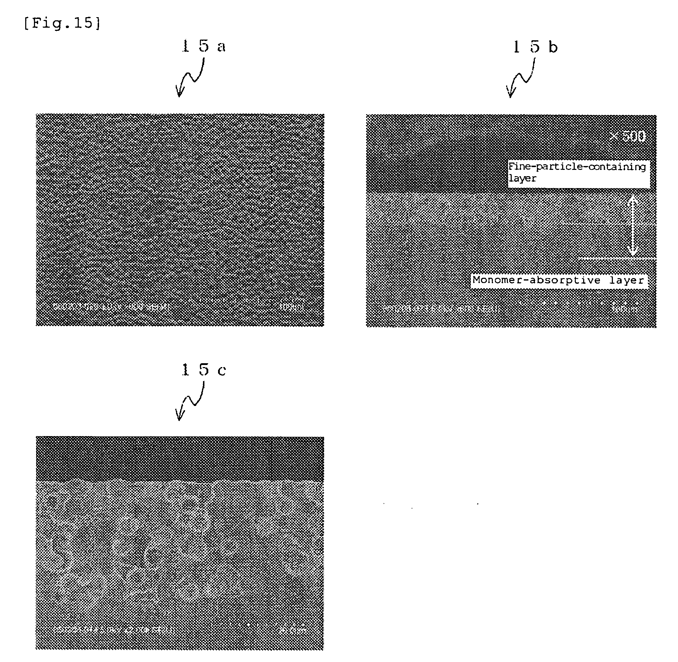

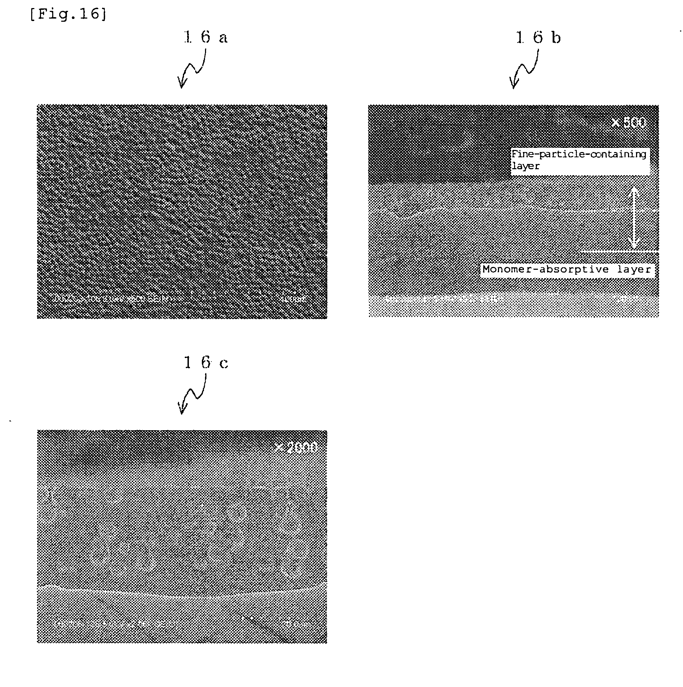

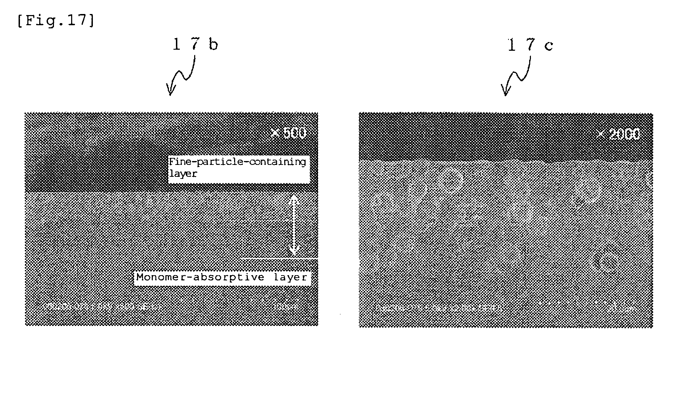

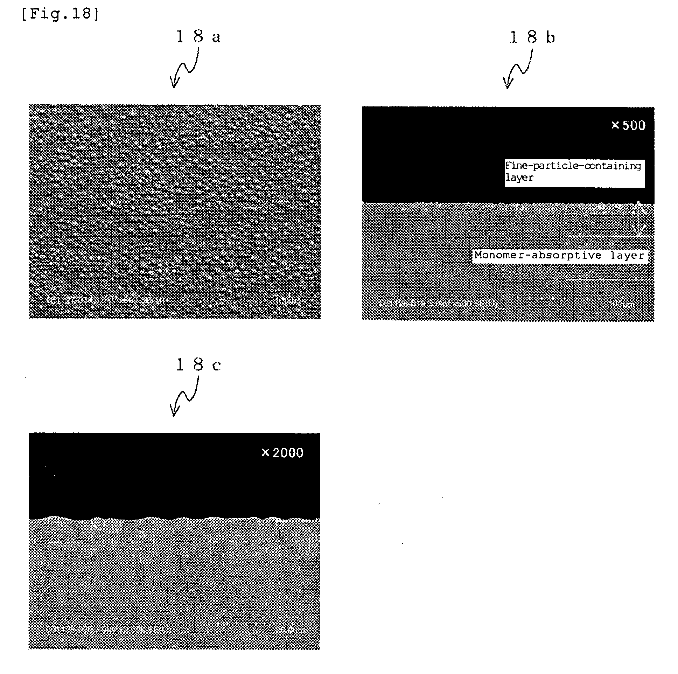

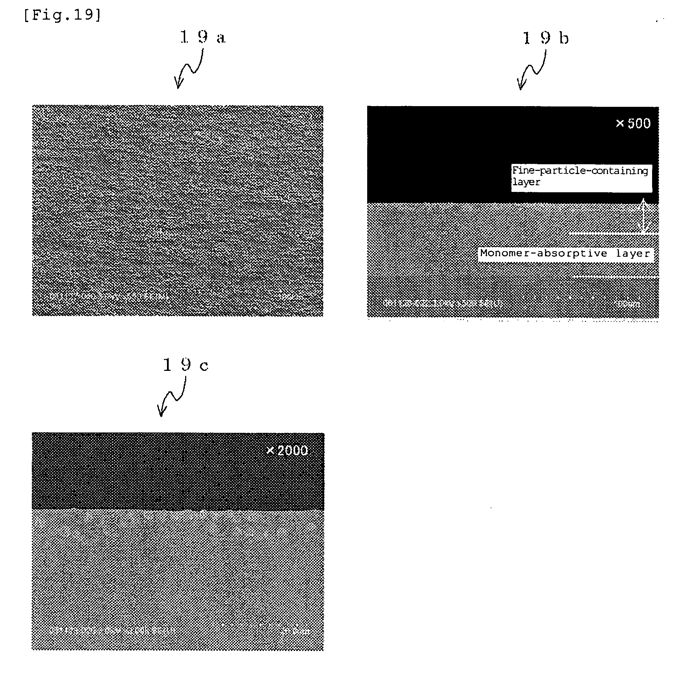

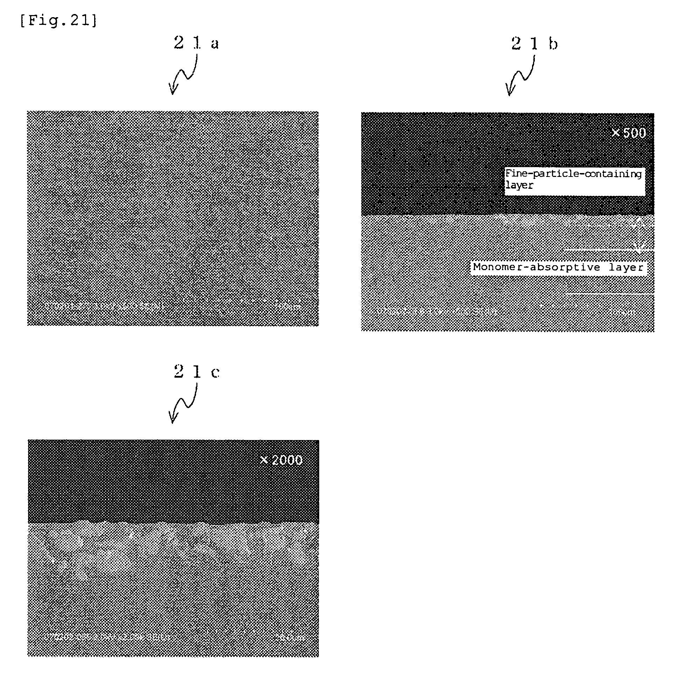

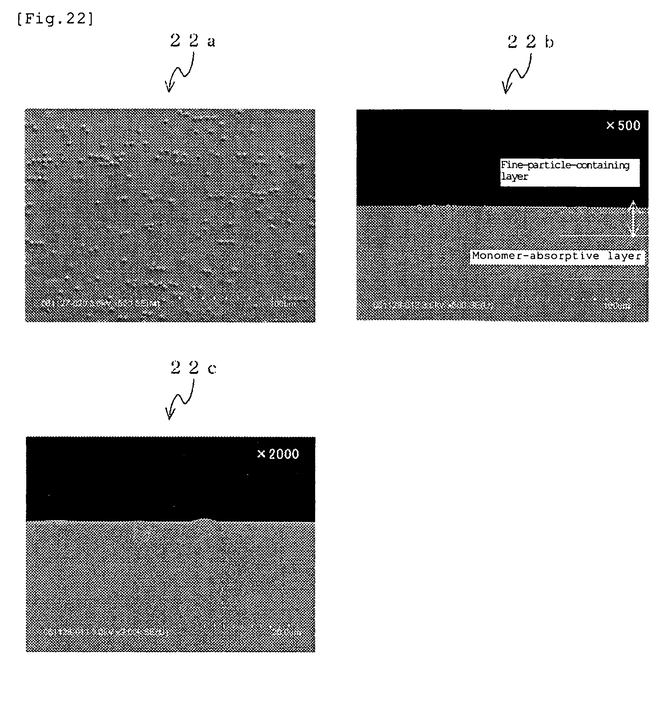

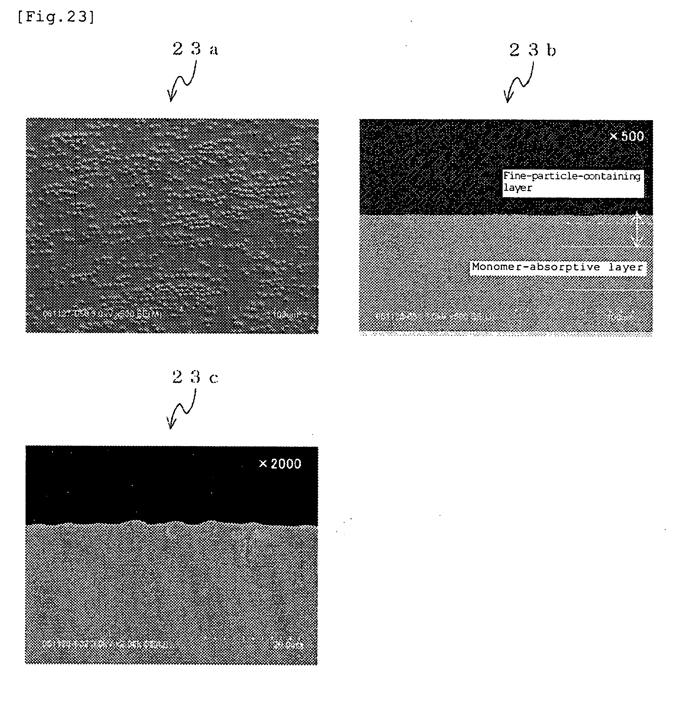

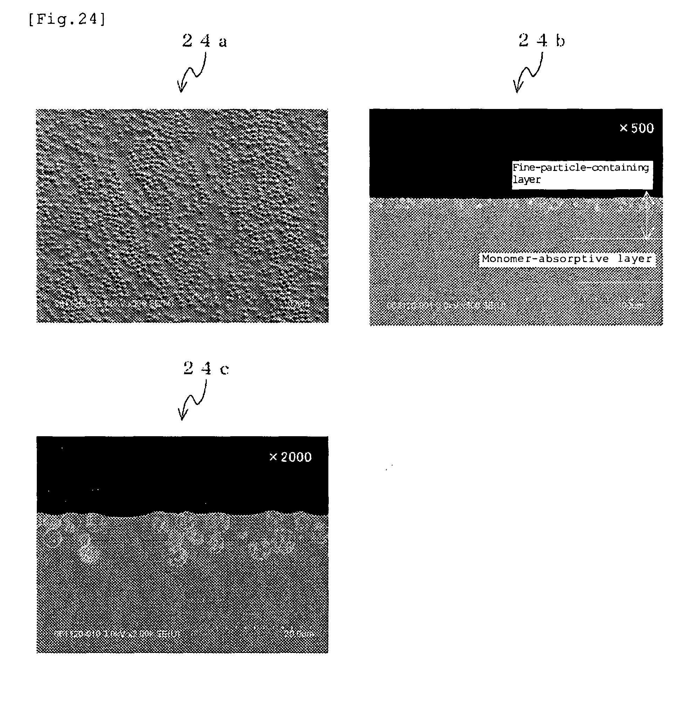

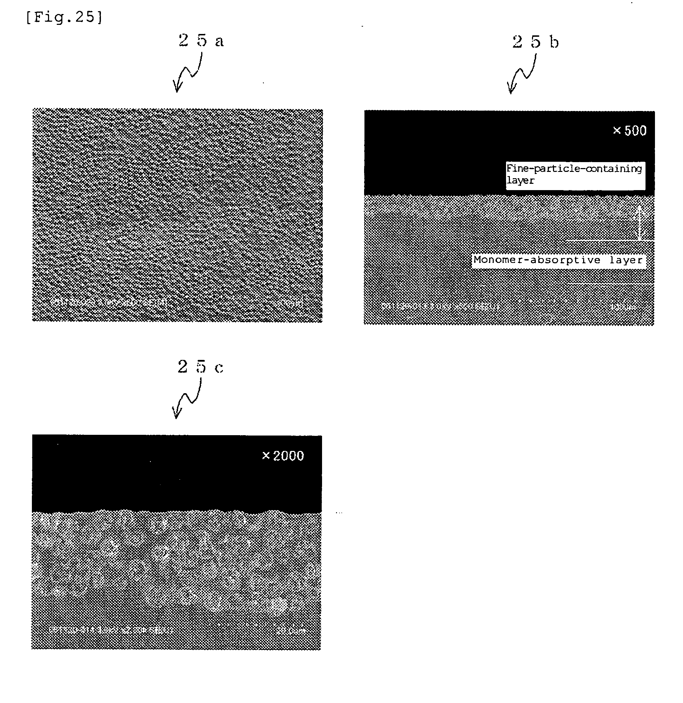

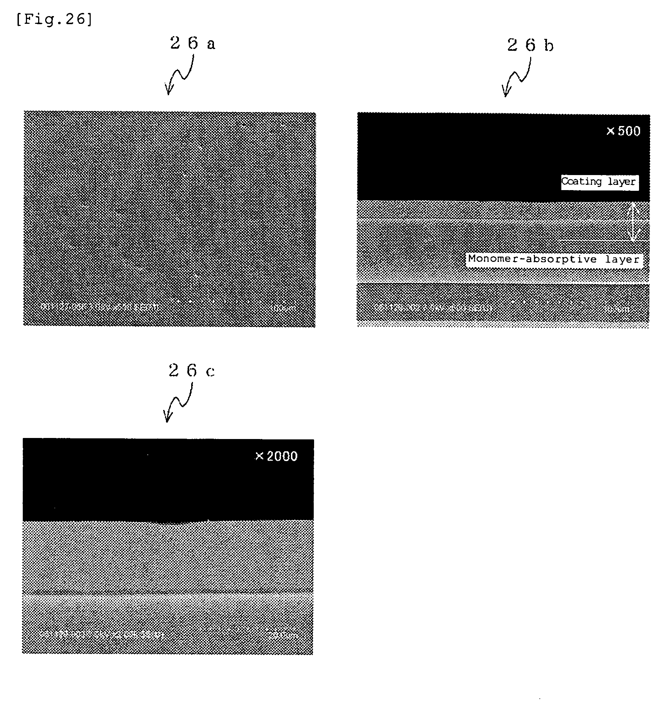

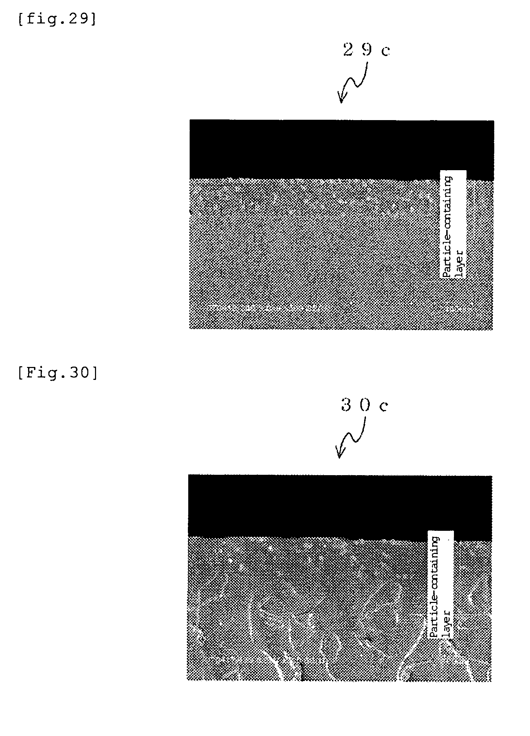

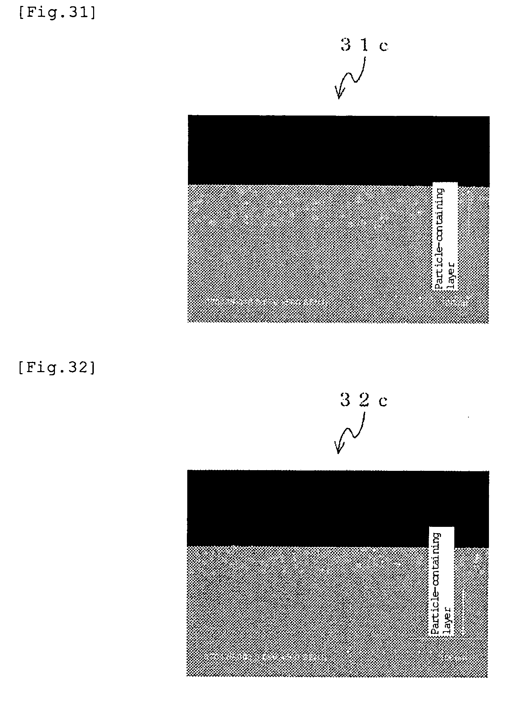

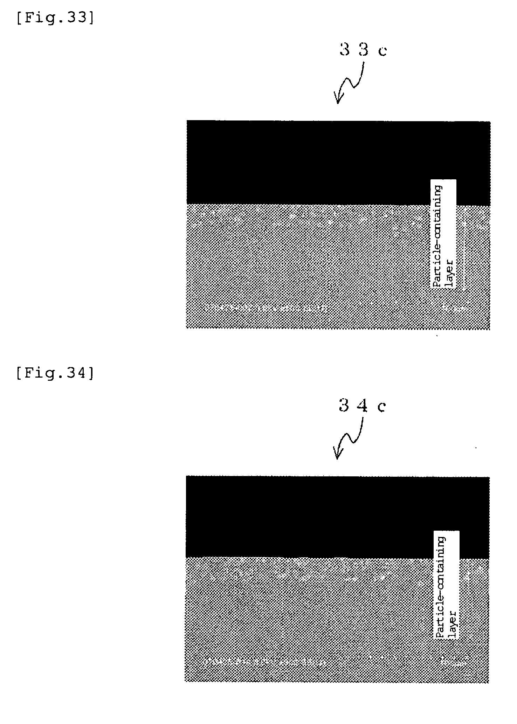

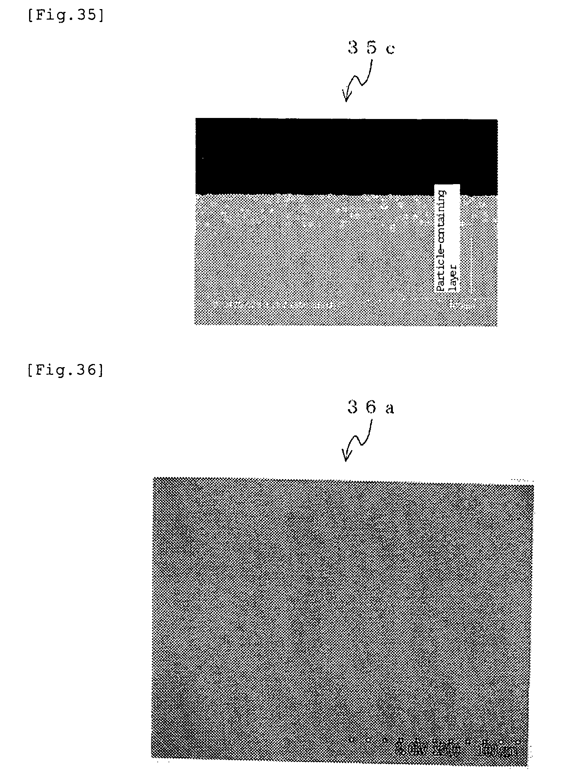

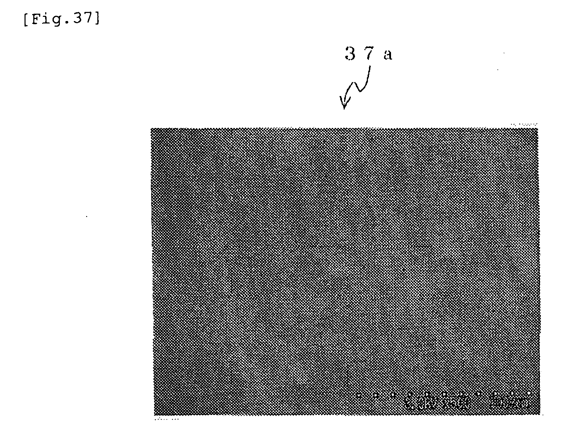

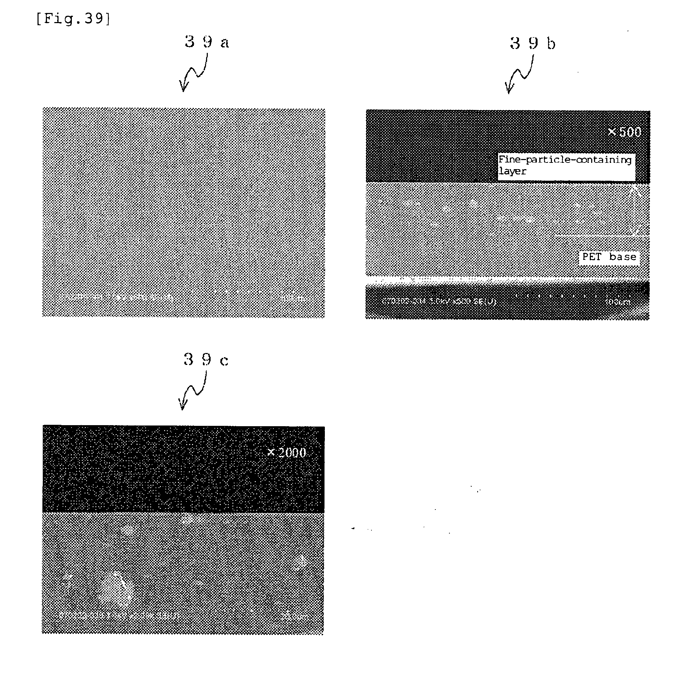

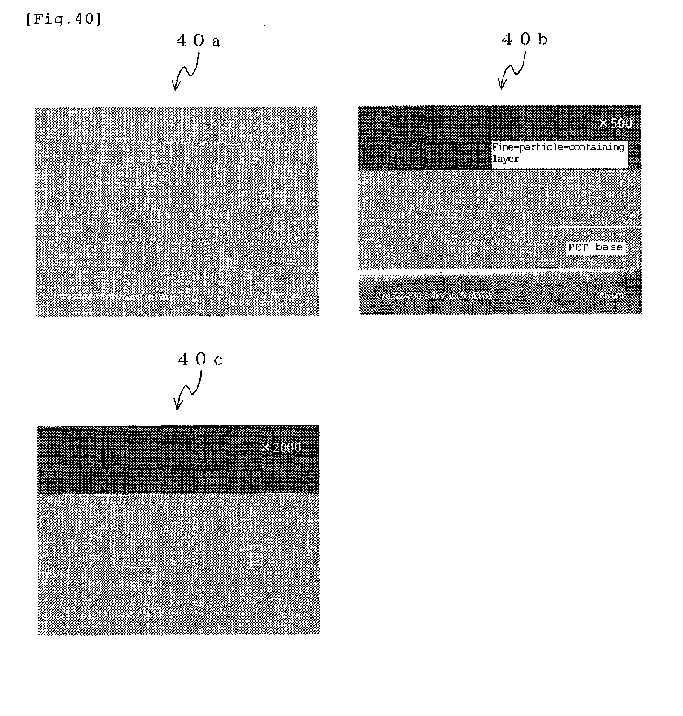

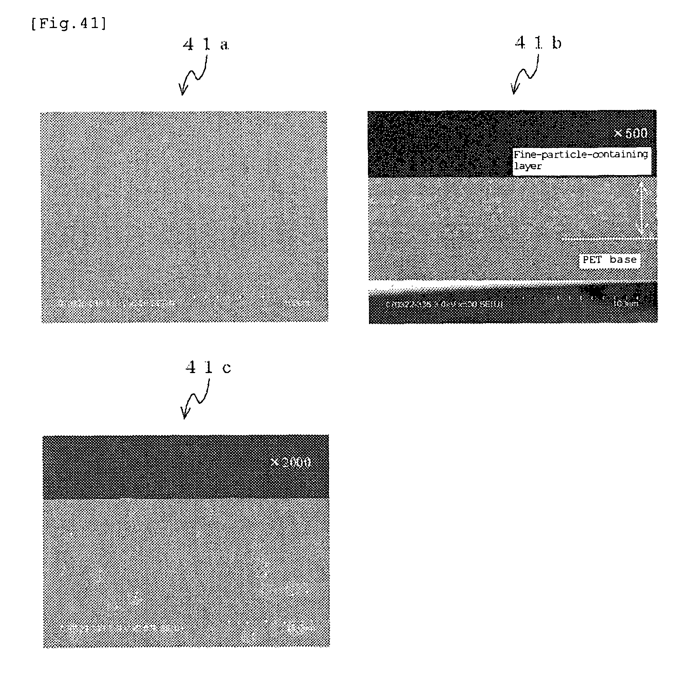

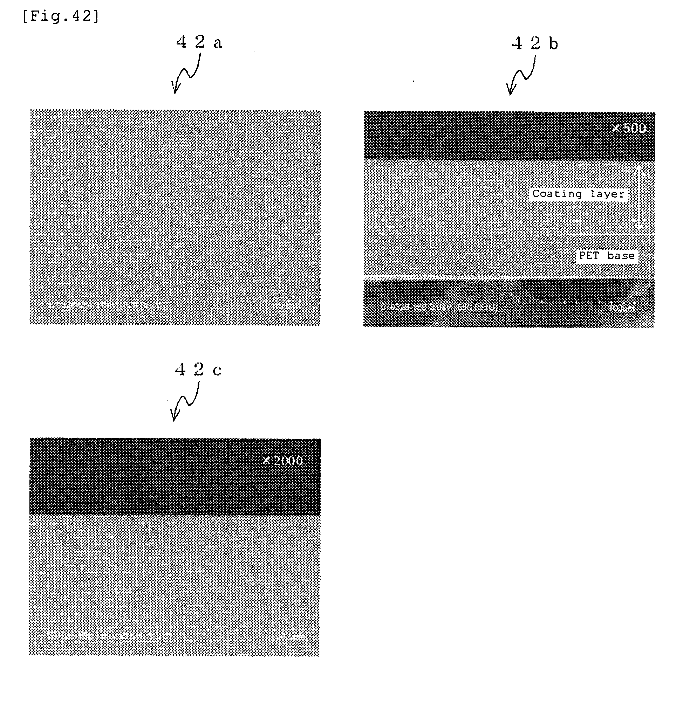

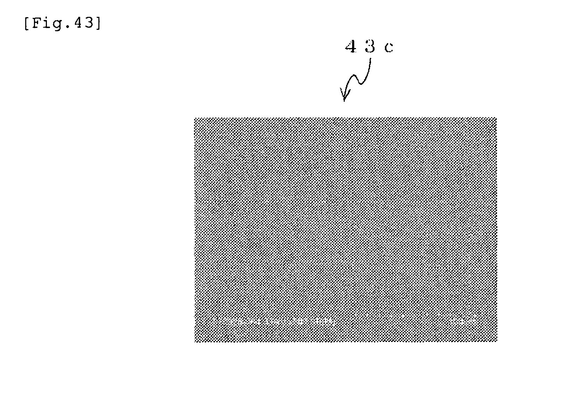

The shape of a working surface of a sample sheet and cross section of the sheet were observed with a scanning electron microscope (SEM). In this procedure, as the scanning electron microscope (SEM), Model S-3200 supplied by Hitachi High-Technologies Corporation was used in the samples according to Examples 1 and 2 and Comparative Examples 1 and 2, and Model S-4800 supplied by Hitachi High-Technologies Corporation was used in the other examples and comparative examples. The scanning electron micrographs (SEM images) of the working surfaces and cross sections of the sheets are shown in Figs. 1 to 43.

The thickness of the monomer-absorptive layer in a sample base-supported monomer-absorptive sheet was determined by measuring the thickness of the monomer-absorptive sheet (the total thickness of the base, monomer-absorptive layer, and cover film), and subtracting the thicknesses of the base and of the cover film from the total thickness of the base-supported monomer-absorptive sheet. The results are shown in "Thickness of monomer-absorptive layer (B)" in Table 2.

The thickness (total thickness) of a sample multilayer structure including a monomer-absorptive layer and a particle-containing photo-polymerized/cured layer (immiscible material-containing photo-polymerized/cured layer or particle-containing autopolymerized/cured layer) was determined by measuring, using a 1/1000 dial gauge, the thickness of the prepared sheet [the total thickness of the base-supported monomer-absorptive sheet, the particle-containing photo-polymerized/cured layer (immiscible material-containing photo-polymerized/cured layer or particle-containing autopolymerized/cured layer), and the cover film], and subtracting the thickness of the base of the base-supported monomer-absorptive sheet and the thickness of the cover film from the total thickness of the prepared sheet. The results are shown in "Total thickness (A+B)" in Table 2.

The thickness of the particle-containing photopolymerized/cured layer (immiscible material-containing photo-polymerized/cured layer or particle-containing autopolymerized/cured layer) was determined by subtracting the thickness of the monomer-absorptive layer from the total thickness. The thickness of the particle-containing photopolymerized/cured layer (immiscible material-containing photo-polymerized/cured layer) herein is not a measured value but a theoretical value. The results are shown in "Thickness of particle (immiscible material)-containing photo-polymerized/cured layer (particle-containing autopolymerized/cured layer) (A)" in Table 2.

The thickness of a particle (immiscible material) enriched region as shown in "Thickness of particle (immiscible material) enriched region" in Table 2 was determined by determining the depth (thickness) in a thickness direction of the particle (immiscible material) enriched region from the layer surface based on the scanning electron micrograph of the cross section of the sheet. The particle (immiscible material) enriched region herein refers to a region where particles are distributed (enriched) (hereinafter also referred to as a "particle-enriched region" or a "segregated layer") in the particle-containing photo-polymerized/cured layer or particle-containing autopolymerized/cured layer; or to a region where the immiscible material is distributed (enriched) (hereinafter also referred to as an "immiscible material-enriched region" or a "coating layer") in the immiscible material-containing photo-polymerized/cured layer. The thickness of a particle-enriched region or immiscible material-enriched region is an average of measured values as measured based on the scanning electron micrographs of a sample sheet.

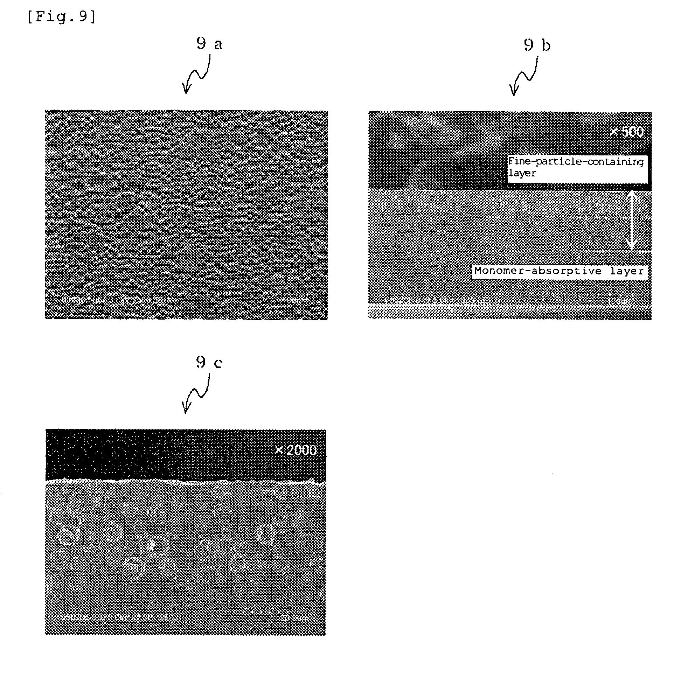

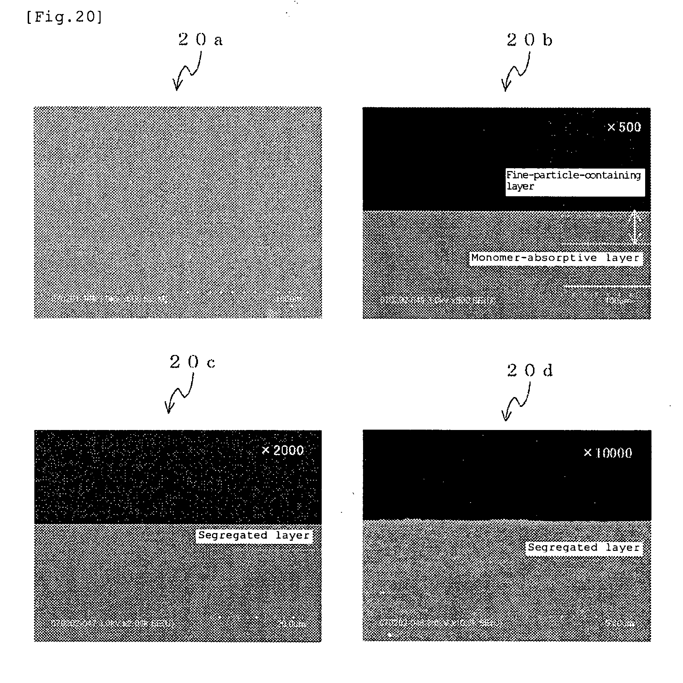

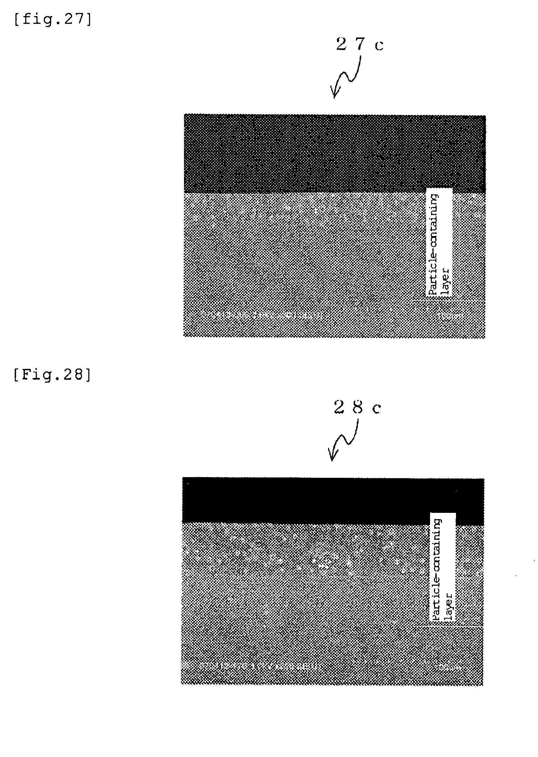

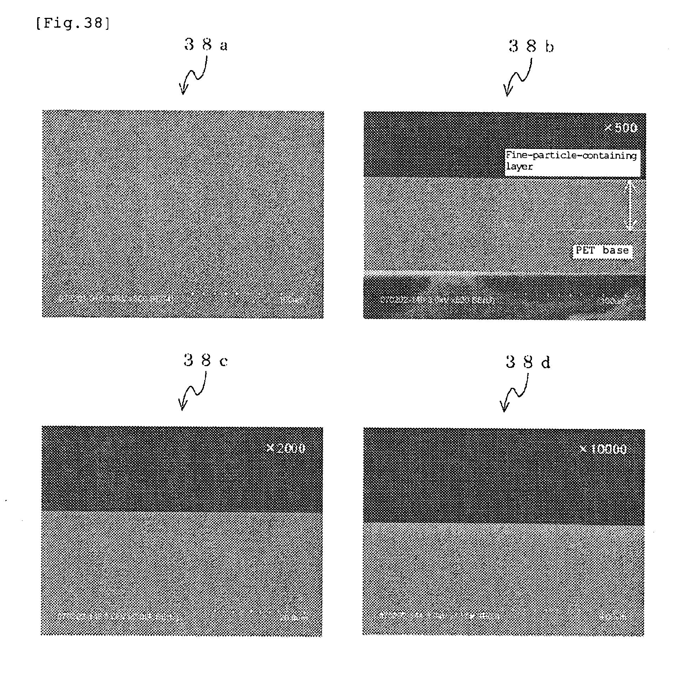

In the figures showing the sheets, the magnification is 500 times in the scanning electron micrographs of working surfaces of the sheets (the surface of the particle-containing photo-polymerized/cured layer or the surface of the immiscible material-containing photo-polymerized/cured layer) corresponding to scanning electron micrographs "a" in the figures, and in the scanning electron micrographs of the cross sections of the sheets corresponding to scanning electron micrographs "b" in the figures. The magnifications are 2000 times in Figs. 9 to 26 and 500 times in Figs. 27 to 35 in the scanning electron micrographs of the cross sections of the sheets corresponding to the scanning electron micrographs "c" in the figures. The scanning electron micrographs "c" are each an enlarged view of the vicinity of a particle-enriched region (segregated layer) of the particle-containing photo-polymerized/cured layer (particle-containing autopolymerized/cured layer) in cross section of the sheet and an immiscible material-enriched region (coating layer) of the immiscible material-containing photo-polymerized/cured layer. The magnification is 10000 times in the scanning electron micrographs of cross sections of the sheets corresponding to the scanning electron micrographs "d" in Figs. 20 and 38. The scanning electron micrographs "d" are each a further enlarged view of the vicinity of a particle-enriched region (segregated layer) of the particle-containing photo-polymerized/cured layer in cross section of the sheet.

[Table 2]

TABLE 2

| | Thickness of particle (immiscible material)-containing photo-polymerized/ cured layer (particle containing autopolymerized/ cured layer) (A) [μm] | Thickness of monomer-absorptive layer (B) [μm] | Total thickness (A+B) [μm} | Thickness of particle (immiscible material) enriched region [μm] |
|---|---|---|---|---|
| Example 9 | 54 | 56 | 110 | 22 |
| Example 10 | 55 | 70 | 125 | 22 |
| Example 11 | 57 | 73 | 130 | 18 |
| Example 12 | 60 | 65 | 125 | 21 |
| Example 13 | 59 | 71 | 130 | 24 |
| Example 14 | 60 | 58 | 118 | 21 |
| Example 15 | 55 | 75 | 130 | 28 |
| Example 16 | 60 | 55 | 115 | 25 |
| Example 17 | 60 | 70 | 130 | 24 |
| Example 18 | 38 | 30 | 68 | 8 |
| Example 19 | 35 | 30 | 65 | 5 |
| Example 20 | 40 | 30 | 70 | 7 |
| Example 21 | 40 | 30 | 70 | 12 |
| Example 22 | 35 | 30 | 65 | 6 |
| Example 23 | 36 | 30 | 66 | 8 |
| Example 24 | 46 | 30 | 76 | 12 |
| Example 25 | 50 | 30 | 80 | 25 |
| Example 26 | 44 | 30 | 74 | 16 |
| Example 27 | 90 | 80 | 175 | 28 |
| Example 28 | 90 | 80 | 170 | 48 |
| Example 29 | 90 | 60 | 150 | 36 |
| Example 30 | 75 | 100 | 175 | 40 |
| Example 31 | 100 | 25 | 125 | 40 |
| Example 32 | 80 | 30 | 110 | 24 |
| Example 33 | 75 | 25 | 100 | 25 |
| Example 34 | 83 | 27 | 110 | 26 |
| Example 35 | 90 | 30 | 120 | 35 |
| Com. Ex. 3 | 45 | - | - | 45 |
| Com. Ex. 4 | 45 | - | - | 45 |
| Com. Ex. 5 | 50 | - | - | 50 |
| Com. Ex. 6 | 50 | - | - | 50 |
| Com. Ex. 7 | 60 | - | - | 60 |
| Com. Ex. 8 | 80 | - | - | 80 |

Data from the evaluation 1 and the evaluation 2 demonstrate that the sheets according to Examples 1 to 17 are tack-free on their working surface. The sheets according to Examples 18 to 24 show tack on their working surface, because of small amounts of particles. The measured data in haze demonstrate that the sheets have light scattering properties.

The sheets according to Examples 1 to 25 and 27 to 35 are found to have a particle-induced rough structure on their working surface, indicating that they can be used as surface-roughened sheets. These are found based on the scanning electron micrographs of working surfaces of the sheets in the figures (scanning electron micrographs "a" in the figures) and on the scanning electron micrographs of cross sections of the sheets (scanning electron micrographs "b", "c", and "d" in the figures).

These sheets could be produced without evaporational removal of volatile components such as solvents from the particle-containing photopolymerizable compositions.

The data also demonstrate that rough structures can be imparted to surfaces of articles even having a low elastic modulus, to give surface-roughened sheets.

In addition, the data demonstrate that surface-roughened sheets can be produced regardless of the gel fraction and 100-percent modulus (hardness) of the monomer-absorptive layer.

The scanning electron micrographs in cross sections of the sheets according to Examples demonstrate that the particles in the particle-containing photo-polymerized/cured layer or particle-containing autopolymerized/cured layer and the immiscible material in the immiscible material-containing photo-polymerized/cured layer are unevenly distributed (enriched) in a layer surface or the vicinity thereof. In contrast, data of the sheets according to Comparative Examples demonstrate that the particles in the particle-containing photo-polymerized/cured layer or particle-containing autopolymerized/cured layer and the immiscible material in the immiscible material-containing photo-polymerized/cured layer are not unevenly distributed (enriched) but uniformly dispersed in the layer.

Data in Table 2 demonstrate that the particles and immiscible material are unevenly distributed (enriched) in the layer in the sheets according to Examples, because the particle-enriched region and immiscible material-enriched region each have a smaller thickness than that of the particle-containing photo-polymerized/cured layer, of the immiscible material-containing photo-polymerized/cured layer, or of the particle-containing autopolymerized/cured layer. In contrast, the data also demonstrate that the particles and immiscible material are uniformly dispersed in the layer in the sheets according to Comparative Examples, because the thicknesses of the particle-containing photopolymerized/cured layer and immiscible material-containing photo-polymerized/cured layer are identical to the thicknesses of the particle-enriched region and immiscible material-enriched region, respectively.

(Evaluation 3)

The sheets according to Example 26 and Comparative Example 7 were evaluated on wetness, appearance, total light transmission, bond strength, holding power (shear adhesion), and infrared analysis of working surface.

The wetness was evaluated by bringing a droplet of water or methylene chloride into contact with a working surface of a sample sheet, and how the contact angle varied with time was measured. The data in contact angle as varying with time are shown in Table 3.

The appearance was evaluated by visual observation of a working sheet of a sample sheet. The results are shown in "Appearance" in Table 4.

The total light transmission was measured with a haze meter ("HM-150" supplied by Murakami Color Research Laboratory) according to JIS K 7361. The results are shown in "Total light transmission" in Table 4.

The bond strength of a working surface of a sample sheet was measured as a 180-degree peel strength by cutting the sheet into a piece 20 mm wide, laminating the piece to an adherend (a glass plate or a stainless steel plate) using a rubber roller of 2-kg load, and measuring the 180-degree peel strength according to the method for bond strength test specified in JIS Z 0237 using a tensile tester at a peel rate of 300 mm/minute and a peel angle of 180 degrees. The tensile tester herein was TG-1KN supplied by Minebea Co., Ltd. The results are shown in "Bond strength" in Table 4. The adherend, from which the sheet had been removed, was observed about whether or not the adherend was stained. When the adherend was stained, there is indicated as "stained" under the measured bond strength in Table 4.

The holding power of a working surface of a sample sheet was measured in the following manner: the sheet was laminated to a bakelite plate in a contact area of 10 mm wide and 20 mm long, left stand for 24 hours, further left stand at 40°C for 30 minutes, the bakelite plate was suspended, a uniform load of 500 g was applied to the free end of the sheet, and the displacement of the sheet at 40°C after one hour was measured. The results are shown in "Holding power" in Table 4. When the sample sheet fell down from the bakelite plate, it was evaluated as "fall".

[Table 3]

TABLE 3

| | Droplet | | | | | | | | | | | |
| --- | --- | --- | --- | --- | --- | --- | --- | --- | --- | --- | --- | --- |
| | Water | | | | | | Methylene chloride | | | | | |
| | Elapsed time [s] | | | | | | Elapsed time [s] | | | | | |
| | 0.1 | 20 | 40 | 60 | 80 | 100 | 0.1 | 20 | 40 | 60 | 80 | 100 |
| Example 26 | 103 | 101 | 99 | 96 | 95 | 95 | 80 | 65 | 59 | 54 | 50 | 47 |
| Com. Ex. 7 | 108 | 109 | 108 | 107 | 107 | 106 | 65 | 64 | 64 | 64 | 64 | 63 |

In Table 3, the data are contact angles [° (degree)]. The "elapsed time" means an elapsed time from the time when the droplet was brought into contact with the sheet.

Data in Table 3 demonstrate that the sheet according to Example 26 acts to be more wettable with a liquid with elapsed time after contact with the liquid. This indicates that the sheet is superior in wetness and adhesion with respect to droplets and is effective, for example, as an article to be coated typically with a water-based or oilbased coating material.

[Table 4]

TABLE 4

| | Appearance | Total light transmission [%} | Bond strength [N/cm$^2$] | | Holding power [mm] |
| --- | --- | --- | --- | --- | --- |
| | | | Glass plate | Stainless steel plate | |
| Example 26 | transparent | 88.1 | 10 | 3 | 3 |
| Com. Ex. 7 | cloudy | 86.9 | 18 stained | 15 stained | fall |

The sheet according to Example 26 has a transparent appearance, although containing an immiscible material, and can be particularly effectively employed in uses where transparency is desired. The sheet was also free from stain even when it was laminated to the adherend and then removed therefrom. Additionally, it was superior in holding power.

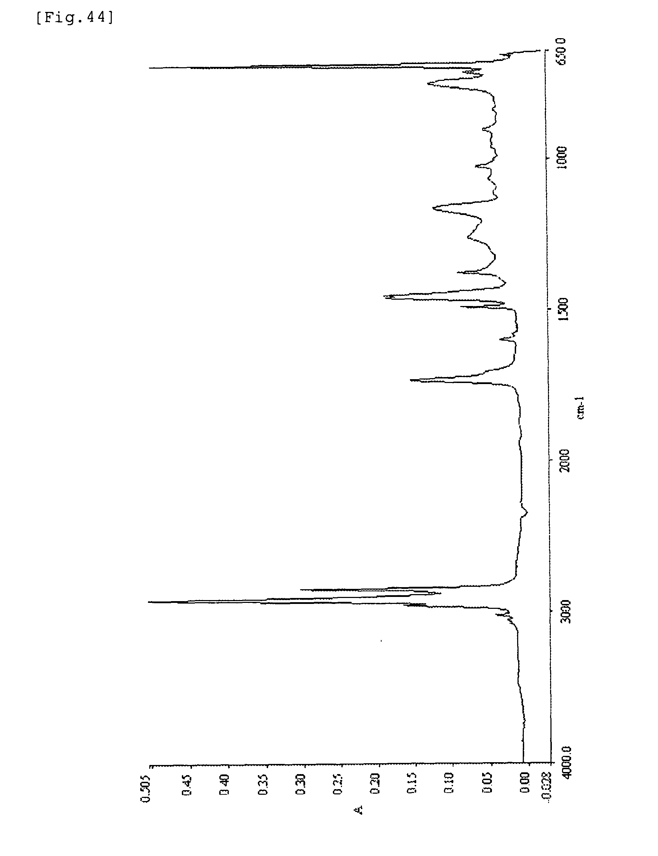

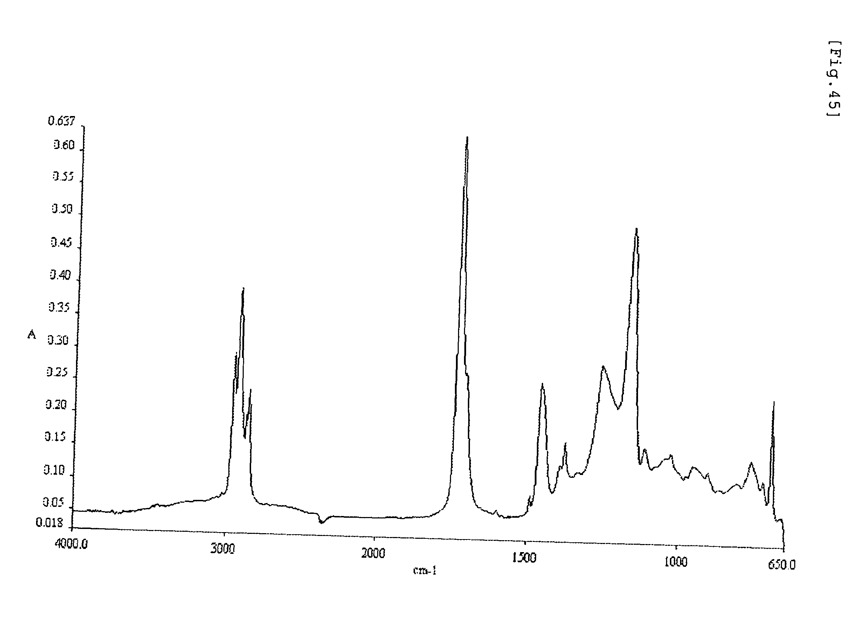

IR charts (Fig. 44 and Fig. 45) of working surfaces of the sheets according to Example 26 and Comparative Example 7, respectively, demonstrate that the sheet according to Example 26 showed peaks of components derived from SEBS as the immiscible material (a peak derived from a hydrocarbon component at around 2900 cm$^{-1}$ and a peak derived from a styrene component at around 700 cm$^{-1}$) larger than those of the sheet according to Comparative Example 7. This indicates that the sheet according to Example 26 has a greater concentration of the immiscible material on its working surface than that on the working surface of the sheet according to Comparative Example 7.

Industrial Applicability

Polymer articles herein can exhibit a variety of properties and thereby can be used in a wide variety of applications, by regulating parameters such as the type and amount of the immiscible material, and the polymer type and thickness of the polymer layer containing an unevenly distributed immiscible material. By way of example, surface-roughened sheets composed of polymer articles which are produced by using particles as the immiscible material can be employed typically in uses where graphical design functions are desired, uses where light scattering properties are desired, and uses where antiblocking properties are desired.

**Claims**

1. A polymer article having a multilayer structure comprising a polymer layer and a monomer-absorptive layer that is arranged on the polymer layer and is capable of absorbing at least one of monomer components constituting the polymer, wherein the polymer layer is a polymer layer containing an unevenly distributed immiscible material that is immiscible with the polymer and is enriched at an interface, or in the vicinity thereof, opposite to the other interface with the monomer-absorptive layer.

2. The polymer article according to claim 1, further comprising a cover film arranged on the polymer layer on a side opposite to the monomer-absorptive layer.

3. The polymer article according to one of claims 1 and 2, wherein the vicinity of the interface opposite to the monomer-absorptive layer is a region ranging from the interface opposite to the other interface with the monomer-absorptive layer in a thickness direction to 50% or less of the total thickness of the polymer layer.

4. The polymer article according to any one of claims 1 to 3, wherein the monomer-absorptive layer is a monomer-absorptive polymer layer comprising a polymer.

5. The polymer article according to claim 4, wherein the polymer constituting the monomer-absorptive polymer layer and the polymer constituting the polymer layer containing the unevenly distributed immiscible material comprise at least one monomer component in common.

6. The polymer article according to any one of claims 1 to 5, wherein the immiscible material is in the form of particles.

7. The polymer article according to any one of claims 1 to 6, wherein the immiscible material is a polymer.

8. The polymer article according to any one of claims 1 to 7, wherein the polymer constituting the polymer layer containing the unevenly distributed immiscible material is an acrylic polymer.

9. The polymer article according to any one of claims 1 to 8, wherein the polymer layer containing the unevenly distributed immiscible material is a pressure-sensitive adhesive layer containing an unevenly distributed immiscible material.

10. The polymer article according to any one of claims 1 to 9, as a tape or sheet.

11. The polymer article according to any one of claim 1 and claims 3 to 10, wherein the polymer article contains particles as the immiscible material and has asperities caused by the particles on its surface.

12. A process for the production of polymer articles, the process comprising the steps of: forming a layer of an immiscible material-containing polymerizable composition on at least one side of a monomer-absorptive layer, wherein the monomer-absorptive layer is capable of absorbing a polymerizable monomer, and the immiscible material-containing polymerizable composition contains at least the polymerizable monomer and an immiscible material that is immiscible with a polymer as a polymerization product of the polymerizable monomer; whereby allowing the immiscible material to migrate in the immiscible material-containing polymerizable composition layer, to yield a polymerizable composition layer containing the immiscible material that is unevenly distributed in the layer and is enriched at an interface, or in the vicinity thereof, opposite to the other interface with the monomer-absorptive layer; and carrying out polymerization of the polymerizable composition layer containing the unevenly distributed immiscible material to form a polymer layer containing the immiscible material that is unevenly distributed in the layer and is enriched at an interface, or in the vicinity thereof, opposite to the other interface with the monomer-absorptive layer, to thereby yield a polymer article having a multilayer structure including the monomer-absorptive layer and the polymer layer containing the unevenly distributed immiscible material.

13. A process for the production of polymer articles, the process comprising the steps of: preparing a multilayer assembly including a monomer-absorptive sheet, a layer of an immiscible material-containing polymerizable composition arranged on a monomer-absorptive surface of the monomer-absorptive sheet, and a cover film arranged on the immiscible material-containing polymerizable composition layer, wherein the monomer absorptive layer is capable of absorbing a polymerizable monomer, and the immiscible material-containing polymerizable composition contains at least the polymerizable monomer and an immiscible material that is immiscible with a polymer as a polymerization product of the polymerizable monomer; allowing the immiscible material to migrate in the immiscible material-containing polymerizable composition layer, to yield a polymerizable composition layer containing the immiscible material that is unevenly distributed in the layer and is enriched at an interface, or in the vicinity thereof, opposite to the other interface with the monomer-absorptive layer; and carrying out polymerization of the polymerizable composition layer containing the unevenly distributed immiscible material to form a polymer layer containing the immiscible material that is unevenly distributed in the layer and is enriched at an interface, or in the vicinity thereof, opposite to the other interface with the monomer-absorptive layer to thereby yield a polymer article having a multilayer structure including the monomer-absorptive layer and the polymer layer containing the unevenly distributed immiscible material.

14. The process for the production of polymer articles, according to claim 13, wherein the cover film is releasable.

**15.** The process for the production of polymer articles, according to any one of claims 12 to 14, wherein the monomer-absorptive layer is a monomer-absorptive polymer layer comprising a polymer.

**16.** The process for the production of polymer articles, according to claim 15, wherein the polymer constituting the monomer-absorptive polymer layer and the polymer constituting the polymer layer containing the unevenly distributed immiscible material comprise at least one monomer component in common.

**17.** The process for the production of polymer articles, according to any one of claims 12 to 16, wherein the polymerization of the polymerizable composition layer containing the unevenly distributed immiscible material is carried out through light irradiation.

**18.** The process for the production of polymer articles, according to any one of claims 12 to 17, wherein the immiscible material is in the form of particles.

**19.** The process for the production of polymer articles, according to any one of claims 12 to 18, wherein the immiscible material is a polymer.

**20.** The process for the production of polymer articles, according to any one of claims 12 to 19, wherein an acrylic monomer is used as the polymerizable monomer.

**21.** The process for the production of polymer articles, according to any one of claims 12 to 20, wherein the polymer layer containing the unevenly distributed immiscible material is a pressure-sensitive adhesive layer containing an unevenly distributed immiscible material.

**22.** The process for the production of polymer articles, according to any one of claims 12 to 21, wherein the product polymer article is in the form of a tape or sheet.

**23.** The process for the production of polymer articles, according to any one of claims 12 to 22, further comprising using particles as the immiscible material and allowing the particles to cause surface roughness of the polymer article.

[Fig.1]

1 a

[Fig.2]

2 a

[Fig.3]

3 a

[Fig.4]

4 a

[Fig.5]

5 a

[Fig.6]

6 a

[Fig.7]

7 a

[Fig.8]

8 a

[Fig.9]

9 a

9 b

× 500

Fine-particle-containing layer

Monomer-absorptive layer

9 c

× 2000

[Fig.10]

1 0 b

1 0 c

[Fig.11]

1 1 b

1 1 c

[Fig.12]

12b

12c

[Fig.13]

13b

13c

[Fig.14]

１４ｂ

１４ｃ

[Fig.15]

15 a

15 b

Fine-particle-containing layer

Monomer-absorptive layer

15 c

[Fig.16]

16 a

16 b

16 c

[Fig.17]

17b

17c

×500

Fine-particle-containing layer

Monomer-absorptive layer

×2000

[Fig.18]

1 8 a

1 8 b

× 500

Fine-particle-containing layer

Monomer-absorptive layer

1 8 c

× 2000

[Fig.19]

19 a

19 b

× 500

Fine-particle-containing layer

Monomer-absorptive layer

19 c

× 2000

[Fig.20]

20a

20b

Fine-particle-containing layer

×500

Monomer-absorptive layer

20c

×2000

Segregated layer

20d

×10000

Segregated layer

[Fig.21]

2 1 a

2 1 b

2 1 c

[Fig.22]

22 a

22 b

× 500

Fine-particle-containing layer

Monomer-absorptive layer

22 c

× 2000

[Fig.23]

2 3 a

2 3 b

×500

Fine-particle-containing layer

Monomer-absorptive layer

2 3 c

×2000

[Fig.24]

2 4 a

2 4 b

× 500

Fine-particle-containing layer

Monomer-absorptive layer

2 4 c

× 2000

[Fig.25]

2 5 a

2 5 b

× 500

Fine-particle-containing layer

Monomer-absorptive layer

2 5 c

× 2000

[Fig.26]

2 6 a

2 6 b

×500

Coating layer

Monomer-absorptive layer

2 6 c

×2000

[fig.27]

27 c

Particle-containing layer

[Fig.28]

28 c

Particle-containing layer

[fig.29]

29 c

Particle-containing layer

[Fig.30]

30 c

Particle-containing layer

[Fig.31]

3 1 c

Particle-containing layer

[Fig.32]

3 2 c

Particle-containing layer

[Fig.33]

3 3 c

[Fig.34]

3 4 c

[Fig.35]

3 5 c

Particle-containing layer

[Fig.36]

3 6 a

[Fig.37]

3 7 a

[Fig.38]

3 8 a

3 8 b

×500

Fine-particle-containing layer

PET base

3 8 c

×2000

3 8 d

×10000

[Fig.39]

3 9 a

3 9 b

×500

Fine-particle-containing layer

PET base

3 9 c

×2000

[Fig.40]

40a

40b

×500

Fine-particle-containing layer

PET base

40c

×2000

[Fig.41]

4 1 a

4 1 b

4 1 c

[Fig.42]

4 2 a

4 2 b

Coating layer

PET base

×500

4 2 c

×2000

[Fig.43]

[Fig.44]

[Fig.45]

| INTERNATIONAL SEARCH REPORT | International application No. |
|---|---|
| | PCT/JP2007/061594 |

A. CLASSIFICATION OF SUBJECT MATTER
*B32B27/00*(2006.01)i, *B32B27/30*(2006.01)i, *C09J7/02*(2006.01)i

According to International Patent Classification (IPC) or to both national classification and IPC

B. FIELDS SEARCHED

Minimum documentation searched (classification system followed by classification symbols)
B32B1/00-43/00, C09J7/00-7/04

Documentation searched other than minimum documentation to the extent that such documents are included in the fields searched

| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-290009 A (Nitto Denko Corp.),<br>19 October, 2001 (19.10.01), | 1-6,8-18,<br>20-23 |
| Y | Claims 1 to 3; Par. Nos. [0021] to [0023],<br>[0033], [0040]; examples<br>(Family: none) | 2,7,13,14,19 |
| Y | JP 2001-273817 A (Toyobo Co., Ltd.),<br>05 October, 2001 (05.10.01),<br>Par. Nos. [0027], [0055]<br>& US 2001/037935 A1     & EP 1147882 A2 | 2,7,13,14,19 |
| Y | JP 2006-137036 A (Nitto Denko Corp.),<br>01 June, 2006 (01.06.06),<br>Par. No. [0040]<br>(Family: none) | 2,13,14 |

☐ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 September, 2007 (03.09.07) | 18 September, 2007 (18.09.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001091707 A
- JP 2000275404 A
- JP 2003248101 A
- JP HEI09504325 A
- JP HEI08113768 A